# EUROPEAN PATENT APPLICATION

(11) **EP 4 783 502 A1**
(43) Date of publication of application: **29.07.2026**
(21) Application number: 23952736.9
(22) Date of filing: 22.09.2023
(51) Int. Cl.: H04L 1/1867, H04L 5/00

(54) **RETRANSMISSION METHODS AND APPARATUSES, AND DEVICE, MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: GAO, Ning, Dongguan, Guangdong 523860 (CN); LUO, Chaoming, Dongguan, Guangdong 523860 (CN); LU, Liuming, Dongguan, Guangdong 523860 (CN); LI, Yapu, Dongguan, Guangdong 523860 (CN)
(74) Representative: Novagraaf Technologies
(86) International application number: PCT/CN2023/120809
(87) International publication number: WO 2025/060084

(57) **Abstract**

The present application belongs to the field of wireless communications. Disclosed are retransmission methods and apparatuses, and a device, a medium and a program product. A method is executed by means of a first station, and the method comprises: sending a retransmission parameter, wherein the retransmission parameter is a parameter related to retransmission by a first station. In the method, the retransmission parameter is sent by means of the first station, wherein the retransmission parameter is a parameter related to retransmission by the first station. After receiving the retransmission parameter, a second station serving as a receiving station can determine, on the basis of the retransmission parameter, whether the first station has performed retransmission, and can acquire information of a frame related to retransmission.

## Description

### TECHNICAL FIELD

The present disclosure relates to the field of wireless communications, and in particular, to retransmission methods and apparatuses, a device, a medium, and a program product.

### RELATED ART

Acknowledgement and retransmission mechanisms are specified in relevant standards of wireless communications. In the acknowledgement and retransmission mechanisms, the receiving station replies with an acknowledgement (Ack) frame or a block acknowledgement (BA) frame subsequent to successfully receiving a correct frame, and the transmitting station determines whether retransmission is necessary based on whether the Ack frame is received within a specified time period or based on the content of the received BA frame.
However, the receiving station cannot determine whether the transmitting station performs retransmission.

### SUMMARY

The present disclosure provides retransmission methods and apparatuses, a device, a medium, and a program product. The technical solutions at least include the following.

According to an aspect of the embodiments of the present disclosure, a retransmission method is provided. The method is performed by a first station, and the method includes: transmitting a retransmission parameter; wherein the retransmission parameter is a parameter related to a retransmission by the first station.

According to another aspect of the embodiments of the present disclosure, a retransmission method is provided. The method is performed by a second station, and the method includes: receiving a retransmission parameter from a first station; wherein the retransmission parameter is a parameter related to a retransmission by the first station.

According to another aspect of the embodiments of the present disclosure, a first retransmission apparatus is provided. The apparatus includes: a transmitting module, configured to transmit a retransmission parameter; wherein the retransmission parameter is a parameter related to a retransmission by the first retransmission apparatus.

According to another aspect of the embodiments of the present disclosure, a second retransmission apparatus is provided. The apparatus includes: a receiving module, configured to receive a retransmission parameter from a first retransmission apparatus; wherein the retransmission parameter is a parameter related to a retransmission by the first retransmission apparatus.

According to another aspect of the embodiments of the present disclosure, a first station is provided. The first station includes: a processor; a transceiver connected to the processor; and a memory configured to store an instruction executable by the processor; wherein the processor is configured to load and execute the instruction to perform the retransmission methods as described in the above aspects.

According to another aspect of the embodiments of the present disclosure, a second station is provided. The second station includes: a processor; a transceiver connected to the processor; and a memory configured to store an instruction executable by the processor; wherein the processor is configured to load and execute the instruction to perform the retransmission methods as described in the above aspects.

According to another aspect of the embodiments of the present disclosure, a computer-readable storage medium is provided. The computer-readable storage medium stores at least one program. The at least one program, when loaded and executed by a processor, causes the processor to perform the retransmission methods as described in the above aspects.

According to another aspect of the embodiments of the present disclosure, a computer program product or a computer program is provided. The computer program product or the computer program includes a computer instruction stored in a computer-readable storage medium, wherein the computer instruction, when loaded and executed by a processor, causes the processor to perform the retransmission methods as described in the above aspects.

The technical solutions according to the embodiments of the present disclosure achieve the following beneficial effects.

The first station transmits the retransmission parameter, wherein the parameter is a parameter related to the retransmission by the first station. Subsequent to receiving the retransmission parameter, the second station, as the receiving station, is capable of determining whether the first station performs retransmission based on the parameter, and acquiring information about a frame related to the retransmission.

### BRIEF DESCRIPTION OF DRAWINGS

To describe the technical solutions in embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other accompanying drawings from these accompanying drawings without creative efforts.
FIG. 1 illustrates a schematic diagram of a communication system according to some embodiments of the present disclosure;
FIG. 2 illustrates a schematic diagram of an acknowledgement mechanism in a related art;
FIG. 3 illustrates a schematic diagram of a clear-to-send (CTS) frame format in a related art;
FIG. 4 illustrates a schematic diagram of a format of an A-Control field in a related art;
FIG. 5 illustrates a schematic diagram of a format of a control subfield in a related art;
FIG. 6 illustrates a schematic diagram of a scenario where a receiving station is subject to interference according to some embodiments of the present disclosure;
FIG. 7 illustrates a schematic diagram of a frame interaction process according to some embodiments of the present disclosure;
FIG. 8 illustrates a flowchart of a retransmission method according to some embodiments of the present disclosure;
FIG. 9 illustrates a schematic diagram of a High Reliable Link (HRL) control type format of an A-Control field according to some embodiments of the present disclosure;
FIG. 10 illustrates a schematic diagram of an HRL control type format of an A-Control field according to some embodiments of the present disclosure;
FIG. 11 illustrates a schematic diagram of an HRL control type format of an A-Control field according to some embodiments of the present disclosure;
FIG. 12 illustrates a schematic diagram of a format of an ultra-high reliability (UHR) setup request frame according to some embodiments of the present disclosure;
FIG. 13 illustrates a schematic diagram of a format of an UHR setup response frame according to some embodiments of the present disclosure;
FIG. 14 illustrates a flowchart of a retransmission method according to some embodiments of the present disclosure;
FIG. 15 illustrates a schematic diagram of a retransmission method according to some embodiments of the present disclosure;
FIG. 16 illustrates a schematic diagram of a retransmission method according to some embodiments of the present disclosure;
FIG. 17 illustrates a schematic diagram of a retransmission method according to some embodiments of the present disclosure;
FIG. 18 illustrates a flowchart of a retransmission method according to some embodiments of the present disclosure;
FIG. 19 illustrates a schematic diagram of a retransmission method according to some embodiments of the present disclosure;
FIG. 20 illustrates a schematic diagram of a retransmission method according to some embodiments of the present disclosure;
FIG. 21 illustrates a schematic diagram of a control frame format according to some embodiments of the present disclosure;
FIG. 22 shows a schematic diagram of a control frame format according to some embodiments of the present disclosure;
FIG. 23 illustrates a schematic diagram of a format of a user signaling field according to some embodiments of the present disclosure;
FIG. 24 illustrates a schematic diagram of a format of user signaling field according to some embodiments of the present disclosure;
FIG. 25 illustrates a flowchart of a retransmission method according to some embodiments of the present disclosure;
FIG. 26 illustrates a flowchart of a retransmission method according to some embodiments of the present disclosure;
FIG. 27 illustrates a flowchart of a retransmission method according to some embodiments of the present disclosure;
FIG. 28 illustrates a block diagram of a first retransmission apparatus according to some embodiments of the present disclosure;
FIG. 29 illustrates a block diagram of a second retransmission apparatus according to some embodiments of the present disclosure; and
FIG. 30 illustrates a schematic structural diagram of a first station or a second station according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Reference is made in detail to the embodiments, examples of which are illustrated in the accompanying drawings. When the following description refers to the accompanying drawings, same numbers in different accompanying drawings represent same or similar elements unless otherwise indicated. The embodiments described in the following embodiments do not represent all embodiments consistent with the present disclosure. Rather, these embodiments are merely examples of apparatus and methods consistent with some aspects of the present disclosure.

Terms used in the present disclosure are for the purpose of describing particular embodiments only and are not intended to be limiting to the present disclosure. As used in the present disclosure and the appended claims, the singular forms "a," "an," and "the" are intended to include the plural forms as well, unless the context clearly indicates otherwise. It should also be understood that the term "and/or" used herein refers to and encompasses any or all possible combinations of one or more associated listed items.

It should be understood that although the terms "first," "second," "third," or the like may be used herein to describe various information, such information should not be limited to these terms. These terms are only used to distinguish one type of information from another. For example, first information may be referred to as second information, and similarly, second information may be referred to as first information, without departing from the scope of the present disclosure. The words "if" and "when," as used herein, may be interpreted as "in a case that", "in a case where", or "in response to determining that", depending on the context.

The technical solutions of the embodiments of the present disclosure are applicable to various communication systems, such as a global system for mobile communication (GSM) system, a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a wireless fidelity (Wi-Fi) system, a 5^{th} generation (5G) system, a cellular Internet of Things (IoT) system, a cellular passive IoT system, or may also be applied to an evolved system of the 5G NR system, or may also be applied to a 6G system and a subsequent evolved system of 6G.

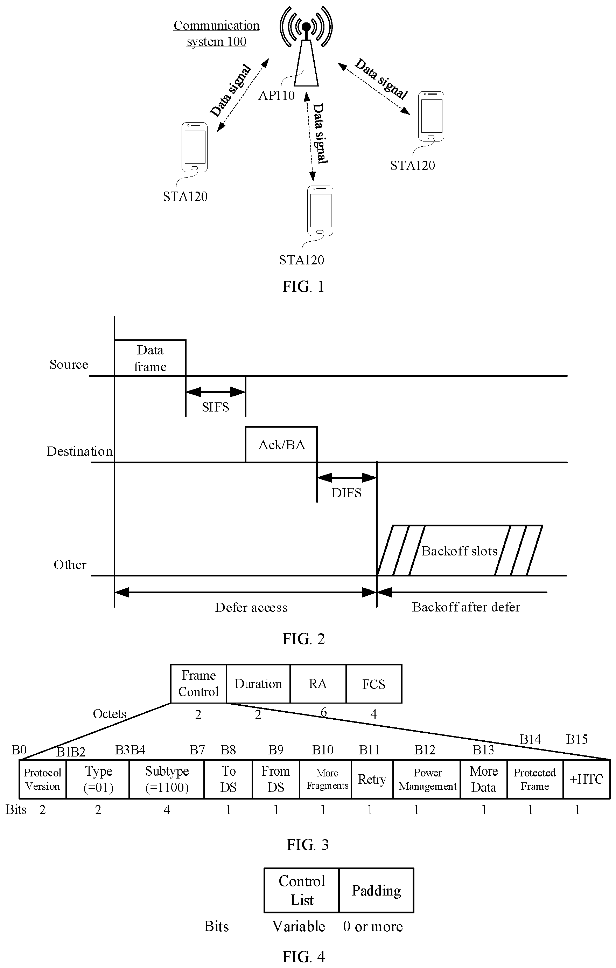

FIG. 1 illustrates a schematic diagram of a communication system 100 according to some embodiments of the present disclosure. The communication system 100 includes a terminal device and a terminal device, or a terminal device and a network device, or an access point (AP) and a station (STA), which are not limited in the present disclosure. In the present disclosure, the communication system 100 is illustrated by taking an example where an AP 110 and an STA 120 are included.

In some scenarios, the AP is also referred to as an AP STA. That is, in a sense, the AP is also a type of STA. In some scenarios, the STA is also referred to as a non-AP STA.

In some embodiments, STAs includes AP STAs and non-AP STAs.

The communication within the communication system 100 involves communication between an AP and a non-AP STA, communication between non-AP STAs, or communication between an STA and a peer STA. The peer STA refers to a device that is in peer-to-peer communication with the STA. For example, the peer STA is an AP or a non-AP STA.

The AP acts as a bridge connecting a wired network and a wireless network, primarily serving to connect various wireless network clients together and then connect the wireless network into the Ethernet. An AP device is a terminal device (such as a mobile phone) equipped with a Wi-Fi chip or a network device (such as a router).

It should be understood that the function of the STA in the communication system 100 is dynamic. For example, in some scenarios, the mobile phone serves as a non-AP STA when the mobile phone is connected to a router, and the mobile phone serves as an AP when the mobile phone acts as a hotspot for another mobile phone.

The AP and the non-AP STA may be devices applied in the Internet of vehicles, nodes, sensors or the like in the IoT, smart cameras, smart remote controls, smart water meters and electricity meters in smart homes, sensors in smart cities, or the like.

In some embodiments, the non-AP STA supports, but is not limited to, the 802.11be standard. The non-AP STA may also support various current and future WLAN standards of the 802.11 series, such as 802.11ax, 802.11ac, 802.11n, 802.11g, 802.11b, and 802.11a.

In some embodiments, the AP may be a device that supports the 802.11be standard. The AP may also be a device that supports various current and future WLAN standards of the 802.11 series, such as 802.11ax, 802.11ac, 802.11n, 802.11g, 802.11b, and 802.11a.

The AP is a device deployed in a WLAN to provide a wireless communication function to the STA. The STA may include: a user equipment (UE), an access terminal, a subscriber unit, a user station, a mobile station, a mobile console, a remote station, a remote terminal, a mobile device, a wireless communication device, a user agent, a user apparatus, or the like. In some embodiments, the STA may be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, or a wearable device, which is not limited in the embodiments of the present disclosure.

In the embodiments of the present disclosure, the STA may be a device that supports WLAN/Wi-Fi, such as a mobile phone, a Pad, a computer, a virtual reality (VR) device, an augmented reality (AR) device, a wireless device in industrial control, a set-top box, a wireless device in self-driving, an in-vehicle communication device, a wireless device in remote medical application, a wireless device in smart grids, a wireless device in transportation safety, a wireless device in smart cities, a wireless device in smart homes, a wireless communication chip, or the like.

In the embodiments of the present disclosure, both the STA and the AP support the Institute of Electrical and Electronics Engineers (IEEE) 802.11 standard, but are not limited to the IEEE 802.11 standard.

Next, the acknowledgement and retransmission mechanism is introduced.

It is specified in the relevant standards that the following frames require immediate acknowledgement:
Individually addressed Management frames other than action no acknowledge (Action No Ack) frames;
Individually addressed non-Quality of Service (QoS) Data frames;
Individually addressed non-QoS data frames with Normal Ack or Implicit block Ack request (BAR) acknowledgement mechanism;
Block Ack frames not sent in immediate response to aggregated medium access control (MAC) protocol data unit (A-MPDU);
Block Ack Request frames (BlockAckReq frames); and
Power Save Poll (PS-Poll) frames, which can be acknowledged by generating a data frame.

When the STA receives a frame with a To distributed system (To-DS) subfield of 1 from the AP that requires immediate acknowledgement, the STA must transmit an Ack frame or a block acknowledgement (BA) frame after short interframe space (SIFS), regardless of whether the STA is in an idle state or a working state.

FIG. 2 illustrates a schematic diagram of an acknowledgement mechanism in the related art. Taking an example where a frame requiring immediate acknowledgement is a data frame, the STA receives the data frame and transmits an Ack frame or a BA frame after SIFS time. In addition, after the Ack frame or BA frame is transmitted and distributed interframe space (DIFS) time elapses, in a case where the STA invokes a backoff process, the duration of the backoff process is a backoff slot.

The period from the start time of receiving the data frame to the end time of the DIFS is referred to as a defer access process, which is followed by a backoff after defer process, also referred to as a backoff process.

Subsequent to transmitting an MAC protocol data unit (MPDU) that requires a response with an Ack frame or a BA frame, the STA should wait for an AckTimeout interval starting from a PHYTXEND.confirm primitive. The value of the AckTimeout interval is one SIFS plus one slot plus one RxPHYStartDelay. If the PHY-RXSTART.indication primitive does not appear during the AckTimeout interval, the STA determines that the MPDU transmission has failed, and the STA will invoke its backoff process when the AckTimeout interval expires.

If the PHY-RXSTART.indication primitive appears during the AckTimeout interval, the STA will wait for a corresponding PHY-RXEND.indication primitive to determine whether the MPDU has been successfully transmitted. If the STA identified that a valid Ack frame addressed to the STA corresponds to the PHY-RXEND.indication primitive, this identification is interpreted as a successful acknowledgement.

If the STA fails to identify a valid Ack frame addressed to the SAT, this situation should be interpreted as that the MPDU transmission fails. In this case, the STA should invoke its backoff process at the PHY-RXEND.indication primitive.

For a distributed coordination function (DCF), in a case of receiving a corrupted Ack frame or BA frame, the backoff process results in the use of an extended interframe space (EIFS), instead of a DIFS or an arbitration interframe space (AIFS), after the AckTimeout interval and the corrupted Ack frame or BA frame received subsequently.

For an enhanced distributed channel access function (EDCAF), in a case where the transmission of the MPDU in a non-initial physical layer protocol data unit (PPDU) of a transmission opportunity (TXOP) holder fails, the STA can perform point coordination function interframe space (PIFS) recovery or waits for a transmit network allocation vector (TXNAV) timer to expire and invokes the backoff process.

Next, the High-Throughput Control (HTC) field is introduced.

Table 1 illustrates the format of the HTC field in the related art. As illustrated in Table 1, the A-Control field is an HTC field when both B0 and B1 are 1. The HTC field may be carried in a QoS data frame, a QoS null data frame, and a management frame, and presence of the HTC field is controlled by the +HTC subfield in the Frame Control field.

**Table 1**

| Variant | B0 | B1 | B2-B29 | B30 | B31 |
|---|---|---|---|---|---|
| High-Throughput | 0 | Middle part of HT | | Access Category | Reverse |
| (HT) | | control field | | Constraint (AC Constraint) | Direction Grant (RDG)/More PPDU |
| Very High Throughput (VHT) | 1 | 0 | Middle part of VHT control field | AC Constraint | RDG/More PPDU |
| High Efficiency (HE) | 1 | 1 | A-Control | | |

Next, the CTS frame is introduced.

FIG. 3 illustrates a schematic diagram of a CTS frame format in the related art. The CTS frame format includes at least one of: a Frame Control field, a Duration field, a Receiver Address (RA) field, or a Frame Check Sequence (FCS) field.

The Frame Control field occupies two octets, the Duration field occupies two octets, the RA field occupies six octets, and the FCS field occupies four octets.

The Frame Control field is used to indicate information, such as the type, of the MAC frame; the Duration field is used to indicate the duration of the TXOP to be protected; the RA field is used to indicate the receiving address; and the FCS field is used to indicate a frame check sequence.

With respect to the Frame Control field, the format of the Frame Control field includes at least one of: a Protocol Version (PV) subfield, a Type subfield, a Subtype subfield, a To DS subfield, a From DS subfield, a More Fragments subfield, a Retry subfield, a Power Management subfield, a More Data subfield, a Protected Frame subfield, or a +HTC subfield. In the embodiments of the present disclosure, a subfield is referred to as a field for short.

The Protocol Version subfield occupies a total of two bits from B0 to B1, the Type subfield occupies a total of two bits from B2 to B3, the Subtype subfield occupies a total of four bits from B4 to B7, the To DS subfield occupies a total of one bit at B8, the From DS subfield occupies a total of one bit at B9, the More Fragments subfield occupies a total of one bit at B10, the Retry subfield occupies a total of one bit at B11, the Power Management subfield occupies a total of one bit at B12, the More Data subfield occupies a total of one bit at B13, the Protected Frame subfield occupies a total of one bit at B14, and the +HTC subfield occupies a total of one bit at B15.

The Protocol Version subfield is used to indicate the version of the MAC frame. For example, the Protocol Version subfield takes a value of 0 to indicate that the MAC frame is a basic version, and takes a value of 1 to indicate that the MAC frame is a PV1 MAC frame version.

The Type subfield is used to indicate the frame type. For example, the Type subfield takes a value of 1 (01 in binary) to indicate that the frame type is a control frame.

The Subtype subfield is used to indicate the frame subtype. For example, the Subtype subfield takes a value of 12 (1100 in binary) to indicate that the frame subtype is a CTS frame.

The To DS subfield and the From DS subfield are used to indicate the transmission direction of the frame.

The More Fragments subfield is used to indicate whether a fragment is a non-last fragment after segmentation of the same MAC service data unit (MSDU) or MPDU. For example, the More Fragments subfield takes a value of 1 to indicate "Yes", and takes a value of 0 to indicate "No".

The Retry subfield is used to indicate whether a frame is a retransmission frame. For example, the Retry subfield takes a value of 1 to indicate "Yes", and takes a value of 0 to indicate "No". In a CTS frame, the value of the Retry subfield is always 0, indicating that the CTS frame is not a retransmission frame.

The Power Management subfield is used to indicate a power management mode.

The More Data subfield is used by the AP to indicate to the STA in a power-saving mode whether more cached data are waiting to be transmitted to the STA. For example, the More Data subfield takes a value of 1 to indicates "Yes", and takes a value of 0 to indicate "No".

The Protected Frame subfield is used to indicate whether a frame body is encrypted. For example, the Protected Frame subfield takes a value of 1 to indicate "Yes", and takes a value of 0 to indicate "No". In a CTS frame, the value of the Protected Frame subfield is always 0, indicating that the frame body is not encrypted.

The +HTC subfield is used to indicate whether the HTC field is included in the frame header. For example, the +HTC subfield takes a value of 1 to indicate "Yes", and takes a value of 0 to indicate "No". In a CTS frame, the value of the +HTC subfield is always 0, indicating that the HTC field is not included.

FIG. 4 illustrates a schematic diagram of a format of an A-Control field in the related art. The format of the A-Control field includes at least one of: a Control List field or a Padding field.

The Control List field occupies a variable number of bits, and the Padding field occupies 0 or more fields.

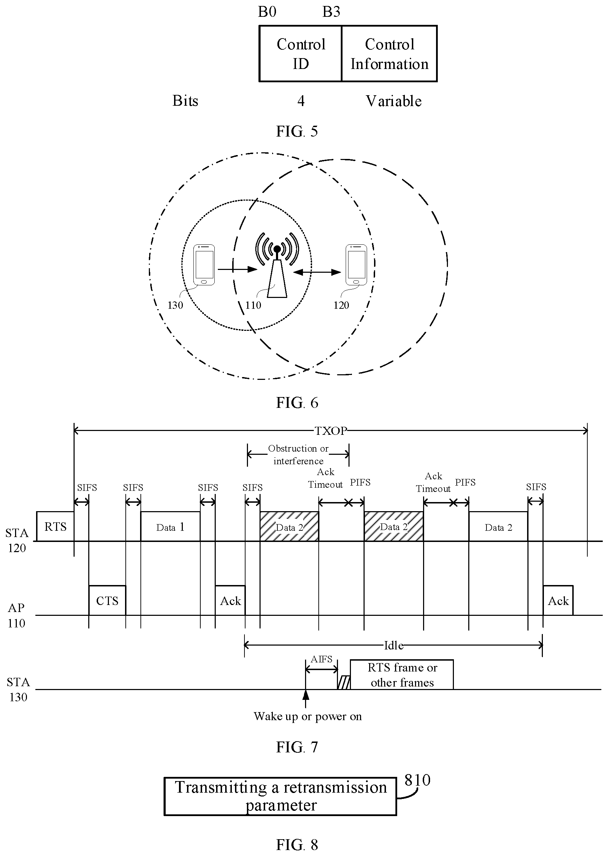

The above Control List field includes one or more Control subfields. FIG. 5 illustrates a schematic diagram of a format of a Control subfield in the related art. The format of the Control subfield includes at least one of: a Control ID field or a Control Information field.

The Control ID field occupies a total of four bits from B0 to B3, and the Control Information field occupies a variable number of bits.

In the acknowledgement and retransmission mechanisms defined in relevant standards, the receiving station will be interfered by a hidden station. FIG. 6 illustrates a schematic diagram of a scenario where a receiving station is interfered with according to some embodiments of the present disclosure.

Taking the scenario illustrated in FIG. 6 as an example, STA 120 is a transmitting station, which transmits data to an associated AP 110; AP 110 is a receiving station, which receives data and replies with an Ack frame to STA 120; STA 130 is a hidden station, which is not associated with AP 110 and may enter a sleep state or wake-up state at any time, so STA 130 may not set an NAV.

FIG. 7 illustrates a schematic diagram of a frame interaction process according to some embodiments of the present disclosure. When occlusion or interference occurs, the frame interaction among AP 110, STA 120, and STA 130 may be as illustrated in FIG. 7.

Prior to transmitting a data frame, STA 120 transmits a Request To Send (RTS) frame to request access to a channel. AP 110 transmits a CTS frame to acknowledge that STA 120 has access to the channel within a next TXOP.

When the data frame from STA 120 is transmitted normally, AP 110 replies with an Ack frame based on the relevant acknowledgement mechanism. For example, STA 120 transmits a data 1 frame, and AP 110 replies with one Ack frame after one SIFS.

When the data frame from STA 120 fails to be received by AP 110 due to obstruction or interference, AP 110 remains silent and does not reply with any frame based on the relevant confirmation mechanism. For example, STA 120 transmits a first data 2 frame, but AP 110 fails to receive the first data 2 frame due to obstruction or interference and remains silent without replying with any frame.

During the period when AP 110 remains silent, since AP 110 does not use the channel for a long time, the Clear Channel Assessment (CCA) of the hidden station STA 130 may indicate that the channel is idle. Furthermore, since STA 130 may not be configured with an NAV, STA 130 may be woken up or powered on during the retransmission process of STA 120, and STA 130 transmits an RTS frame or another frame in an attempt to occupy the channel. During this period, STA 120 transmits a second data 2 frame, which is a retransmission frame and is the same as the first data 2 frame. At this time, AP 110 may simultaneously receive the retransmission frame from STA 120 and the RTS frame or another frame from STA 130, resulting in interference and failure in receiving the retransmission frame, which may trigger more retransmissions and result in a longer link recovery time and greater transmission delay.

The data frame transmitted from STA 120 can be successfully received by AP 110 only if STA 130 does not transmit the RTS frame or another frame and no other interference is present. For example, STA 130 transmits a third data 2 frame, and AP 110 successfully receives the third data 2 frame and replies with an Ack frame.

The above issue arises because when the transmitting station (STA 120) continuously transmits retransmission frames, the receiving station (AP 110) is always in a state of not transmitting any frames, leading to channel loss. To address this issue, the present disclosure proposes a retransmission method applicable to the EDCA channel access, in which the transmitting station informs the receiving station of the retransmission parameter in advance, wherein the retransmission parameter is a parameter related to the retransmission by the transmitting station. When the transmitting station performs a retransmission, the receiving station transmits, based on the retransmission parameter, a first frame within a period when the retransmission frame will not be interfered. The first frame is used for instructing another station around the receiving station to set an NAV, thereby suppressing interference from the another station on the retransmission frame and improving the reliability of retransmission.

FIG. 8 illustrates a flowchart of a retransmission method according to some embodiments of the present disclosure. The method is performed by a first station, and the method includes the following processes.

**In process 810,** a retransmission parameter is transmitted.

The retransmission parameter is a parameter related to retransmission by a first station.

In some embodiments, the retransmission parameter includes a parameter related to the retransmission by the first station that is transmitted before the retransmission frame is transmitted.

In some embodiments, the retransmission parameter includes a parameter related to the retransmission by the first station, wherein the parameter is carried in a PPDU prior to the retransmission PPDU. The retransmission PPDU is a PPDU that carries the retransmission frame.

In some embodiments, the retransmission parameter includes a parameter used by a second station to identify whether the first station performs retransmission.

In some embodiments, in a case of retransmission, the retransmission parameter includes a parameter related to determination of the duration of the retransmission PPDU.

In some embodiments, the first station is an STA; or the first station is an AP.

In some embodiments, the method includes the following two implementations:
an implementation based on PPDU granularity (Per PPDU); and
an implementation based on TXOP granularity (Per TXOP).

In some embodiments, the implementation of Per PPDU means that each PPDU carries a retransmission parameter when the PPDU is transmitted.

The implementation of Per TXOP means that during each TXOP period, some of the retransmission parameters only need to be transmitted once.

### 1. Implementation based on Per PPDU:

In some embodiments, the first station transmits a current PPDU.

The current PPDU includes a current frame and a retransmission parameter. The retransmission parameter is associated with a next PPDU, wherein the next PPDU is a PPDU carrying a next frame.

The first station informs the second station of the retransmission parameter associated with the next PPDU in the current PPDU. The first station is the transmitting station, and the second station is the receiving station.

In some embodiments, the retransmission parameter is transmitted at the granularity of PPDU, with all retransmission parameters carried in each PPDU.

In some embodiments, the retransmission parameter includes a retransmission parameter associated with the next PPDU, a retransmission parameter associated with the next frame, or a retransmission parameter associated with the PPDU carrying the next frame.

In some embodiments, the retransmission parameter includes a parameter used for determining the retransmission process of the next PPDU, or the retransmission parameter includes a parameter used for determining the retransmission process of the next frame, or the retransmission parameter includes a parameter used for determining the retransmission process of the PPDU carrying the next frame.

In some embodiments, the retransmission parameter includes at least one of a first parameter, a second parameter, or a third parameter;
wherein the first parameter is used to indicate whether a next PPDU is to be transmitted after a current frame is acknowledged and one SIFS elapses, wherein the next PPDU is the same as the current PPDU except for content of a physical layer service data unit (PSDU);
the second parameter is used to indicate a maximum number of retransmissions; and
the third parameter is used to indicate a modulation and coding scheme (MCS) used in the case of retransmission, and the third parameter includes the number of consecutive retransmissions using a same MCS, and/or a decreased value of MCS for each retransmission.

In some embodiments, the first parameter is a Boolean parameter, and the second parameter and the third parameter are integer parameters.

### Transmission mode for retransmission parameter:

(1) The retransmission parameter is carried in a first field.

In some embodiments, the first field is an HRL Control field. The HRL Control field is defined to transmit a retransmission parameter, and the HRL Control field is a variant type of the A-Control field within the HT Control field located at the header of the MAC frame.

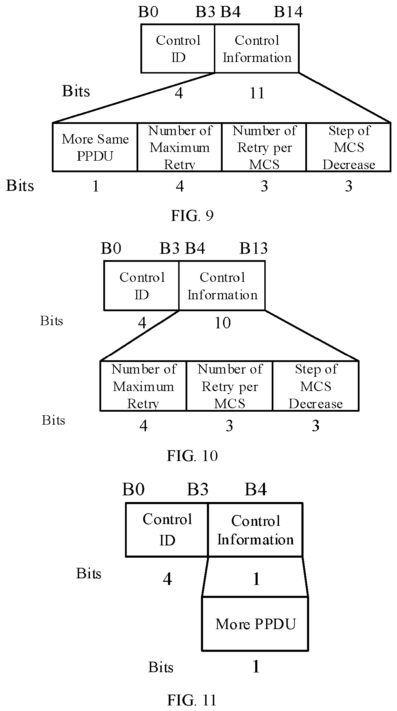

FIG. 9 illustrates a schematic diagram of an HRL control type format of the A-Control field according to some embodiments of the present disclosure. The format includes at least one of: a Control ID field or a Control Information field.

The Control ID field occupies a total of four bits from B0 to B3, while the Control Information field occupies a total of 11 bits from B4 to B14.

The Control ID field is used to indicate a variant type of the A-Control field, with a value of any integer from 10 to 14. For example, the Control ID field takes a value of 10 to indicate that the variant type is the HRL control type (HRL Control field).

The Control Information field contains parameters used for enhancing link reliability.

With respect to the Control Information field, the format of the Control Information field includes at least one of: a More Same PPDU field, a Number of Maximum Retry field, a Number of Retry per MCS field, or a Step of MCS Decrease field. In the embodiments of the present disclosure, the subfield and the field have the same meaning.

The More Same PPDU field occupies one bit, the Number of Maximum Retry field occupies four bits, the Number of Retry per MCS field occupies three bits, and the step of MCS Decrease field occupies three bits.

The More Same PPDU field is used to indicate whether a next PPDU is to be transmitted after a current frame is acknowledged and one SIFS elapses, and the next PPDU is the same as the PPDU carrying the current frame, except for the PSDU content. For example, the More Same PPDU field takes a value of 1 to indicate "YES", and takes a value of 0 to indicate "NO".

Illustratively, the second station receives an i^{th} data frame, and the More Same PPDU field in the i^{th} data frame takes a value of 1, indicating that the first station will transmit a PPDU carrying an (i+1)^{th} data frame. However, in a case where the second station does not receive the PPDU carrying the (i+1)^{th} data frame, the second station infers that the first station will retransmit the (i+1)^{th} data frame.

In a case where the second station receives the i^{th} data frame and the More Same PPDU field in the i^{th} data frame takes a value of 0, indicating that the first station will not transmit a PPDU carrying the (i+1)^{th} data frame, that is, the i^{th} data frame is the last frame, the second station infers that the first station will not perform a retransmission even if the second station does not receive the (i+1)^{th} data frame.

The Number of Maximum Retry field is used to indicate the maximum number of retransmissions, and its value represents the number of retransmissions.

The Number of Retry per MCS field is used to indicate the number of consecutive retransmissions using the same MCS, and its value represents the number of consecutive retransmissions using the same MCS, or the number of consecutive retransmissions using the same MCS minus one. For example, in a case where the value of the Number of Retry per MCS field is represented by 3 bits, if the number of consecutive retransmissions using the same MCS is 1, the value is 001; or, the value is 000. In a case where the value of the Number of Retry per MCS field is the number of consecutive retransmissions using the same MCS minus one, the value may be represented by more numbers, starting from 000, thereby improving the utilization ratio.

The Step of MCS Decrease field is used to indicate the decreased value of MCS for each retransmission, and its value is the decreased value of MCS. When the value of the Step of MCS Decrease field decreases to zero, it should remain at zero and does not change any further.

The above HRL control type format of the A-Control field is an illustrative possible example. In different embodiments or designs, the A-Control field may be changed in at least one of the design aspects, such as the position of the field in the frame, the arrangement order with other fields, the number of occupied octets, the number of occupied bits, the element name, and the field name, which is not limited in the present embodiments.

In some embodiments, the first parameter occupies at least one first subfield in the first field; the second parameter occupies at least one second subfield in the first field; and the third parameter occupies at least one third subfield in the first field.

Illustratively, the first parameter occupies the More Same PPDU field; the second parameter occupies the Number of Maximum Retry field; and the third parameter occupies the Number of Retry per MCS field and Step of MCS Decrease field.

In some embodiments, only the same MCS is used for consecutive retransmission, and the value of the Number of Retry per MCS field is the number of consecutive retransmissions using the same MCS or the number of consecutive retransmissions using the same MCS minus one. The Step of MCS Decrease field is not used, or the Step of MCS Decrease field takes a value of 0, or each bit in this field takes a value of 0.

In some embodiments, the MCS value is decreased for each retransmission, and the value of the Step of MCS Decrease field is the decreased value of MCS. The Number of Retry per MCS field is not used, or the Number of Retry per MCS field takes a value of 0, or each bit in the field takes a value of 0.

In some embodiments, the same MCS is used for consecutive retransmissions. After retransmissions are performed for the number of times corresponding to the value of the Number of Retry per MCS field, the MCS value is decreased based on the value corresponding to the Step of MCS Decrease field to continue retransmissions. For example, the same MCS (with a value of six) is used for consecutive retransmissions first, the value corresponding to the Number of Retry per MCS field is four, and the value corresponding to the Step of MCS Decrease field is one, that is, after four times of retransmissions are performed, the MCS value is decreased, with a decrease value of one each time, to continue retransmissions according to the values of MCS being five, four, three, two, one, and zero.

(2) The retransmission parameter is carried in a second field.

The second field is used to indicate whether a next PPDU is to be transmitted after a current frame is acknowledged and one SIFS elapses.

In some embodiments, the second field is an HRL Control field.

FIG. 10 illustrates a schematic diagram of an HRL control type format of an A-Control field according to some embodiments of the present disclosure. The format includes at least one of: a Control ID field or a Control Information field.

The Control ID field occupies a total of four bits from B0 to B3, and the Control Information field occupies a total of ten bits from B4 to B13.

With respect to the Control Information field, the format of the Control Information field includes at least one of: a Number of Maximum Retry field, a Number of Retry per MCS field, or a Step of MCS Decrease field.

The Number of Maximum Retry field occupies four bits, the Number of Retry per MCS field occupies three bits, and the Step of MCS Decrease field occupies three bits.

In some embodiments, the second parameter occupies at least one second subfield in the second field; and the third parameter occupies at least one third subfield in the second field.

Illustratively, the second parameter occupies the Number of Maximum Retry field; and the third parameter occupies the Number of Retry per MCS field and Step of MCS Decrease field.

Compared with the embodiment illustrated in FIG. 9, the "More Same PPDU field" is not used in this embodiment. Instead, whether a next PPDU is to be transmitted after a current frame is acknowledged and one SIFS elapses is indicated by whether the header of the MAC frame includes the HRL control type of the A-Control field. If the header of the MAC frame does not include the HRL control type of the A-Control field, the next PPDU is not transmitted, and if the header of the MAC frame includes the HRL control type of the A-Control field, the next PPDU is transmitted, and the next PPDU is the same as the current PPDU except for the content of the PSDU. For the meanings of other fields, reference may be made to the embodiment illustrated in FIG. 9, which are not elaborated herein any further.

The HRL control type format of the A-Control field is an illustrative possible example. In different embodiments or designs, the A-Control field may be changed in at least one of the design aspects, such as the position of the field in the frame, the arrangement order with other fields, the number of occupied octets, the number of occupied bits, the element name, and the field name, which is not limited in the embodiments of the present disclosure.

In some embodiments, subsequent to receiving the first parameter in the current PPDU, the second station identifies whether the next PPDU will be retransmitted. In a case where the second station identifies that the next PPDU will be retransmitted, the transmission time position and duration of the retransmission PPDU are determined based on at least one of the Number of Maximum Retry field, the Number of Retry per MCS field, or the Step of MCS Decrease field. The retransmission PPDU is a PPDU used to carry the next frame that is retransmitted, and the retransmission PPDU may be one or more PPDUs following the next PPDU.

Illustratively, the second station receives a PPDU carrying data 1 frame, and the MCS=6 and the duration of the PPDU is 100 microseconds. Since the HRL Control field indicates a next PPDU is to be transmitted after a current frame is acknowledged and one SIFS elapses, and the duration of the next PPDU is the same as the duration of the current PPDU, the second station infers that the second station will receive a PPDU carrying a data 2 frame after the acknowledgement and one SIFS elapses, and the duration of the PPDU is also 100 microseconds.

Next, the second station receives the next PPDU after the SIFS, but the second station finds a check error subsequent to receiving the next PPDU. Therefore, the second station determines that the first station has failed to transmit the data 2 frame and will perform a retransmission. Based on the value of the Step of MCS Decrease field being one, it can be determined that MCS5 will be used for the first retransmission PPDU. In combination with the duration of the PPDU carrying the data 1 frame, it can be inferred that the duration of the first retransmission PPDU is 125 microseconds. Subsequent to waiting for AckTimeout plus the PIFS, the second station receives the first retransmission PPDU, but finds a check error again subsequent to receiving the first retransmission PPDU. Therefore, the second station determines that the first station will continue to perform a retransmission, and MCS4 will be used for the second retransmission PPDU. In combination with the duration of the PPDU carrying the data 1 frame, it can be inferred that the duration of the second retransmission PPDU is 150 microseconds. Subsequent to waiting for AckTimeout plus the PIFS, the second station receives the second retransmission PPDU and the check is successful. Thus, it is determined that the retransmission process ends, and the first station will not perform further retransmissions.

### Retransmission rules:

In some embodiments, in a case where the first subfield takes a first value, the next PPDU is transmitted based on the retransmission parameter; and in a case where the first subfield takes a second value, the next PPDU is transmitted based on a parameter other than the retransmission parameter.

In some embodiments, in a case where the first subfield takes the first value and a retransmission occurs, the next PPDU is a retransmission PPDU transmitted based on a second parameter and a third parameter; and/or in a case where the first subfield takes the first value, and the second station fails to successfully receive the next PPDU, the retransmission PPDU of the next PPDU is transmitted based on the second parameter and the third parameter; wherein the retransmission PPDU of the next PPDU is a PPDU that carries the next frame that is retransmitted. Identifying retransmission means that it is identified that the next PPDU has not been successfully received and needs to be retransmitted.

In some embodiments, after the first station has successfully competed for a channel and reserved a TXOP for interaction of multiple frames, the first station, when transmitting a non-initial frame, carries the above HRL Control field in the HT Control field in the MAC header of the following types of frames:
individually addressed Management frames other than Action No Ack frames;
individually addressed non-QoS data frames; and
individually addressed QoS Data frames with Normal Ack or Implicit BAR Ack policy.

Illustratively, in a case where the first station carries the HRL Control field in an individually addressed non-QoS data frame, or carries the HRL Control field in an individually addressed non-QoS data frame and the More Same PPDU field (first subfield) takes a value of 1 (the first value), the next PPDU is transmitted based on the retransmission parameter; and in a case where the second station has identified the retransmission, the first station transmits the retransmission PPDU based on Number of Maximum Retry field, the Number of Retry per MCS field, and the Step of MCS Decrease field in the HRL Control field.

In a case where the first station does not carry the HRL Control field in the transmitted frame, or the first station carries the HRL Control field in the transmitted frame but the More Same PPDU field (the first subfield) takes a value of 0 (the second value), the next PPDU does not need to be transmitted based on the retransmission parameter but is transmitted based on another parameter other than the retransmission parameter; and in a case where the second station has identified the retransmission, the retransmission may not be performed based on the retransmission parameter.

### II. Implementation based on Per TXOP:

In some embodiments, the first station transmits the retransmission parameter after an initial frame within the TXOP; wherein the retransmission parameter is a parameter used for transmission of a designated frame within the TXOP.

In some embodiments, the retransmission parameter includes a retransmission parameter associated with transmission of a designated frame within the TXOP.

In some embodiments, the retransmission parameter includes at least one of a second parameter, a third parameter, a fourth parameter, a fifth parameter, a sixth parameter, a seventh parameter, an eighth parameter, or a ninth parameter;
wherein the second parameter is used to indicate the maximum number of retransmissions;
the third parameter is used to indicate an MCS used in the case of retransmission, and the third parameter includes a number of consecutive retransmissions using a same MCS, and/or a decreased value of MCS for each retransmission;
the fourth parameter is used to indicate whether a next PPDU is to be transmitted after a current frame is acknowledged and one SIFS elapses, wherein the next PPDU is a PPDU carrying the next frame;
the fifth parameter is used to indicate a physical (PHY) version of a PPDU;
the sixth parameter is used to indicate a first time interval, wherein the first time interval is a time interval from a start time of a PPDU to reporting of a first primitive to a MAC layer, which is referred to as RxPHYStartDelay; wherein the first primitive is a primitive indicating that the physical layer has received a valid PPDU, which is referred to as a PHY-RXSTART.indication primitive;
the seventh parameter is used to indicate the duration of a PPDU;
the eighth parameter is used to indicate the length of a PSDU;
the ninth parameter is used to indicate the MCS used for transmission of a PPDU.

In some embodiments, the fourth parameter is a Boolean parameter, and the parameters other than the fourth parameter are integer parameters.

In some embodiments, the fourth parameter is carried in each PPDU.

In some embodiments, all or part of the parameters other than the fourth parameter are carried in a first request frame.

In some embodiments, all or part of the parameters other than the fourth parameter are carried in a first response frame.

In some embodiments, all or part of the parameters other than the fourth parameter are carried in each PPDU.

### Retransmission parameter delivery method:

(1) The fourth parameter is carried in a third field.

In some embodiments, the third field is an HRL Control field. The HRL Control field is defined to transmit the fourth parameter, and the HRL Control field is a variant type of the A-Control field in the HT Control field located at the header of the MAC frame.

FIG. 11 illustrates a schematic diagram of an HRL control type format of the A-Control field according to some embodiments of the present disclosure. The format includes at least one of: a Control ID field or a Control Information field.

The Control ID field occupies a total of four bits from B0 to B3, and the Control Information field occupies a total of one bit at B4.

The Control ID field is used to indicate the variant type of the A-Control field, and its value may be any integer from 10 to 14. For example, the Control ID field takes a value of 10 to indicate that the variant type is the HRL control type (HRL Control field).

The Control Information field contains parameters used for enhancing link reliability.

With respect to the Control Information field, the format of the Control Information field includes a More PPDU field.

The More PPDU field occupies one bit.

The More PPDU field is used to indicate whether a next PPDU is to be transmitted after a current frame is acknowledged and one SIFS elapses. For example, the More PPDU field takes a value of 1 to indicate to transmit the next PPDU, and takes a value of 0 to indicates not to transmit the next PPDU.

In some embodiments, the fourth parameter occupies at least one fourth subfield in the third field.

Illustratively, the fourth parameter occupies the More PPDU field.

The above HRL control type format of the A-Control field is an illustrative possible example. In different embodiments or designs, that the A-Control field may be changed in at least one of the design aspects, such as the position of the field in the frame, the arrangement order with other fields, the number of occupied octets, the number of occupied bits, the element name, and the field name, which is not limited in the embodiments of the present disclosure.

(2) The retransmission parameters other than the fourth parameter are carried in the first request frame.

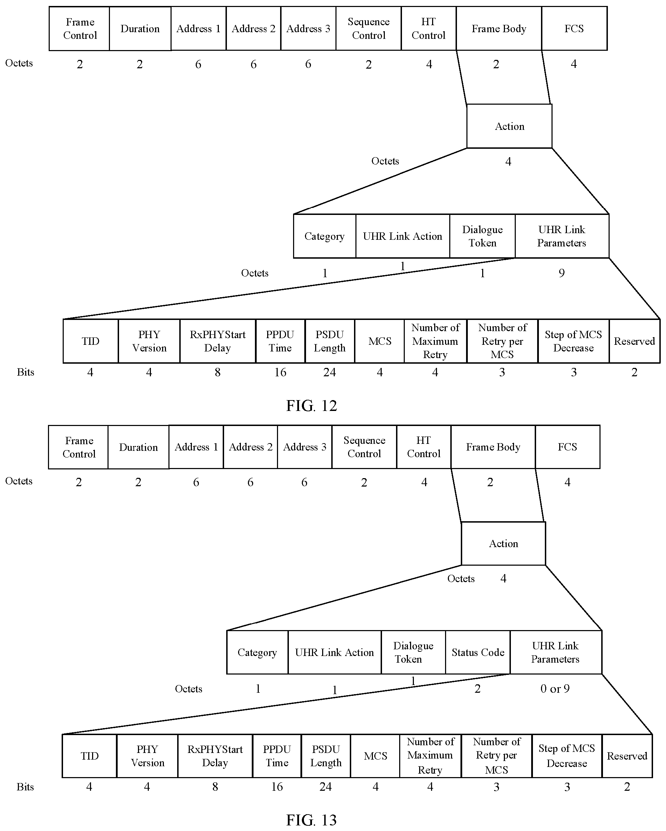

In some embodiments, the first request frame is an UHR link setup request frame. FIG. 12 illustrates a schematic diagram of a format of a UHR link setup request frame according to some embodiments of the present disclosure. The format of the UHR link setup request frame includes at least one of: a Frame Control field, a Duration field, an Address 1 field, an Address 2 field, an Address 3 field, a Sequence Control field, an HT Control field, a Frame body field, or an FCS field.

The Frame Control field occupies two octets, the Duration field occupies two octets, the Address 1 field occupies six octets, the Address 2 field occupies six octets, the Address 3 field occupies six octets, the Sequence Control field occupies two octets, the HT control field occupies four octets, the Frame Body field occupies two octets, and the FCS field occupies four octets.

With respect to the above Frame Body field, the format of the Frame Body field includes an Action subfield. In the embodiments of the present disclosure, the subfield is referred to as a field for short.

The Action subfield occupies four octets.

With respect to the above Action subfield, the format of the Action subfield includes at least one of: a Category subfield, a UHR Link Action subfield, a Dialog Token subfield, or a UHR Link Parameters subfield.

The Category subfield occupies one octet, the UHR Link Action subfield occupies one octet, the Dialog Token subfield occupies one octet, and the UHR Link Parameters subfield occupies nine octets.

The Category subfield is used to indicate a new action frame type, i.e., the UHR link action frame type, with a value of any integer from 39 to 125, for example, 40.

The UHR Link Action subfield is used to indicate the subtype of the UHR link action frame, with a value of any integer from 0 to 255. For example, the UHR Link Action subfield takes a value of 0 to indicate that the UHR link action frame is a UHR link setup request frame.

The Dialog Token subfield is used to indicate a pair of UHR link setup request frame and UHR link setup response frame that are associated with each other, with the Dialog Token subfield being included in both frames.

The UHR Link Parameters subfield is used to carry parameters related to a UHR retransmission mechanism.

With respect to the above UHR Link Parameters subfield, the format of the UHR Link Parameters subfield includes at least one of: a Traffic ID (TID) subfield, a PHY Version subfield, a RxPHYStartDelay subfield, a PPDU Time subfield, a PSDU Length subfield, an MCS subfield, a Number of Maximum Retry subfield, a Number of Retry per MCS subfield, a Step of MCS Decrease subfield, or a Reserved subfield.

The TID subfield occupies four bits, the PHY Version subfield occupies four bits, the RxPHYStartDelay subfield occupies eight bits, the PPDU Time subfield occupies 16 bits, the PSDU Length subfield occupies 24 bits, the MCS subfield occupies four bits, the Number of Maximum Retry subfield occupies four bits, the Number of Retry per MCS subfield occupies three bits, the Step of MCS Decrease subfield occupies three bits, and the Reserved subfield occupies two bits.

The TID subfield is used to indicate a flow identifier of a flow for which a UHR retransmission solution is enabled.

The PHY Version subfield is used to indicate the version of the PPDU that is used. The values and their meanings are provided in Table 2.

**Table 2**

| Value | Meaning |
|---|---|
| 0 | UHR |
| 1 | Enhanced High Throughput (EHT) |
| 2 | HE |
| 3 | VHT |
| 4 | HT |
| 5 | Non-High Throughput (Non-HT) |
| 6-15 | Reserved |

The RxPHYStartDelay subfield is used to indicate a delay between starting to receive the PPDU by the receiving station and initiating the PHY-RXSTART.indication, and is used to assist the receiving station in determining whether the receiving station has successfully received the preamble part of the next PPDU. The value of the RxPHYStartDelay subfield is in a unit of microseconds.

The PPDU Time subfield is used to indicate the duration of the transmitted PPDU, and the value of the PPDU Time subfield is in a unit of microseconds.

The PSDU Length subfield is used to indicate the length of the PSDU carried in the transmitted PPDU, and the value of the PSDU Length subfield is in a unit of octets.

The MCS subfield is used to indicate the MCS used for transmitting the PPDU.

The Number of Maximum Retry subfield is used to indicate the maximum number of retransmissions, and its value represents the number of retransmissions.

The Number of Retry per MCS subfield is used to indicate the number of consecutive retransmissions using the same MCS, and its value represents the number of consecutive retransmissions using the same MCS, or the number of consecutive retransmissions using the same MCS minus one. For example, in a case where the value of the Number of Retry per MCS field is represented by three bits, if the number of consecutive retransmissions using the same MCS is 1, the value is 001; otherwise, the value is 000. In a case where the value of the Number of Retry per MCS field is the number of consecutive retransmissions using the same MCS minus one, the value may be represented by more numbers, starting from 000, thereby improving the utilization ratio.

The Step of MCS Decrease subfield is used to indicate the decreased value of MCS for each retransmission, and its value is the decreased value of MCS. When the value of MCS decreases to 0, it should remain at 0 and not change any further.

The above format of the UHR link setup request frame is an illustrative possible example. In different embodiments or designs, the above field may change in at least one of the deign aspects, such as the position of the field in the frame, the arrangement order with other fields, the number of occupied octets, the number of occupied bits, the element name, and the field name, which is not limited in the embodiments of the present disclosure.

In some embodiments, the other retransmission parameters other than the fourth parameter each occupy at least one subfield in the first request frame.

Illustratively, the second parameter occupies the Number of Maximum Retry subfield; the third parameter occupies the Number of Retry per MCS subfield and the Step of MCS Decrease subfield; the fifth parameter occupies the PHY Version subfield; the sixth parameter occupies the RxPHYStartDelay subfield; the seventh parameter occupies the PPDU Time subfield; the eighth parameter occupies the PSDU Length subfield; and the ninth parameter occupies the MCS subfield.

In some embodiments, only the same MCS is used for consecutive retransmissions, and the value of the Number of Retry per MCS subfield is the number of consecutive retransmissions using the same MCS or the number of consecutive retransmissions using the same MCS minus one. The Step of MCS Decrease subfield is not used, or the Step of MCS Decrease subfield takes a value of 0, or each bit in the Step of MCS Decrease subfield takes a value of 0.

In some embodiments, the value of the MCS is decreased for each retransmission, and the value of the Step of MCS Decrease subfield is the decreased value of MCS. The Number of Retry per MCS subfield is not used, or the Number of Retry per MCS subfield takes a value of 0, or each bit in the subfield takes a value of 0.

In some embodiments, the same MCS is used for consecutive retransmissions. After retransmissions are performed for the number of times corresponding to the value of the Number of Retry per MCS field, the value of the MCS is decreased based on the value corresponding to the Step of MCS Decrease field to continue retransmissions. For example, the same MCS (with a value of six) is used for consecutive retransmissions first, the value corresponding to the Number of Retry per MCS field is four, and the value corresponding to the Step of MCS Decrease field is one, that is, after four times of retransmissions are performed, the MCS value is decreased, with a decreased value of one each time, to continue retransmissions according to the values of MCS being five, four, three, two, one, and zero.

In some embodiments, subsequent to receiving the fourth parameter in the current PPDU, the second station identifies whether the next PPDU will be retransmitted. In a case where it is identified that the next PPDU will be retransmitted, the transmission time position and the duration of the retransmission PPDU are determined based on at least one of the Number of Maximum Retry subfield, the Number of Retry per MCS subfield, the Step of MCS Decrease subfield, or the PPDU Time subfield. The retransmission PPDU is a PPDU used to carry the next frame that is retransmitted, which may be one or more PPDU following the next PPDU.

(3) The retransmission parameters other than the fourth parameter are carried in a first response frame.

FIG. 13 illustrates a schematic diagram of a format of a UHR link setup response frame according to some embodiments of the present disclosure. The format of the UHR link setup response frame includes at least one of: a Frame Control field, a Duration field, an Address 1 field, an Address 2 field, an Address 3 field, a Sequence Control field, an HT Control field, a Frame body field, or an FCS field.

The Frame Control field occupies two octets, the Duration field occupies two octets, the Address 1 field occupies six octets, the Address 2 field occupies six octets, the Address 3 field occupies six octets, the Sequence Control field occupies two octets, the HT Control field occupies four octets, the Frame Body field occupies two octets, and the FCS field occupies four octets.

With respect to the above Frame Body field, the format of the Frame Body field includes an Action subfield. In the embodiments of the present disclosure, the subfield is also referred to as a field for short.

The Action subfield occupies four octets.

With respect to the above Action subfield, the format of the Action subfield includes at least one of: a Category subfield, a UHR Link Action subfield, a Dialog Token subfield, a Status Code subfield, and UHR Link Parameters subfield.

The Category subfield occupies one octet, the UHR Link Action subfield occupies one octet, the Dialog Token subfield occupies one octet, the Status Code subfield occupies two octets, and the UHR Link Parameters subfield occupies zero or nine octets.

The Category subfield is used to indicate a new action frame type, i.e., the UHR link action frame type, with a value of any integer from 39 to 125, for example, 40.

The UHR Link Action subfield is used to indicate the subtype of the UHR link action frame, with a value of any integer from 0 to 255. For example, the UHR Link Action subfield takes a value of 1 to indicate that the UHR link action frame is a UHR link setup response frame.

The Status Code subfield is used to indicate a response result to the UHR link setup request frame. The Status Code subfield takes a value of 0 to indicate success (SUCCESS), takes a value of 37 to indicate a rejection (REQUEST_DECLINED), and takes a value of 39 to indicate a rejection with suggested changes (REJECTED_WITH_SUGGESTED_CHANGES).

The UHR Link Parameters subfield is only present when the Status Code subfield takes a value of 39; otherwise, this field is not present.

With respect to the above UHR Link Parameters subfields, the format of the UHR Link Parameters subfield includes at least one of: a TID subfield, a PHY Version subfield, a RxPHYStartDelay subfield, a PPDU Time subfield, a PSDU Length subfield, an MCS subfield, a Number of Maximum Retry subfield, a Number of Retry per MCS subfield, a Step of MCS Decrease subfield, or a Reserved subfield.

The TID subfield occupies four bits, the PHY Version subfield occupies four bits, the RxPHYStartDelay subfield occupies eight bits, the PPDU Time subfield occupies 16 bits, the PSDU Length subfield occupies 24 bits, the MCS subfield occupies four bits, the Number of Maximum Retry subfield occupies four bits, the Number of Retry per MCS subfield occupies three bits, the Step of MCS Decrease subfield occupies three bits, and the Reserved subfield occupies two bits.

For the meanings of the aforementioned fields or subfields, reference may be made to the corresponding embodiments of the UHR link setup request frame, which are not elaborated herein any further.

The above format of the UHR link setting response frame is an illustrative possible example. In different embodiments or designs, the above field may be changed in at least one of the design aspects, such as the position of the field in the frame, the arrangement order with other fields, the number of occupied octets, the number of occupied bits, the element name, and the field name, which is not limited in the embodiments of the present disclosure.

In some embodiments, the retransmission parameters other than the fourth parameter each occupy at least one subfield in the first response frame.

Illustratively, the second parameter occupies the Number of Maximum Retry subfield; the third parameter occupies the Number of Retry per MCS subfield and the Step of MCS Decrease subfield; the fifth parameter occupies the PHY Version subfield; the sixth parameter occupies the RxPHYStartDelay subfield; the seventh parameter occupies the PPDU Time subfield; the eighth parameter occupies the PSDU Length subfield; and the ninth parameter occupies the MCS subfield.

In some embodiments, the first response frame includes a fifth subfield, wherein the fifth subfield is used to indicate a response result to the first request frame.

In a case where the fifth subfield takes a fifth value, the response result indicates success; in a case where the fifth subfield takes a sixth value, the response result indicates a rejection; and in a case where the fifth subfield takes a seventh value, the response result indicates a rejection with a suggested parameter provided; wherein the suggested parameter includes at least one of the second parameter, the third parameter, the fifth parameter, the sixth parameter, the seventh parameter, the eighth parameter, or the ninth parameter.

Illustratively, the fifth subfield is a Status Code subfield, and is used to indicate a response result to the UHR link setup request frame. The fifth subfield takes a value of 0 to indicates success; the fifth subfield takes a value of 37 to indicates a rejection; and the fifth subfield takes a value of 39 to indicate a rejection with a suggested parameter provided.

### Retransmission rules:

In some embodiments, in a case where the fifth subfield takes the fifth value or the seventh value, the next PPDU is transmitted based on the retransmission parameter; and in a case where the fifth subfield takes the sixth value, the next PPDU is transmitted based on a parameter other than the retransmission parameter.

In some embodiments, in a case where the fifth subfield takes the fifth value or the seventh value, and the second station identifies a retransmission, the next PPDU is a retransmission PPDU transmitted based on the retransmission parameter; and/or
in a case where the fifth subfield takes the fifth value or the seventh value, and the second station fails to successfully receive the next PPDU, the retransmission PPDU of the next PPDU is transmitted based on the retransmission parameter;
wherein the retransmission PPDU of the next PPDU is a PPDU carrying the next frame that is retransmitted. Identifying the retransmission means that the next PPDU has not been successfully received and needs to be retransmitted.

In some embodiments, after the first station has successfully competed for a channel and reserved a TXOP for interaction of multiple frames, the first station transmits a first request frame (UHR link setup request frame) to the second station after an initial frame within the TXOP to request negotiation of other retransmission parameters other than the fourth parameter. If the negotiation is successful, all PPDUs carrying the following types of frames transmitted by the first station to the second station within the TXOP must comply with the negotiated retransmission parameter:
individually addressed Management frames other than Action No Ack frames;
individually addressed non-QoS Data frames; and
individually addressed QoS Data frames with Normal Ack or Implicit BAR Ack policy.

In some embodiments, the third field is carried in the last frame within the TXOP, and the fourth subfield takes a third value; and the third field is carried in a frame other than the last frame within the TXOP, and the fourth subfield takes a fourth value.

Illustratively, within the TXOP, the last frame transmitted by the first station to the second station carries an HRL Control field, and the More PPDU field takes a value of 0; and within the TXOP, a frame, other than for the last frame, transmitted by the first station to the second station, carries the HRL Control field, and the More PPDU field takes a value of 1.

In summary, in the method according to these embodiments, the retransmission parameter is transmitted from the first station, and the retransmission parameter is a parameter related to the retransmission by the first station. Subsequent to receiving the retransmission parameter, the second station, as the receiving station, is capable of determining whether the first station performs a retransmission based on the parameter, and acquiring information about frames related to the retransmission.

Further, in the method according to these embodiments, the retransmission parameter is carried in at least one of the HRL Control field, UHR link setup request frame, or the UHR link setup response frame to specifically indicate the retransmission method under different situations, thereby improving the accuracy of retransmission.

Additionally, in the method according to these embodiments, the MCS used during retransmission is flexibly adjusted based on the Number of Retry per MCS field and the Step of MCS Decrease field, thereby improving the efficiency of retransmission.

In the method according to these embodiments, according to the implementation based on PPDU granularity (Per PPDU), each PPDU carries a retransmission parameter when PPDUs are transmitted, thereby ensuring that a corresponding retransmission parameter is present for each PPDU and improving the flexibility of retransmission.

In the method according to these embodiments, according to the implementation based on TXOP granularity (Per TXOP), the retransmission parameter is transmitted once within each TXOP period, thereby reducing the number of transmissions and saving power for the first station.

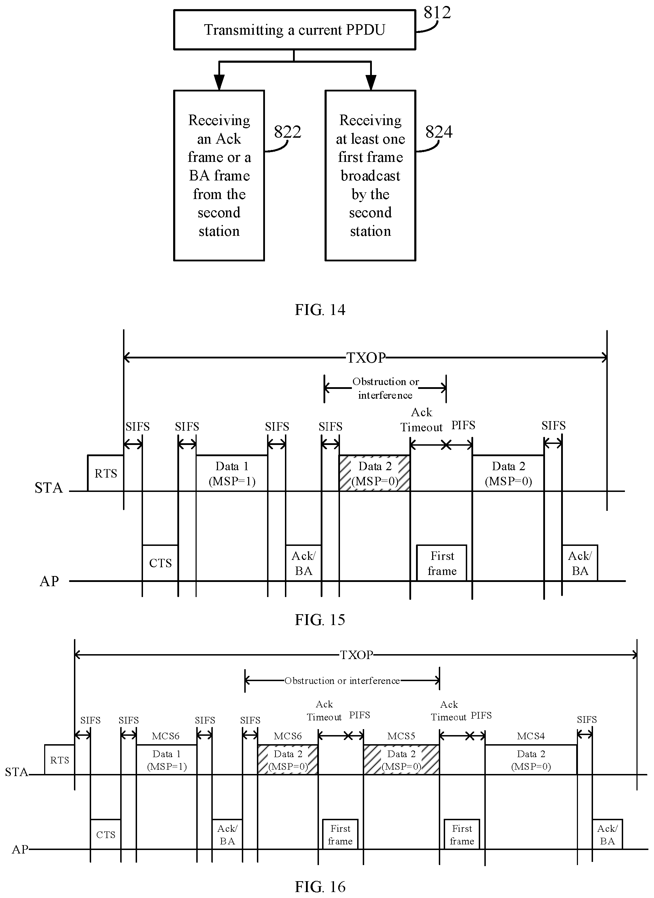

FIG. 14 illustrates a flowchart of a retransmission method according to some embodiments of the present disclosure. The method is performed by a first station. The method includes the following processes.

**In process 812,** a current PPDU is transmitted.

For the specific implementation details, please refer to the implementation based on Per PPDU in the embodiments illustrated in FIG. 8, which are not elaborated herein any further.

**In process 822,** an Ack frame or a BA frame transmitted by the second station is received.

In some embodiments, the Ack frame or the BA frame is transmitted by the second station in a case where a first subfield takes a second value.

Illustratively, in a case where the frame received by the second station does not include an HRL Control field, or includes an HRL Control field but the More Same PPDU field therein takes a value of 0, the second station transmits an Ack frame or a BA frame.

In some embodiments, the Ack frame or the BA frame is transmitted by the second station in a case where the first subfield takes a first value and the second station successfully receives a PPDU; and/or the Ack frame or the BA frame is transmitted by the second station in a case where the first subfield takes the first value and no retransmission has occurred.

Illustratively, in a case where the frame received by the second station includes an HRL Control field, or includes an HRL Control field and the More Same PPDU field therein takes a value of 1, if no retransmission has occurred, the second station transmits an Ack frame or a BA frame.

**In process 824,** at least one first frame broadcast by the second station is received.

The first frame is used for instructing another station around the second station to set an NAV. The first frame is a frame transmitted within a first time period, wherein the first time period is determined based on the retransmission parameter. The first time period is a time period outside a time period when the retransmission PPDU is interfered with.

In some embodiments, the Time field in the first frame is set based on the retransmission parameter, and the Time field is used for setting the NAV.

In some embodiments, the first frame is broadcast by the second station in a case where the first subfield takes the first value and the second station fails to successfully receive the next PPDU; and/or the first frame is broadcast by the second station in a case where the first subfield takes the first value and the second station has identified a retransmission.

Illustratively, in a case where the frame received by the second station includes an HRL Control field, or includes an HRL Control field and the More Same PPDU field therein takes a value of 1, if the second station has identified a retransmission, the second station estimates the transmission time period of the retransmission PPDU based on the retransmission parameter transmitted by the first station, so as to transmit one or more first frames within the time period (first time period) when the retransmission PPDU is not interfered.

In some embodiments, in a case where the MAC layer of the second station does not receive a first primitive within a first delay interval corresponding to one PPDU, the first time period is a time period from the end time of the first delay interval to the start time of the next retransmission PPDU;
in a case where the MAC layer of the second station receives a first primitive within the first delay interval corresponding to one PPDU, the first time period is a time period from the end time of one PPDU to the start time of the next retransmitted PPDU;
wherein the first delay interval represents a reception delay of the physical layer; the first delay interval is a time interval within the transmission time period corresponding to one PPDU; and the first primitive is a primitive indicating that the physical layer has received a valid PPDU.

Illustratively, in a case where the MAC layer of the second station does not receive a PHY-RXSTART.indication primitive within the RxPHYStartDelay interval corresponding to one PPDU, the first time period is a time period from the end time of the RxPHYStartDelay interval to the start time of the next retransmission PPDU; and
in a case where the MAC layer of the second station receives the PHY-RXSTART.indication primitive within the RxPHYStartDelay interval corresponding to one PPDU, the first time period is a time interval from the end time of the PPDU to the start time of the next retransmission PPDU.

In some embodiments, the second station is in a sleep state or a closed state during the first time period, and wakes up in a time period other than the first time period to receive a frame transmitted by the first station, thereby preventing other stations around the second station from occupying the channel.

Based on the above embodiments, the retransmission process is illustratively introduced hereinafter.

FIG. 15 illustrates a schematic diagram of a retransmission method according to some embodiments of the present disclosure. In these embodiments, the transmitting station (the first station) is an STA, the receiving station (the second station) is an AP, and the STA is associated to the AP. The STA acquires a TXOP by transmitting an RTS frame and receiving a CTS frame, and reserves a channel for a certain period of time by setting a NAV value. The HRL Control field adopts the format as illustrated in the embodiments illustrated in FIG. 9.

Within this TXOP, the STA needs to transmit an MSDU with high requirements for transmission reliability to the AP, and the MSDU is segmented into two MPDUs, i.e., the two data frames in FIG. 15: a data 1 frame and a data 2 frame. To enhance transmission reliability, the STA carries an HRL Control field with the value of the More Same PPDU (MSP) field being 1 in the MAC header of the data 1 frame, with the purpose of informing the AP that a data 2 frame will be transmitted after the data 1 frame and that the PPDU carrying the data 2 frame is the same as the PPDU carrying the data 1 frame. Thus, the AP can determine whether the data 2 frame is successfully received, and indirectly determine whether the STA will perform a retransmission. If the data frame is successfully received, the STA will not perform a retransmission; and if the data frame is not successfully received, the STA will perform a retransmission.

Furthermore, the STA informs, based on the Number of Maximum Retry subfield, the Number of Retry per MCS subfield, and the Step of MCS Decrease subfield in the HRL Control field, the AP about how the retransmission PPDU will be transmitted in a case of retransmission, thereby assisting AP in estimating an appropriate time to transmit a frame.

The STA successfully transmits the data 1 frame to the AP and receives an Ack frame or a BA frame in response from the AP. However, the first data 2 frame transmitted by the STA fails to be transmitted due to obstruction or interference, and thus the AP was unable to reply with an Ack frame or a BA frame. According to the relevant acknowledgement and retransmission rules, the MAC layer of the STA does not receive the PHY-RXSTART.indication primitive within the AckTimeout, and the STA determines that the first data 2 frame fails to be transmitted. Subsequent to waiting for a PIFS, the STA transmits a second data 2 frame. Since obstruction or interference had been eliminated at this time, the retransmitted data 2 frame (the second data 2 frame) is successfully transmitted, and the STA receives the corresponding Ack frame or BA frame.

During this period, the AP learns from the MSP field in the data 1 frame that the STA will transmit the data 2 frame. During the reception of the PPDU carrying the first data 2 frame, although the MAC layer of the AP receives the PHY-RXSTART.indication primitive within the RxPHYStartDelay interval, the MAC layer cannot parse out the correct data 2 frame, and thus determines that the reception of the first data 2 frame has failed. Therefore, it is determined that the STA will perform a retransmission. The AP further knows that the PPDU for the data 2 frame is the same as the PPDU for the data 1 frame, and thus the AP is able to estimate the end time of the PPDU carrying the first data 2 frame and the start time of the PPDU carrying the second data 2 frame. To prevent a hidden station from occupying the channel and interfering with the PPDU carrying the second data 2 frame (retransmission PPDU), the AP broadcasts a first frame, which is a VAck frame or a CTS frame, within the time period between the end time of the PPDU carrying the first data 2 frame and the start time of the PPDU carrying the second data 2 frame. The first frame is used to instruct a hidden station to set an NAV, preventing the hidden station from using the channel and thereby improving the success rate of receiving the retransmission PPDU.

FIG. 16 illustrates a schematic diagram of a retransmission method according to some embodiments of the present disclosure. In these embodiments, the transmitting station (the first station) is an STA, the receiving station (the second station) is an AP, and the STA is associated with the AP. The STA acquires a TXOP by transmitting an RTS frame and receiving a CTS frame, and reserves a channel for a certain period of time by setting an NAV value. The HRL Control field adopts the format in the embodiments illustrated in FIG. 9.

Within this TXOP, the STA needs to transmit an MSDU with high requirements for transmission reliability to the AP, and the MSDU is segmented into two MPDUs, i.e., the two data frames in FIG. 16: a data 1 frame and a data 2 frame. To enhance transmission reliability, the STA carries an HRL Control field with the value of the MSP field being 1 in the MAC header of the data 1 frame. Additionally, the STA sets the Number of Maximum Retry subfield in the HRL Control field to 10, sets the Number of Retry per MCS subfield to 1, and sets the Step of MCS Decrease subfield to 1, to inform the AP that if a retransmission occurs, the MCS of each retransmission PPDU is the MCS of the previous PPDU minus 1 and a maximum of 10 PPDUs will be retransmitted.

The STA successfully transmits a data 1 frame to the AP using MCS6 and receives an Ack frame or a BA frame in response from the AP. Then, because the MSP field takes a value of 1, the STA transmits a first data 2 frame to the AP using the same MCS6. However, the first data 2 frame transmitted by the STA fails to be transmitted due to obstruction or interference, and thus the AP cannot reply with an Ack frame or a BA frame. According to the relevant acknowledgement and retransmission rules, the MAC layer of the STA does not receive the PHY-RXSTART.indication primitive within the AckTimeout, and thus determines that the first data 2 frame fails to be transmitted. Therefore, the STA transmits a second data 2 frame subsequent to waiting for a PIFS and reduces the MCS value, i.e., using MCS5. At this time, obstruction or interference is still present, so the first retransmitted data 2 frame (the second data 2 frame) also fails to be transmitted. After the AckTimeout plus the PIFS, the STA transmits the retransmitted second data 2 frame (the third data 2 frame) and further reduces the MCS value, i.e., using MCS4. At this time, obstruction or interference has been eliminated, so the retransmitted second data 2 frame is successfully transmitted, and the first station receives an Ack frame or a BA frame.

During this period, the AP estimates the transmission time period of the first PPDU carrying the data 2 frame and the transmission time period of each PPDU (retransmission PPDU) carrying the retransmitted data 2 frame based on the retransmission parameter in the first data 1 frame.

Illustratively, the AP receives the PPDU carrying the data 1 frame, wherein the MCS of the PPDU carrying the data 1 frame equals to 6 and the duration is 100 microseconds. Since MSP=1, the AP infers that the AP will receive a PPDU carrying a data 2 frame after an SIFS following a reply with an Ack frame or a BA frame, and the duration of the PPDU is also 100 microseconds. Next, the AP receives the next PPDU after the SIFS, but the AP finds a check error after reception, so the AP determines that the STA fails to transmit the data 2 frame and will perform a retransmission. According to the retransmission parameter, it is determined that MCS5 will be used for the first retransmission PPDU. In combination with the PSDU length of the PPDU carrying the data 1 frame, it may be inferred that the duration of the first retransmission PPDU is 125 microseconds. Subsequent to waiting for AckTimeout and a PIFS, the AP receives the first retransmission PPDU, but the AP finds a check error again after reception, so the AP determines that the STA will continue to perform a retransmission. MCS4 will be used for the second retransmission PPDU. In combination with the PSDU length of the PPDU carrying the data 1 frame, it may be inferred that the duration of the second retransmission PPDU is 150 microseconds. Subsequent to waiting for AckTimeout plus a PIFS, the AP receives the second retransmission PPDU and the check is successful, thereby determining that the retransmission process is ended and the STA will not perform a retransmission any more.

To prevent the hidden station from occupying the channel to interfere with the retransmission PPDU, the AP broadcasts a first frame outside the transmission time period of the PPDU carrying the first data 2 frame and outside the transmission time period of the PPDU carrying the second data 2 frame, respectively. The first frame is a VAck frame or a CTS frame, and the first frame is used for instructing the hidden station to set an NAV, avoiding the hidden station from using the channel, and thereby improving the success rate of receiving the retransmission PPDU.

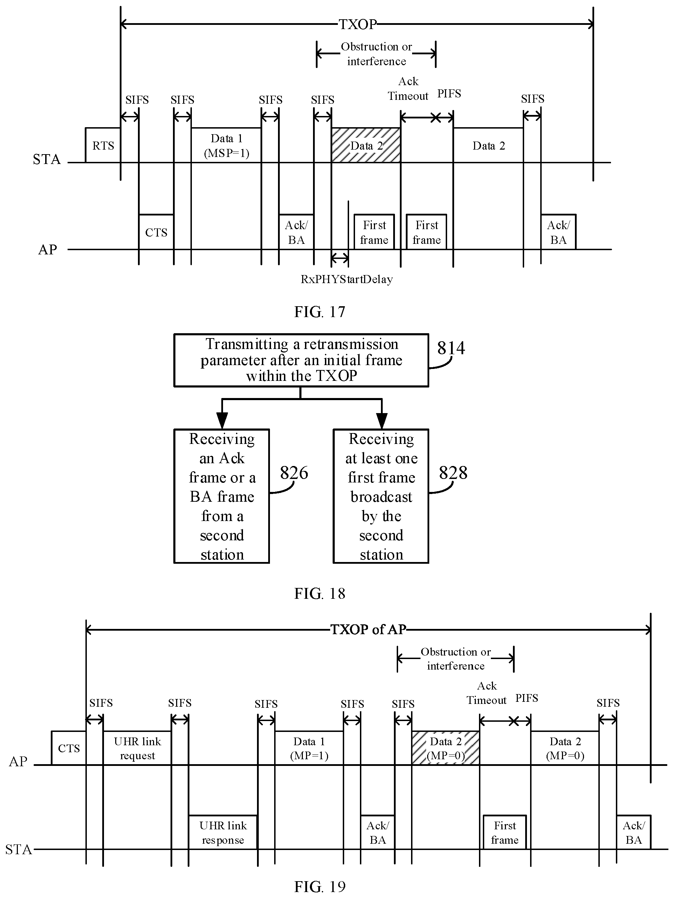

FIG. 17 illustrates a schematic diagram of a retransmission method according to some embodiments of the present disclosure. These embodiments are basically the same as the embodiments corresponding to FIG. 15, with the difference being that the first data 2 frame transmitted by the STA is more heavily obstructed or interfered with, and consequently the AP fails to receive the PHY-RXSTART.indication primitive within the RxPHYStartDelay interval when receiving the PPDU carrying that the data 2 frame. Therefore, the AP can determine, at the end time of the RxPHYStartDelay interval, that the AP fails to receive the PPDU carrying the first data 2 frame, and thus the AP transmits the first frame, which is a VAck frame or a CTS frame, upon the end time of the RxPHYStartDelay interval. Since time is sufficient, the AP can transmit two first frames before the start time of the PPDU carrying the retransmitted data 2 frame (the second data 2 frame).

For other implementation details of the embodiments in FIG. 17, please refer to the embodiments in FIG. 15, which are not elaborated herein any further.

In summary, in the method according to these embodiments, the first station transmits the current PPDU, wherein the current PPDU includes the current frame and the retransmission parameter, wherein the retransmission parameter is associated with the next PPDU, the next PPDU being a PPDU carrying the next frame. The second station, as a receiving station, determines, subsequent to receiving the retransmission parameter associated with the next PPDU, whether the first station performs a retransmission based on the retransmission parameter, and acquires information about frames related to the retransmission.

In the method according to these embodiments, at least one first frame broadcast by the second station is received. The first frame is used for instructing another station around the second station to set an NAV, thereby preventing the another station from using the channel and improving the success rate of receiving the retransmission PPDU.

FIG. 18 illustrates a flowchart of a retransmission method according to some embodiments of the present disclosure. The method is performed by a first station, and the method includes the following processes.

**In process 814,** after an initial frame within the TXOP, a retransmission parameter is transmitted.

For the specific implementation details, reference may be made to the implementation based on Per TXOP in the embodiments illustrated in FIG. 8, which are not elaborated herein any further.

**In process 826,** an Ack frame or a BA frame transmitted by a second station is received.

In some embodiments, upon receiving a first request frame, if the second station agrees with the retransmission parameter therein, the second station replies with a first response frame of which the fifth subfield takes a fifth value; if the second station disagrees with the retransmission parameter therein, the second station replies with a first response frame of which the fifth subfield takes a sixth value; and if the second station disagrees with the retransmission parameter therein but provides a suggested parameter, the second station replies with a first response frame of which the fifth subfield takes a seventh value.

Illustratively, when the second station receives a UHR link setup request frame, if the second station agrees with the retransmission parameter therein, the second station replies with a UHR link setup response frame of which the Status Code subfield takes 0; if the second station disagrees with the retransmission parameter therein, the second station replies with a UHR link setup response frame of which the Status Code subfield takes 37; if the second station disagrees with the retransmission parameter but provides a suggested parameter, the second station replies with a UHR link setup response frame of which the Status Code subfield takes 39.

In some embodiments, the fifth subfield takes the fifth value or the seventh value, and the Ack frame or BA frame is transmitted by the second station when the fourth subfield takes an eighth value; wherein the fourth subfield is a subfield occupied by the fourth parameter in the third field.

Illustratively, the Status Code subfield takes a value of 0 or 39. When the frame received by the second station does not include an HRL Control field, or includes an HRL Control field but the More PPDU field therein takes a value of 0, the second station transmits an Ack frame or a BA frame.

In some embodiments, the fifth subfield takes the fifth value or the seventh value, and the Ack frame or the BA frame is transmitted by the second station in a case where the fourth subfield takes a ninth value and the second station successfully receives the PPDU; and/or the Ack frame or the BA frame is transmitted by the second station in a case where the fourth subfield takes the ninth value and no retransmission has occurred; wherein the fourth subfield is a subfield occupied by the fourth parameter in the third field.

Illustratively, the Status Code subfield takes a value of 0 or 39, and the second station transmits an Ack frame or a BA frame when the frame received by the second station includes an HRL Control field, or includes an HRL Control field and the More PPDU field takes a value of 1.

**In process 828,** at least one first frame broadcast by the second station is received.

The fifth subfield takes the fifth value or the seventh value. The first frame is used for instructing another station around the second station to set an NAV. The first frame is transmitted within a first time period. The first time period is determined based on the retransmission parameter, and the first time period is outside a time period when the retransmission PPDU is interfered with.

In some embodiments, the Time field in the first frame is set based on the retransmission parameter, and the Time field is used for setting the NAV.

In some embodiments, the first frame is broadcast by the second station in a case where the fourth subfield takes the ninth value, and the second station fails to successfully receive the next PPDU; and/or the first frame is broadcast by the second station in a case where the fourth subfield takes the ninth value and the second station has identified a retransmission; wherein the fourth subfield is a subfield occupied by the fourth parameter in the third field.

Illustratively, when the frame received by the second station includes an HRL Control field and the More PPDU field takes a value of 1, if the second station has identified a retransmission, the second station estimates the transmission time period of the retransmission PPDU based on the retransmission parameter transmitted by the first station, such that the second station can transmit one or more first frames within a time period when the retransmission PPDU is not interfered (the first time period).

In some embodiments, in a case where the MAC layer of the second station does not receive the first primitive within the first delay interval corresponding to one PPDU, the first time period is the time period from the end time of the first delay interval to the start time of the next retransmission PPDU; and
in a case where the MAC layer of the second station receives the first primitive within the first delay interval corresponding to one PPDU, the first time period is a time period from the end time of the one PPDU to the start time of the next retransmission PPDU;
wherein the first delay interval represents the reception delay of the physical layer; the first delay interval is a time interval within the transmission time period corresponding to one PPDU; and the first primitive is a primitive indicating that the physical layer has received a valid PPDU.

Illustratively, in the case where the MAC layer of the second station does not receive the PHY-RXSTART.indication primitive within the RxPHYStartDelay interval corresponding to one PPDU, the first time period is the time interval from the end time of the RxPHYStartDelay interval to the start time of the next retransmission PPDU; and
in the case where the MAC layer of the second station receives the PHY-RXSTART.indication primitive within the RxPHYStartDelay interval corresponding to one PPDU, the first time period is the time interval from the end time of the PPDU to the start time of the next retransmission PPDU.

The retransmission process is illustratively introduced based on the above embodiments.

FIG. 19 illustrates a schematic diagram of a retransmission method according to some embodiments of the present disclosure. In these embodiments, the transmitting station (the first station) is an AP, the receiving station (the second station) is a STA, and the STA is associated with the AP. The AP acquires a TXOP by transmitting a CTS frame and reserves the channel for a certain period of time by setting a NAV value.

Within this TXOP, the AP needs to transmit an MSDU with high requirements for transmission reliability to the STA, and the MSDU is split into two data frames, i.e., a data 1 frame and a data 2 frame as illustrated in FIG. 19. To enhance transmission reliability, the AP transmits a UHR link setup request frame to negotiate the retransmission parameter with the STA. The STA replies with a UHR link setup response frame of which the Status Code subfield takes a value of 0, indicating agreement.

In the remaining TXOPs, the AP sets the More PPDU (MP) field in the HRL Control field of the data 1 frame (not the last frame) transmitted to the STA to 1, sets the MP field in the HRL Control field of the data 2 frame (the last frame) to 0, and transmits the PPDU carrying the data 1 frame and the data 2 frame based on the negotiated retransmission parameter.

The AP successfully transmits a data 1 frame to the STA and receives an Ack frame or a BA frame in response from the STA. However, the first data 2 frame transmitted by the AP fails to be transmitted due to obstruction or interference, and the STA is unable to reply with an Ack frame or a BA frame. Subsequent to waiting for the PIFS, the AP transmits a second data 2 frame (a retransmitted data 2 frame), and the retransmitted data 2 frame is successfully transmitted because the occlusion or interference has been eliminated at this time, and the AP receives an Ack frame or a BA frame.

The STA learns from the MP field in the HRL Control field of the data 1 frame that the AP is about to transmit a data 2 frame. During the process of receiving the PPDU carrying the data 2 frame, although the MAC layer of the STA receives the PHY-RXSTART.indication primitive within the RxPHYStartDelay interval, the STA was unable to parse out the correct data 2 frame, and thus determines that the reception of the first data 2 frame has failed. Thus, the STA infers that the AP will perform a retransmission. The STA also knows that the PPDU carrying the data 2 frame is the same as the PPDU carrying the data 1 frame, and thus the STA estimates the end time of the PPDU carrying the first data 2 frame and the start time of the PPDU carrying the retransmitted data 2 frame. To avoid a hidden station from occupying the channel and interfering with the PPDU carrying the second data 2 frame (the retransmission PPDU), the STA broadcasts a first frame, which is a VAck frame or a CTS frame, during the time period between the two times. The first frame is used for instructing the hidden station to set an NAV to prevent the hidden station from using the channel, thereby improving the success rate of receiving the retransmission PPDU.

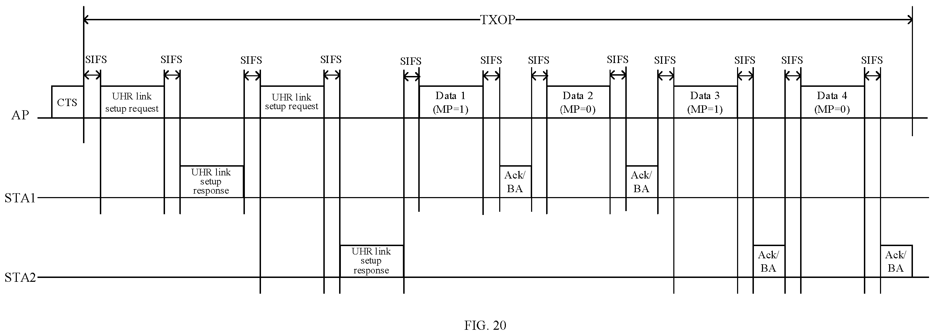

FIG. 20 illustrates a schematic diagram of a retransmission method according to some embodiments of the present disclosure. In these embodiments, the transmitting station (the first station) is an AP, the receiving stations (the second stations) are STA1 and STA2, and STA1 and STA2 are both associated with the AP. The AP acquires a TXOP by transmitting a CTS frame and reserves the channel for a certain period of time by setting an NAV value.

Within this TXOP, the AP needs to transmit an MSDU with high reliability requirements to STA1 and STA2, and each MSDU is split into two data frames, i.e., a data 1 frame and a data 2 frame, as well as a data 3 frame and a data 4 frame, as illustrated in FIG. 20. To enhance the transmission reliability of the data frames, the AP transmits a first UHR link setup request frame to negotiate the corresponding retransmission parameter with STA1, and STA1 replies with a UHR link setup response frame of which the Status Code subfield takes a value of 0, indicating agreement. Subsequently, the AP transmits a second UHR link setup request frame to negotiate the corresponding retransmission parameter with STA2, and STA2 replies with a UHR link setup response frame of which the Status Code subfield takes a value of 0, indicating agreement.

In the remaining TXOPs, the AP sets the MP field in the HRL Control field of the data 1 frame (not the last frame) transmitted to STA1 to 1, sets the MP field in the HRL Control field of the data 2 frame (the last frame) transmitted to STA1 to 0, and transmits the PPDU carrying the data 1 frame and the data 2 frame based on the negotiated retransmission parameters. Then, the AP sets the MP field in the HRL Control field of the data 3 frame (not the last frame) transmitted to STA2 to 1, sets the MP field in the HRL Control field of the data 4 frame (the last frame) transmitted to STA2 to 0, and transmits the PPDU carrying the data 3 frame and the data 4 frame based on the negotiated retransmission parameters.

Since no obstruction or interference is present during the transmission process of the above data frames, , the receiving station replies with an Ack frame or a BA frame according to the relevant acknowledgement rules.

In summary, in the method according to these embodiments, the retransmission parameter is transmitted after an initial frame within the TXOP, and the retransmission parameter is a parameter used for transmitting a designated frame within the TXOP. Subsequent to receiving the retransmission parameter, the second station, as a receiving station, determines whether the first station performs a retransmission based on the retransmission parameter, and acquires information related to frames associated with the retransmission.

Furthermore, in the method according to these embodiments, at least one first frame broadcast by the second station is received, and first frame is used for instructing another station around the second station to set an NAV to preventing the another station from using the channel, thereby improving the success rate of receiving the retransmission PPDU.

In the above embodiments, the first frame is a VAck frame or a CTS frame. The VAck frame is a newly defined control frame that is broadcast by the second station (the receiving station) during a time period when the retransmission of PPDU is not interfered, and the VAck frame is used for instructing a hidden station around the receiving station to set an NAV to prevent the hidden station from using the channel. The PPDU carrying the VAck frame may be a non-HT PPDU (non-HT PPDU) or another type of PPDU.

In some embodiments, the first frame (VAck frame) has the following two formats.
(1) The first frame includes a sixth subfield, wherein the six subfield is used to indicate a frame subtype.

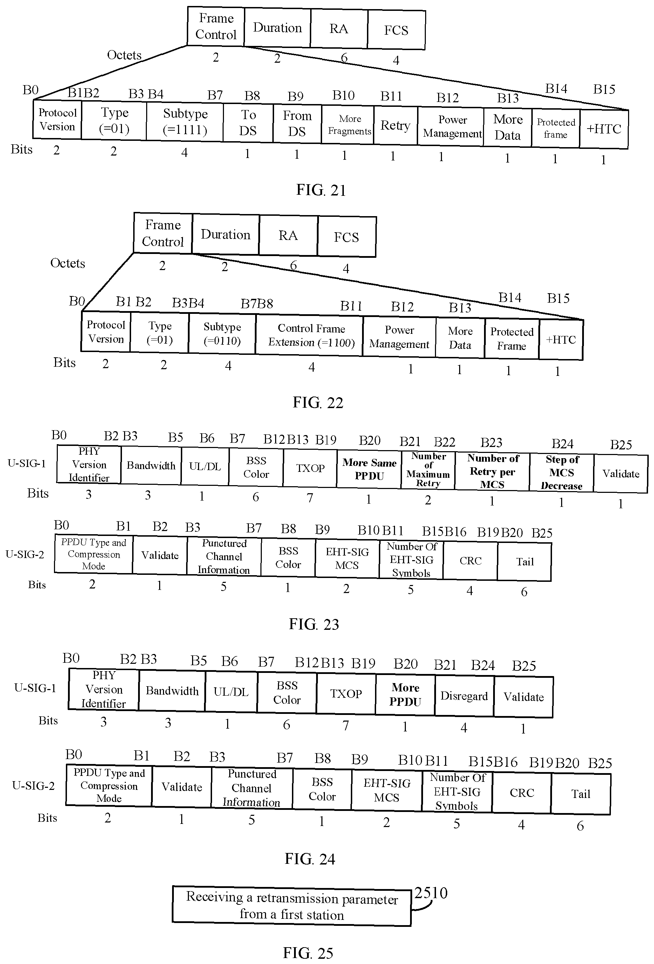

FIG. 21 illustrates a schematic diagram of a control frame (VAck frame) format according to some embodiments of the present disclosure. The VAck frame format includes at least one of: a Frame Control field, a Duration field, an RA field, or an FCS field.

The Frame Control field occupies two octets, the Duration field occupies two octets, the RA field occupies six octets, and the FCS field occupies four octets.

The Frame Control field is used to indicate information such as the type of the MAC frame.

The Duration field is used to indicate the duration of the TXOP to be protected, with a value of the length from the end time of the VAck frame to the end time of the TXOP, in a unit of microseconds.

The RA field is used to indicate a receiving address, which is a broadcast address herein.

The FCS field is used to indicate a frame check sequence.

With respect to the Frame Control field, the format of the Frame Control field includes at least one of: a Protocol Version subfield, a Type subfield, a Subtype subfield, a To DS subfield, a From DS subfield, a More Fragments subfield, a Retry subfield, a Power Management subfield, a More Data subfield, a Protected Frame subfield, or a +HTC subfield. In the embodiments of the present disclosure, subfields can be referred to simply as fields.

The Protocol Version subfield occupies a total of two bits from B0 to B1, the Type subfield occupies a total of two bits from B2 to B3, the Subtype subfield occupies a total of four bits from B4 to B7, the To DS subfield occupies a total of one bit at B8, the From DS subfield occupies a total of one bit at B9, the More Fragments subfield occupies a total of one bit at B10, the Retry subfield occupies a total of one bit at B11, the Power Management subfield occupies a total of one bit at B12, the More Data subfield occupies a total of one bit at B13, the Protected Frame subfield occupies a total of one bit at B14, and the +HTC subfield occupies a total of one bit at B15.

The Protocol Version subfield is used to indicate the version of the MAC frame. For example, Protocol Version subfield takes a value of 0 to indicate a basic version, and takes a value of 1 to indicate a PV1 MAC frame version.

The Type subfield is used to indicate a frame type. For example, the Type subfield takes a value of 1 (01 in binary) to indicates that the frame type is a control frame.

The Subtype subfield is used to indicate a frame subtype. For example, the Subtype subfield takes a value of 15 (1111 in binary) to indicate that the frame subtype is a VAck frame. Illustratively, the sixth subfield is a Subtype subfield.

The To DS subfield and the From DS subfield are used to indicate the transmission direction of a frame.

The More Fragments subfield is used to indicate whether a fragment is a non-last fragment after segmentation of the same MSDU or MPDU. For example, the More Fragments subfield takes a value of 1 to indicates "Yes", and takes a value of 0 to indicate "No".

The Retry subfield is used to indicate whether a frame is a retransmission frame. For example, the Retry subfield takes a value of 1 to indicate "Yes", and takes a value of 0 to indicate "No". In a VAck frame, the value of the Retry subfield is always 0, indicating that the VAck frame is not a retransmission frame.

The Power Management subfield is used to indicate a power management mode.

The More Data subfield is used by the AP to indicate to the STA in a power-saving mode whether more cached data waiting to be transmitted to the STA are present. For example, the More Data subfield takes a value of 1 to indicate "Yes", and takes a value of 0 to indicate "No".

The Protected Frame subfield is used to indicate whether a frame body is encrypted. For example, the Protected Frame subfield takes a value of 1 to indicate "Yes", and takes a value of 0 to indicate "No". In a VAck frame, the value of the Protected Frame subfield is always 0, indicating that the frame body is not encrypted.

The +HTC subfield is used to indicate whether the HTC field is included in the frame header. For example, the +HTC subfield takes a value of 1 to indicate "Yes", and takes a value of 0 to indicate "No". In a VAck frame, the value of the +HTC subfield is always 0, indicating that the HTC field is not included.

The control frame format is an illustrative possible example. In different embodiments or designs, the above field may be changed in at least one of the design aspects, such as the position of the field within the frame, the arrangement order with other fields, the number of occupied octets, the number of occupied bits, the element name, and the field name, which is not limited in the present disclosure.

(2) The first frame includes a sixth subfield and a seventh subfield. The sixth subfield is used to indicate a frame subtype, and the seventh subfield is used to indicate a subtype of a control frame extension.

FIG. 22 illustrates a schematic diagram of a control frame (VAck frame) format according to some embodiments of the present disclosure. The VAck frame format includes at least one of: a Frame Control field, a Duration field, an RA field, or an FCS field.

The Frame Control field occupies two octets, the Duration field occupies two octets, the RA field occupies six octets, and the FCS field occupies four octets.

With respect to the Frame Control field, the format of the Frame Control field includes at least one of: a Protocol Version subfield, a Type subfield, a Subtype subfield, a Control Frame Extension subfield, a Power Management subfield, a More Data subfield, a Protected Frame subfield, or a +HTC subfield. In the embodiments of the present disclosure, the subfield is referred to as a field for short.

The Protocol Version subfield occupies a total of two bits from B0 to B1, the Type subfield occupies a total of two bits from B2 to B3, the Subtype subfield occupies a total of four bits from B4 to B7, the Control Frame Extension subfield occupies a total of four bits from B8 to B11, the Power Management subfield occupies a total of one bit at B12, the More Data subfield occupies a total of one bit at B13, the Protected Frame subfield occupies a total of one bit at B14, and the +HTC subfield occupies a total of one bit at B15.

The Type subfield is used to indicate a frame type. For example, the Type subfield takes a value of 1 (01 in binary) to indicate that the frame type is a control frame.

The Subtype subfield is used to indicate a frame subtype. For example, the Subtype subfield takes a value of 6 (0110 in binary) to indicate that the frame subtype is a control frame extension. Illustratively, the sixth subfield is a Subtype subfield.

The Control Frame Extension subfield is used to indicate the subtype of the control frame extension, with a value of an integer from 12 to 15. For example, the Control Frame Extension subfield takes a value of 12 (1100 in binary) to indicate that the subtype of the control frame extension is a VAck frame. Illustratively, the seventh subfield is a Control Frame Extension subfield.

For the meanings of the other fields, reference may be made the embodiment in FIG. 21, which are not elaborated herein any further.

The above control frame format is an illustrative possible example. In different embodiments or designs, the field may be changed in at least one of the design aspects, such as the position of the field in the frame, the arrangement order with other fields, the number of occupied octets, the number of occupied bits, the element name, and the field name, which is not limited in the present embodiments.

In addition to being transmitted in the form of the HRL Control field in the MAC frame of the MAC layer, the retransmission parameter in the aforementioned embodiments may also be transmitted in the form of the User Signal (U-SIG) field in the PPDU of the PHY layer in some embodiments.

In some embodiments, the retransmission parameter is carried in a MAC frame of the MAC layer or in a PPDU of the PHY layer.

FIG. 23 illustrates a schematic diagram of a format of the U-SIG field according to some embodiments of the present disclosure. The format of the U-SIG field includes a format of a first part (U-SIG-1) and a format of a second part (U-SIG-2).

The format of the first part (U-SIG-1) includes at least one of: a PHY Version Identifier field, a Bandwidth field, an Uplink (UL)/Downlink (DL) field, a Basic Service Set (BSS) Color field, a TXOP field, a More Same PPDU field, a Number of Maximum Retry field, a Number of Retry per MCS field, a Step of MCS Decrease field, or a Validate field.

The PHY Version Identifier field occupies a total of three bits from B0 to B2, the Bandwidth field occupies a total of three bits from B3 to B5, the UL/DL field occupies a total of one bit at B6, the BSS Color field occupies a total of six bits from B7 to B12, the TXOP field occupies a total of seven bits from B13 to B19, the More Same PPDU field occupies a total of one bit at B20, the Number of Maximum Retry field occupies a total of two bits from B21 to B22, the Number of Retry per MCS field occupies a total of one bit at B23, the Step of MCS Decrease field occupies a total of one bit at B24, and the Validate field occupies a total of one bit at B25.

The More Same PPDU field is used to indicate whether a next PPDU is to be transmitted after a current frame is acknowledged and one SIFS elapses. The PPDU carrying the next frame is the same as the PPDU carrying the current frame, except the PSDU content. Illustratively, the More Same PPDU takes a value of 1 to indicate "YES" and takes a value of 0 to indicate "NO".

The Number of Maximum Retry field is used to indicate the maximum number of retransmissions, and its value represents the number of retransmissions.

The Number of Retry per MCS field is used to indicate the number of consecutive retransmissions using the same MCS, and its value represents the number of consecutive retransmissions using the same MCS, or the number of consecutive retransmissions using the same MCS minus one. For example, in a case where the value of the Number of Retry per MCS field is represented by three bits, if the number of consecutive retransmissions using the same MCS is 1, the value is 001; otherwise, the value is 000.

The Step of MCS Decrease field is used to indicate the decreased value of MCS for each retransmission, and its value is the decreased value of MCS. When the value of the Step of MCS Decrease field decreases to zero, it should remain at zero and does not change any further.

The format of the second part (U-SIG-2) includes at least one of: a PPDU Type and Compression Mode field, a Validate field, a Punctured Channel Information field, a BSS Color field, an Enhanced High Throughput Signal (EHT-SIG) MCS field, a Number Of EHT-SIG Symbols field, a Cyclic Redundancy Check (CRC) field, or a Tail field.

The PPDU Type and Compression Mode field occupies a total of two bits from B0 to B1, the Validate field occupies one bit at B2, the Punctured Channel Information field occupies a total of five bits from B3 to B7, the BSS Color field occupies one bit at B8, the EHT-SIG MCS field occupies a total of two bits from B9 to B10, the Number Of EHT-SIG Symbols field occupies a total of five bits from B11 to B15, the CRC field occupies four bits from B16 to B19, and the Tail field occupies a total of six bits from B20 to B25.

The above U-SIG field format is an illustrative possible example. In different embodiments or designs, the field may be change in at least one of the design aspects, such as the position of the field in the frame, the arrangement order with other fields, the number of occupied octets, the number of occupied bits, the element name, and the field name, which is not limited in the present embodiments.

FIG. 24 illustrates a schematic diagram of a U-SIG field according to some embodiments of the present disclosure. The U-SIG field format includes a format of a first part (U-SIG-1) and a format of a second part (U-SIG-2).

The format of the first part (U-SIG-1) includes at least one of: a PHY Version Identifier field, a Bandwidth field, a UL/DL Link field, a BSS Color field, a TXOP field, a More PPDU field, a Disregard field, or a Validate field.

The PHY Version Identifier field occupies a total of three bits from B0 to B2, the Bandwidth field occupies a total of three bits from B3 to B5, the UL/DL field occupies a total of one bit at B6, the BSS Color field occupies a total of six bits from B7 to B12, the TXOP field occupies a total of seven bits from B13 to B19, the More PPDU field occupies a total of one bit at B20, the Disregard field occupies a total of four bits from B21 to B24, and the Validate field occupies a total of one bit at B25.

The More PPDU field is used to indicate whether a next PPDU is to be transmitted after a current frame is acknowledged and one SIFS elapses. For example, the More PPDU field takes a value of 1 to indicate "YES" and takes a value of 0 to indicate "NO".

The format of the second part (U-SIG-2) includes at least one of: a PPDU Type and Compression Mode field, a Validate field, a Punctured Channel Information field, a BSS Color field, an EHT-SIG MCS field, a Number Of EHT-SIG Symbols field, a CRC field, or a Tail field.

The PPDU Type and Compression Mode field occupies a total of two bits from B0 to B1, the Validate field occupies one bit at B2, the Punctured Channel Information field occupies a total of five bits from B3 to B7, the BSS Color field occupies one bit at B8, the EHT-SIG MCS field occupies a total of two bits from B9 to B10, the Number Of EHT-SIG Symbols field occupies a total of five bits from B11 to B15, the CRC field occupies four bits from B16 to B19, and the Tail field occupies a total of six bits from B20 to B25.

The above U-SIG field format is an illustrative possible example. In different embodiments or designs, the field may be change in at least one of the design aspects, such as the position of the field in the frame, the arrangement order with other fields, the number of occupied octets, the number of occupied bits, the element name, and the field name, which is not limited in the present embodiment.

FIG. 25 illustrates a flowchart of a retransmission method according to some embodiments of the present disclosure. The method is performed by a second station, and the method includes the following processes.

**In process 2510,** a retransmission parameter transmitted by a first station is received.

The retransmission parameter is a parameter related to a retransmission by the first station.

In some embodiments, receiving the retransmission parameter from the first station includes: receiving a current PPDU from the first station; wherein the current PPDU includes a current frame and the retransmission parameter, wherein the retransmission parameter is associated with a next PPDU, the next PPDU being a PPDU carrying the next frame.

In some embodiments, the retransmission parameter includes at least one of a first parameter, a second parameter, or a third parameter;
wherein the first parameter is used to indicate whether a next PPDU is to be transmitted after a current frame is acknowledged and one SIFS elapses, wherein the next PPDU is the same as a current PPDU except for content of a PSDU;
the second parameter is used to indicate the maximum number of retransmissions; and
the third parameter is used to indicate an MCS used in the case of retransmission, and the third parameter includes the number of consecutive retransmissions using the same MCS, and/or a decreased value of MCS for each retransmission.

In some embodiments, the retransmission parameter is carried in a first field.

In some embodiments, the first field is an HRL Control field.

In some embodiments, the first parameter occupies at least one first subfield in the first field; the second parameter occupies at least one second subfield in the first field; and the third parameter occupies at least one third subfield in the first field.

In some embodiments, the retransmission parameter is carried in a second field, wherein the second field is used to indicate whether a next PPDU is to be transmitted after a current frame is acknowledged and one SIFS elapses.

In some embodiments, the second field is an HRL Control field.

In some embodiments, the second parameter occupies at least one second subfield in the second field; and the third parameter occupies at least one third subfield in the second field.

In some embodiments, in a case where the first subfield takes a first value, the next PPDU is transmitted based on the retransmission parameter; and in a case where the first subfield takes a second value, the next PPDU is transmitted based on a parameter other than the retransmission parameter.

In some embodiments, in a case where the first subfield takes the first value and a retransmission occurs, the next PPDU is a retransmission PPDU transmitted based on the second parameter and the third parameter; and/or,
in a case where the first subfield takes the first value, and the second station fails to successfully receive the next PPDU, the retransmission PPDU of the next PPDU is transmitted based on the second parameter and the third parameter;
wherein retransmission PPDU of the next PPDU is a PPDU that carries the next frame that is retransmitted, and identifying a retransmission means that the next PPDU has not been successfully received and need to be retransmitted.

In some embodiments, receiving the retransmission parameter from the first station includes: receiving the retransmission parameter from the first station after an initial frame of a TXOP; wherein the retransmission parameter is a parameter used for transmitting a designated frame within the TXOP.

In some embodiments, the retransmission parameter includes at least one of a second parameter, a third parameter, a fourth parameter, a fifth parameter, a sixth parameter, a seventh parameter, an eighth parameter, or a ninth parameter;
wherein the second parameter is used to indicate the maximum number of retransmissions;
the third parameter is used to indicate an MCS used in the case of retransmission, and the third parameter includes a number of consecutive retransmissions using the same MCS, and/or a decreased value of MCS for each retransmission;
the fourth parameter is used to indicate whether a next PPDU is to be transmitted after a current frame is acknowledged and one SIFS elapses, wherein the next PPDU is a PPDU carrying the next frame;
the fifth parameter is used to indicate a PHY version of a PPDU;
the sixth parameter is used to indicate a first time interval, wherein the first time interval is a time interval from a start time of one PPDU to reporting of a first primitive to a MAC layer, wherein the first primitive is a primitive indicating that the physical layer has received a valid PPDU;
the seventh parameter is used to indicate the duration of a PPDU;
the eighth parameter is used to indicate the length of a PSDU;
the ninth parameter is used to indicate the MCS used for transmitting a PPDU.

In some embodiments, the fourth parameter is carried in a third field.

In some embodiments, the third field is an HRL Control field.

In some embodiments, the fourth parameter occupies at least one fourth subfield in the third field.

In some embodiments, the third field is carried in a last frame within the TXOP, and the fourth subfield takes a third value; and the third field is carried in a frame other than the last one within the TXOP, and the fourth subfield takes a fourth value.

In some embodiments, other retransmission parameters other than the fourth parameter are carried in a first request frame.

In some embodiments, other retransmission parameters other than the fourth parameter each occupy at least one subfield in the first request frame.

In some embodiments, other retransmission parameters other than the fourth parameter are carried in a first response frame.

In some embodiments, other retransmission parameters other than the fourth parameter each occupy at least one subfield in the first response frame.

In some embodiments, the first response frame includes a fifth subfield, wherein the fifth subfield is used to indicate a response result to the first request frame.

In some embodiments, in a case where the fifth subfield takes a fifth value, the response result indicates success; in a case where the fifth subfield takes a sixth value, the response result indicates a rejection; in a case where the fifth subfield takes the seventh value, the response result indicates a rejection with a suggestion parameter provided; wherein the suggested parameter includes at least one of the second parameter, the third parameter, the fifth parameter, the sixth parameter, the seventh parameter, the eighth parameter, or the ninth parameter.

For specific implementation details of the above retransmission method, reference may be made to the embodiments illustrated in FIG. 8, which are not elaborated herein any further.

In summary, in the method according to these embodiments, the retransmission parameter transmitted by the first station is received, and the retransmission parameter is a parameter related to the retransmission by the first station. Subsequent to receiving the retransmission parameter, the second station, as the receiving station, determines whether the first station performs a retransmission based on the retransmission parameter, and acquires information about frames related to the retransmission.

In the method according to these embodiments, the retransmission parameter is carried in at least one of the first field, the second field, the third field, the first request frame, or the first response frame to indicate the retransmission method under different situations, thereby improving the accuracy of retransmission.

In the method according to these embodiments, the MCS used for retransmission is flexibly adjusted using the third subfield, thereby enhancing the retransmission efficiency.

In the method according to these embodiments, according to the implementation based on PPDU granularity (Per PPDU), each PPDU carries a retransmission parameter when the first station transmits a PPDU, thereby ensuring that there is a corresponding retransmission parameter for each PPDU and improving the flexibility of retransmission.

In the method according to these embodiments, according to the implementation based on TXOP granularity (Per TXOP), the first station transmits the retransmission parameter once within each TXOP period, thereby reducing the number of transmissions and saving power for the first station.

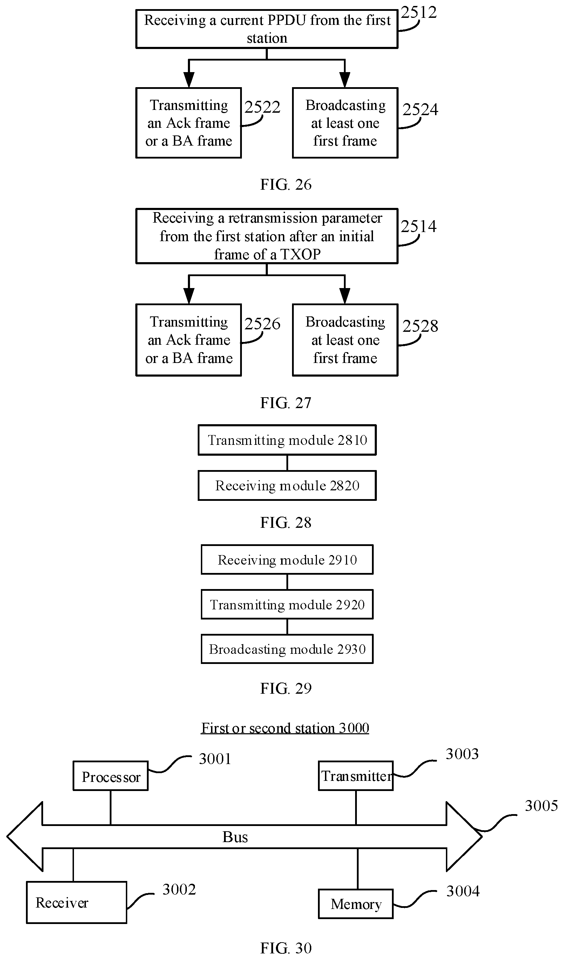

Regarding the implementation based on PPDU granularity (Per PPDU), FIG. 26 illustrates a flowchart of a retransmission method according to some embodiments of the present disclosure. This method is performed by a second station, and the method includes the following processes.

**In process 2512,** a current PPDU transmitted by the first station is received.

For specific implementation details, reference may be made to process 2510 in the embodiments of FIG. 25, which are not elaborated herein any further.

**In process 2522,** an Ack frame or a BA frame is transmitted.

In some embodiments, transmitting the Ack frame or the BA frame includes: transmitting the Ack frame or the BA frame in a case where the first subfield takes a second value.

In some embodiments, transmitting the Ack frame or the BA frame includes: transmitting the Ack frame or the BA frame includes in a case where the first subfield takes a first value and the PPDU is successfully received; and/or transmitting the Ack frame or the BA frame includes in a case where the first subfield takes the first value and no retransmission has occurred.

**In process 2524,** at least one first frame is broadcast.

The first frame is used for instructing another station around the second station to set an NAV. The first frame is a frame transmitted within a first time period, wherein the first time period is determined based on the retransmission parameter. The first time period is a time period outside a time period when the retransmission PPDU is interfered with.

In some embodiments, the Time field in the first frame is set based on the retransmission parameter, and the Time field is used for setting the NAV.

In some embodiments, broadcasting at least one first frame includes: broadcasting the at least one first frame in a case where the first subfield takes the first value and the second station fails to successfully receive the next PPDU; and/or broadcasting the at least one first frame in a case where the first subfield takes the first value and the second station has identified a retransmission.

In some embodiments, in a case where the MAC layer of the second station does not receive a first primitive within a first delay interval corresponding to one PPDU, the first time period is a time period from the end time of the first delay interval to the start time of the next retransmission PPDU;
in a case where the MAC layer of the second station receives a first primitive within the first delay interval corresponding to one PPDU, the first time period is a time period from the end time of one PPDU to the start time of the next retransmitted PPDU;
wherein the first delay interval represents a reception delay of the physical layer; the first delay interval is a time interval within the transmission time period corresponding to one PPDU; and the first primitive is a primitive indicating that the physical layer has received a valid PPDU.

In summary, in the method according to these embodiments, the current PPDU transmitted by the first station is received, wherein the current PPDU includes the current frame and the retransmission parameter, wherein the retransmission parameter is a parameter associated with the next PPDU, the next PPDU being a PPDU carrying the next frame. Subsequent to receiving the retransmission parameter associated with the next PPDU, the second station, as the receiving station, determines whether the first station performs a retransmission based on the retransmission parameter, and acquires information about frames related to the retransmission.

In the method according to these embodiments, at least one first frame is broadcast, wherein the at least one first frame is used for instructing another station around the second station to set an NAV to preventing the another station from using the channel, thereby improving the success rate of receiving the retransmission PPDU.

Regarding the implementation based on TXOP granularity (Per TXOP), FIG. 27 illustrates a flowchart of a retransmission method according to some embodiments of the present disclosure. This method is performed by a second station, and the method includes the following processes.

**In process 2514,** a retransmission parameter transmitted by the first station is received after an initial frame of a TXOP.

For specific implementation details, reference may be made to process 2510 in the embodiments of FIG. 25, which are not elaborated herein any further.

**In process 2526,** an Ack frame or a BA frame is transmitted.

The fifth subfield takes a fifth value or a seventh value.

In some embodiments, transmitting the Ack frame or the BA frame includes: transmitting the Ack frame or the BA frame in a case where the fourth subfield takes the ninth value and a PPDU is successfully received; and/or transmitting the Ack frame or the BA frame in a case where the fourth subfield takes a ninth value and no retransmission has occurred; wherein the fourth subfield is a subfield occupied by the fourth parameter in the third field.

**In process 2528,** at least one first frame is broadcast.

The fifth subfield takes the fifth value or the seventh value. The first frame is used for instructing another station around the second station to set the NAV, and the first frame is transmitted within a first time period. The first time period is determined based on the retransmission parameter, and the first time period is a time period outside the time period when the retransmission PPDU is interfered with.

In some embodiments, the Time field in the first frame is set based on the retransmission parameter, and the Time field is used for setting the NAV.

In some embodiments, broadcasting the at least one first frame includes: broadcasting the at least one first frame in a case where the fourth subfield takes the ninth value and the next PPDU is not successfully received; and/or broadcasting the at least one first frame in a case where the fourth subfield takes the ninth value and a retransmission has been identified; wherein the fourth subfield is a subfield occupied by the fourth parameter in the third field.

In some embodiments, in a case where the MAC layer of the second station does not receive a first primitive within a first delay interval corresponding to one PPDU, the first time period is a time period from the end time of the first delay interval to the start time of the next retransmission PPDU;
in a case where the MAC layer of the second station receives a first primitive within the first delay interval corresponding to one PPDU, the first time period is a time period from the end time of one PPDU to the start time of the next retransmitted PPDU;
wherein the first delay interval represents a reception delay of the physical layer; the first delay interval is a time interval within the transmission time period corresponding to one PPDU; and the first primitive is a primitive indicating that the physical layer has received a valid PPDU.

In summary, in the method according to these embodiments, the retransmission parameter transmitted by the first station is received after the initial frame within the TXOP, wherein the retransmission parameter is a parameter used for transmitting a designated frame within the TXOP. Subsequent to receiving the retransmission parameter, the second station, as the receiving station, determines whether the first station performs a retransmission based on the retransmission parameter, and acquires information about frames related to the retransmission.

In the method according to these embodiments, at least one first frame is broadcast, and the at least one first frame is used for instructing another station around the second station to set an NAV to preventing the another station from using the channel, thereby improving the success rate of receiving the retransmission PPDU.

In some embodiments, the first frame includes a sixth subfield, wherein the sixth subfield is used to indicate a frame subtype.

In some embodiments, the first frame includes a sixth subfield and a seventh subfield. The sixth subfield is used to indicate a frame subtype, and the seventh subfield is used to indicate a subtype of a control frame extension.

In some embodiments, the first frame is a VAck frame or a CTS frame.

In some embodiments, the retransmission parameter is carried in a MAC frame of the MAC layer or in a PPDU of the PHY layer.

In the above embodiments, processes with the same serial number may be considered as the same process. The embodiments corresponding to FIG. 8, the embodiments corresponding to FIG. 14, the embodiments corresponding to FIG. 18, the embodiments corresponding to FIG. 25, the embodiments corresponding to FIG. 26, and the embodiments corresponding to FIG. 27 may be implemented individually or in combination, which is not limited in the present disclosure.

FIG. 28 illustrates a block diagram of a first retransmission apparatus according to some embodiments of the present disclosure. The apparatus may be implemented as a first retransmission apparatus or as part of the first retransmission apparatus through software, hardware, or a combination thereof. The apparatus includes a transmitting module 2810 and a receiving module 2820.

The transmitting module 2810 is configured to transmits a retransmission parameter; wherein the retransmission parameter is a parameter related to a retransmission by the first retransmission apparatus.

In a possible design of these embodiments, the retransmission parameter include a parameter related to the retransmission by the first retransmission apparatus that is transmitted before the retransmission frame is transmitted.

In a possible design of these embodiments, the retransmission parameter includes a parameter related to the retransmission by the first retransmission apparatus, wherein the parameter is carried in a PPDU prior to the retransmission PPDU. The retransmission PPDU is a PPDU that carries the retransmission frame.

In a possible design of these embodiments, the retransmission parameter include a parameter used by a second retransmission apparatus to identify whether the first retransmission apparatus will perform a retransmission.

In a possible design of these embodiments, in the case of retransmission, the retransmission parameter includes a parameter related to determination of the duration of the retransmitted PPDU.

In a possible design of these embodiments, the apparatus may be implemented in the following two ways:
an implementation based on PPDU granularity (Per PPDU); and
an implementation based on TXOP granularity (Per TXOP).

In a possible design of these embodiments, the implementation based on Per PPDU means that each PPDU carries a retransmission parameter when the PPDU is transmitted; and the implementation based on Per TXOP means that during each TXOP period, some of the retransmission parameters only need to be transmitted once.

### I. Implementation based on Per PPDU:

In a possible design of these embodiments, the transmitting module 2810 is configured to transmit a current PPDU; wherein the current PPDU includes a current frame and the retransmission parameters, wherein the retransmission parameter is associated with a next PPDU, the next PPDU being a PPDU carrying a next frame.

The first retransmission apparatus informs the second retransmission apparatus of the retransmission parameter associated with the next PPDU in the current PPDU. The first retransmission apparatus is a transmitting device, and the second retransmission apparatus is a receiving device.

In a possible design of these embodiments, the retransmission parameter is transmitted in PPDU granularity, with all retransmission parameters carried in each PPDU.

In a possible design of these embodiments, the retransmission parameter includes a retransmission parameter associated with the next PPDU, or a retransmission parameter associated with the next frame, or a retransmission parameter associated with the PPDU carrying the next frame.

In a possible design of these embodiments, the retransmission parameter includes a parameter used for determining the retransmission process of the next PPDU, or the retransmission parameter includes a parameter used for determining the retransmission process of the next frame, or the retransmission parameter includes a parameter used for determining the retransmission process of the PPDU carrying the next frame.

In a possible design of these embodiments, the retransmission parameter includes at least one of a first parameter, a second parameter, or a third parameter;
wherein first parameter is used to indicate whether a next PPDU is to be transmitted after a current frame is acknowledged and one SIFS elapses, wherein the next PPDU is the same as the current PPDU except for the content of a PSDU;
the second parameter is used to indicate the maximum number of retransmissions; and
the third parameter is used to indicate an MCS used in the case of retransmission, and the third parameter includes the number of consecutive retransmissions using the same MCS, and/or a decreased value of MCS for each retransmission.

In a possible design of these embodiments, the first parameter is a Boolean parameter, and the second parameter and the third parameter are integer parameters.

### Transmission mode for retransmission parameter:

(1) In a possible design of these embodiments, the retransmission parameter is carried in a first field.

In some embodiments, the first field is an HRL Control field.

The HRL Control field is defined to transmit a retransmission parameter, and the HRL Control field is a variant type of the A-Control field within the HT Control field located at the header of the MAC frame.

FIG. 9 illustrates a schematic diagram of an HRL control type format of the A-Control field according to some embodiments of the present disclosure. The format includes at least one of: a Control ID field or a Control Information field.

The Control ID field occupies a total of four bits from B0 to B3, while the Control Information field occupies a total of 11 bits from B4 to B14.

The Control ID field is used to indicate a variant type of the A-Control field, with a value of any integer from 10 to 14. For example, the Control ID field takes a value of 10 to indicate that the variant type is the HRL control type (HRL Control field).

The Control Information field contains parameters used for enhancing link reliability.

With respect to the Control Information field, the format of the Control Information field includes at least one of: a More Same PPDU field, a Number of Maximum Retry field, a Number of Retry per MCS field, or a Step of MCS Decrease field. In the embodiments of the present disclosure, the subfield and the field have the same meaning.

The More Same PPDU field occupies one bit, the Number of Maximum Retry field occupies four bits, the Number of Retry per MCS field occupies three bits, and the step of MCS Decrease field occupies three bits.

The More Same PPDU field is used to indicate whether a next PPDU is to be transmitted after a current frame is acknowledged and one SIFS elapses, and the next PPDU is the same as the PPDU carrying the current frame, except for the PSDU content. For example, the More Same PPDU field takes a value of 1 to indicate "YES", and takes a value of 0 to indicate "NO".

Illustratively, the second retransmission apparatus receives an i^{th} data frame, and the More Same PPDU field in the i^{th} data frame takes a value of 1, indicating that the first retransmission apparatus will transmit a PPDU carrying an (i+1)^{th} data frame. However, in a case where the second retransmission apparatus does not receive the PPDU carrying the (i+1)^{th} data frame, the second retransmission apparatus infers that the first retransmission apparatus will retransmit the (i+1)^{th} data frame.

In a case where the second retransmission apparatus receives the i^{th} data frame and the More Same PPDU field in the i^{th} data frame takes a value of 0, indicating that the first retransmission apparatus will not transmit a PPDU carrying the (i+1)^{th} data frame, that is, the i^{th} data frame is the last frame, the second retransmission apparatus infers that the first station will not perform a retransmission even if the second retransmission apparatus does not receive the (i+1)^{th} data frame.

The Number of Maximum Retry field is used to indicate the maximum number of retransmissions, and its value represents the number of retransmissions.

The Number of Retry per MCS field is used to indicate the number of consecutive retransmissions using the same MCS, and its value represents the number of consecutive retransmissions using the same MCS, or the number of consecutive retransmissions using the same MCS minus one. For example, in a case where the value of the Number of Retry per MCS field is represented by three bits, if the number of consecutive retransmissions using the same MCS is 1, the value is 001; or, the value is 000. In a case where the value of the Number of Retry per MCS field is the number of consecutive retransmissions using the same MCS minus one, the value may be represented by more numbers, starting from 000, thereby improving the utilization ratio.

The Step of MCS Decrease field is used to indicate the decreased value of MCS for each retransmission, and its value is the decreased value of MCS. When the value of the Step of MCS Decrease field decreases to zero, it should remain at zero and does not change any further.

The above HRL control type format of the A-Control field is an illustrative possible example. In different embodiments or designs, the A-Control field may be changed in at least one of the design aspects, such as the position of the field in the frame, the arrangement order with other fields, the number of occupied octets, the number of occupied bits, the element name, and the field name, which is not limited in the present embodiments.

In a possible design of these embodiments, the first parameter occupies at least one first subfield in the first field; the second parameter occupies at least one second subfield in the first field; and the third parameter occupies at least one third subfield in the first field.

Illustratively, the first parameter occupies More Same PPDU fields; the second parameter occupies the Number of Maximum Retry field; and the third parameter occupies the Number of Retry per MCS field and Step of MCS Decrease field.

In a possible design of these embodiments, only the same MCS is used for consecutive retransmission, and the value of the Number of Retry per MCS field is the number of consecutive retransmissions using the same MCS or the number of consecutive retransmissions using the same MCS minus one. The Step of MCS Decrease field is not used, or the Step of MCS Decrease field takes a value of 0, or each bit in this field takes a value of 0.

In some embodiments, the MCS value is decreased for each retransmission, and the value of the Step of MCS Decrease field is the decreased value of MCS. The Number of Retry per MCS field is not used, or the Number of Retry per MCS field takes a value of 0, or each bit in the field takes a value of 0.

In a possible design of these embodiments, the same MCS is used for consecutive retransmissions. After retransmissions are performed for the number of times corresponding to the value of the Number of Retry per MCS field, the MCS value is decreased based on the value corresponding to the Step of MCS Decrease field to continue retransmissions. For example, the same MCS (with a value of six) is used for consecutive retransmissions first, the value corresponding to the Number of Retry per MCS field is four, and the value corresponding to the Step of MCS Decrease field is one, that is, after four times of retransmissions are performed, the MCS value is decreased, with a decrease value of one each time, to continue retransmissions according to the values of MCS being five, four, three, two, one, and zero.

(2) In a possible design of these embodiments, the retransmission parameter is carried in a second field. The second field is used to indicate whether a next PPDU is to be transmitted after a current frame is acknowledged and one SIFS elapses.

In a possible design of these embodiments, the second field is an HRL Control field.

FIG. 10 illustrates a schematic diagram of the HRL control type format of an A-Control field according to some embodiments of the present disclosure. The format includes at least one of: a Control ID field or a Control Information field.

The Control ID field occupies a total of four bits from B0 to B3, and the Control Information field occupies a total of 10 bits from B4 to B13.

With respect to the Control Information field, the format of the Control Information field includes at least one of the following: a Number of Maximum Retry field, a Number of Retry per MCS field, or a Step of MCS Decrease field.

The Number of Maximum Retry field occupies four bits, the Number of Retry per MCS field occupies three bits, and the Step of MCS Decrease field occupies three bits.

In a possible design of these embodiments, the second parameter occupies at least one second subfield in the second field; and the third parameter occupies at least one third subfield in the second field.

Illustratively, the second parameter occupies the Number of Maximum Retry field; and the third parameter occupies the Number of Retry per MCS field and Step of MCS Decrease field.

Compared with the embodiments illustrated in FIG. 9, the "More Same PPDU field" is not used in this design. Instead, whether a next PPDU is to be transmitted after a current frame is acknowledged and one SIFS elapses is indicated based on whether the header of the MAC frame includes the HRL control type of the A-Control field. If the header of the MAC frame does not include the HRL control type of the A-Control field, the next PPDU is not transmitted, and if the header of the MAC frame includes the HRL control type of the A-Control field, the next PPDU is transmitted, and the next PPDU is the same as the current PPDU except for the content of the PSDU. For the meanings of other fields, reference may be made to the embodiments illustrated in FIG. 9, which are not elaborated herein any further.

The HRL control type format of the A-Control field is an illustrative possible example. In different embodiments or designs, the A-Control field may be changed in at least one of the design aspects, such as the position of the field in the frame, the arrangement order with other fields, the number of occupied octets, the number of occupied bits, the element name, and the field name, which is not limited in the embodiments of the present disclosure.

In a possible design of these embodiments, subsequent to receiving the first parameter in the current PPDU, the second retransmission apparatus identifies whether the next PPDU will be retransmitted. In a case where the second station identifies that the next PPDU be retransmitted, the transmission time position and duration of the retransmission PPDU are determined based on at least one of the Number of Maximum Retry field, the Number of Retry per MCS field, or the Step of MCS Decrease field. The retransmission PPDU is a PPDU used to carry the next frame that is retransmitted, and the retransmission PPDU may be one or more PPDUs following the next PPDU.

Illustratively, the second retransmission apparatus receives a PPDU carrying data 1 frame, and the MCS=6 and the duration of the PPDU is 100 microseconds. Since the HRL Control field indicates a next PPDU is to be transmitted after a current frame is acknowledged and one SIFS, and the duration of the next PPDU is the same as the duration of the current PPDU, the second retransmission apparatus infers that the second station will receive a PPDU carrying a data 2 frame after one SIFS upon the acknowledgement, and the duration of the PPDU is also 100 microseconds.

Next, the second retransmission apparatus receives the next PPDU after SIFS, but the second retransmission apparatus finds a check error subsequent to receiving the next PPDU. Therefore, the second retransmission apparatus determines that the first station has failed to transmit the data 2 frame and will perform a retransmission. Based on the value of the Step of MCS Decrease field being 1, it can be determined that MCS5 will be used for the first retransmission PPDU. In combination with the duration of the PPDU carrying the data 1 frame, it can be inferred that the duration of the first retransmission PPDU is 125 microseconds. Subsequent to waiting for AckTimeout plus PIFS, the second retransmission apparatus receives the first retransmission PPDU, but finds a check error again subsequent to receiving the first retransmission PPDU. Therefore, the second retransmission apparatus determines that the first station will continue to perform a retransmission, and MCS4 will be used for the second retransmission PPDU. In combination with the duration of the PPDU carrying the data 1 frame, it can be inferred that the duration of the second retransmission PPDU is 150 microseconds. Subsequent to waiting for AckTimeout plus PIFS, the second retransmission apparatus receives the second retransmission PPDU and the check is successful. Thus, it is determined that the retransmission process ends, and the first retransmission apparatus will not perform further retransmissions.

In a possible design of these embodiments, in a case where the first subfield takes a first value, the next PPDU is transmitted based on the retransmission parameter; and in a case where the first subfield takes a second value, the next PPDU is transmitted based on a parameter other than the retransmission parameter.

In a possible design of these embodiments, in a case where the first subfield takes the first value and a retransmission occurs, the next PPDU is a retransmission PPDU transmitted based on a second parameter and a third parameter; and/or in a case where the first subfield takes the first value, and the second retransmission apparatus fails to successfully receive the next PPDU, the retransmission PPDU of the next PPDU is transmitted based on the second parameter and the third parameter; wherein the retransmission PPDU of the next PPDU is a PPDU that carries the next frame that is retransmitted. Identifying retransmission means that the next PPDU has not been successfully received and needs to be retransmitted.

In a possible design of these embodiments, after the first retransmission apparatus has successfully competed for a channel and reserved a TXOP for interaction of multiple frames, the first station, when transmitting a non-initial frame, carries the above HRL Control field in the HT Control field of the MAC header of the following types of frames:
individually addressed Management frames other than Action No Ack frames;
individually addressed non-QoS data frames; and
individually addressed QoS Data frames with Normal Ack or Implicit BAR Ack policy.

Illustratively, in a case where the first retransmission apparatus carries the HRL Control field in an individually addressed non-QoS data frame, or carries the HRL Control field in an individually addressed non-QoS Data frame and the More Same PPDU field (first subfield) takes a value of 1 (the first value), the next PPDU is transmitted based on the retransmission parameter; and in a case where the second retransmission apparatus has identified the retransmission, the first retransmission apparatus transmits the retransmission PPDU based on Number of Maximum Retry field, the Number of Retry per MCS field, and the Step of MCS Decrease field in the HRL Control field.

In a case where the first retransmission apparatus does not carry the HRL Control field in the transmitted frame, or the first retransmission apparatus carries the HRL Control field in the transmitted frame but the More Same PPDU field (the first subfield) takes a value of 0 (the second value), the next PPDU does not need to be transmitted based on the retransmission parameter but is transmitted based on another parameter other than the retransmission parameter; and in a case where the second retransmission apparatus has identified the retransmission, the retransmission may not be transmitted based on the retransmission parameter.

In a possible design of these embodiments, the receiving module 2820 is configured to receive an Ack frame or a BA frame from the second retransmission apparatus.

In a possible design of these embodiments, the Ack frame or the BA frame is transmitted by the second retransmission apparatus in a case where the first subfield takes a second value.

Illustratively, in a case where the frame received by the second retransmission apparatus does not include an HRL Control field, or includes an HRL Control field but the More Same PPDU field therein takes a value of 0, the second retransmission apparatus transmits the Ack frame or the BA frame.

In a possible design of these embodiments, the Ack frame or the BA frame is transmitted by the second retransmission apparatus in a case where the first subfield takes the first value and the second retransmission apparatus successfully receives the PPDU; and/or the Ack frame or the BA frame is transmitted by the second retransmission apparatus in a case where the first subfield takes the first value and no retransmission has occurred.

Illustratively, in a case where the frame received by the second retransmission apparatus includes an HRL Control field, or includes an HRL Control field and the More Same PPDU field therein takes a value of 1, if no retransmission has occurred, the second retransmission apparatus transmits the Ack frame or the BA frame.

In a possible design of these embodiments, the receiving module 2820 is configured to receive at least one first frame broadcast by the second retransmission apparatus, wherein first frame is used for instructing another apparatus around the second retransmission apparatus to set an NAV, and the first frame is a frame transmitted within a first time period. The first time period is determined based on the retransmission parameter, and the first time period is a time period outside a time period when the retransmission PPDU is interfered with.

In a possible design of these embodiments, the Time field in the first frame is set based on the retransmission parameter, and the Time field is used for setting the NAV.

In a possible design of these embodiments, the first frame is broadcast by the second retransmission apparatus in a case where the first subfield takes the first value and the second retransmission apparatus fails to successfully receive the next PPDU; and/or the first frame is broadcast by the second retransmission apparatus in a case where the first subfield takes the first value and the second retransmission apparatus has identified a retransmission.

Illustratively, in a case where the frame received by the second retransmission apparatus includes an HRL Control field, or includes an HRL Control field and the More Same PPDU field therein takes a value of 1, if the second retransmission apparatus has identified the retransmission, the second retransmission apparatus estimates the transmission time period of the retransmission PPDU based on the retransmission parameter transmitted by the first retransmission apparatus, and such that the second retransmission apparatus can transmit one or more first frames within a time period (first time period) when the retransmission PPDU is not interfered.

In a possible design of these embodiments, if the MAC layer of the second retransmission apparatus does not receive a first primitive within the first delay interval corresponding to one PPDU, the first time period is a time period from the end time of the first delay interval to the start time of the next retransmission PPDU; and
in a case where the MAC layer of the second retransmission apparatus receives the first primitive within the first delay interval corresponding to one PPDU, the first time period is a time interval from the end time of one PPDU to the start time of the next retransmission PPDU;
wherein the first delay interval represents a reception delay of the physical layer; the first delay interval is a time interval within the transmission time period corresponding to one PPDU; and the first primitive is a primitive indicating that the physical layer has received a valid PPDU.

Illustratively, in a case where the MAC layer of the second retransmission apparatus does not receive the PHY-RXSTART.indication primitive within the RxPHYStartDelay interval corresponding to one PPDU, the first time period is a time period from the end time of the RxPHYStartDelay interval to the start time of the next retransmission PPDU; and
in a case where the MAC layer of the second retransmission apparatus receives the PHY-RXSTART.indication primitive within the RxPHYStartDelay interval corresponding to one PPDU, the first time period is a time period from the end time of the PPDU to the start time of the next retransmission PPDU.

In a possible design of these embodiments, the second retransmission apparatus is in a sleep state or a closed state during the first time period, and wakes up in a time period outside the first time period to receive a frame from the first retransmission apparatus, thereby preventing other stations around the second retransmission apparatus from occupying the channel.

### II. Implementation based on Per TXOP:

In a possible design of these embodiments, the transmitting module 2810 is configured to transmit a retransmission parameter after an initial frame of a TXOP; wherein the retransmission parameter is a parameter used for transmitting a designated frame within the TXOP.

In a possible design of these embodiments, the retransmission parameter is transmitted in TXOP granularity.

In a possible design of these embodiments, the retransmission parameter includes a retransmission parameter associated with transmission of the designated frame within the TXOP.

In a possible design of these embodiments, the retransmission parameter includes sat least one of a second parameter, a third parameter, a fourth parameter, a fifth parameter, a sixth parameter, a seventh parameter, an eighth parameter, or a ninth parameter;
wherein the second parameter is used to indicate the maximum number of retransmissions;
the third parameter is used to indicate an MCS used in the case of retransmission, and the third parameter includes a number of consecutive retransmissions using the same MCS, and/or a decreased value of MCS for each retransmission;
the fourth parameter is used to indicate whether a next PPDU is to be transmitted after a current frame is acknowledged and one SIFS elapses, wherein the next PPDU is a PPDU carrying the next frame;
the fifth parameter is used to indicate a PHY version of a PPDU;
the sixth parameter is used to indicate a first time interval, wherein the first time interval is a time interval from a start time of a PPDU to reporting of a first primitive to a MAC layer, and the first time interval is referred to as RxPHYStartDelay; the first primitive is a primitive indicating that the physical layer has received a valid PPDU, and the first primitive is referred to as a PHY-RXSTART.indication primitive;
the seventh parameter is used to indicate the duration of a PPDU;
the eighth parameter is used to indicate the length of a PSDU; and
the ninth parameter is used to indicate the MCS used for transmitting a PPDU.

In a possible design of these embodiments, the fourth parameter is a Boolean parameter, and the parameters other than the fourth parameter are integer parameters.

In a possible design of these embodiments, the fourth parameter is carried in each PPDU.

In a possible design of these embodiments, all or part of the parameters other than the fourth parameter are carried in a first request frame.

In a possible design of these embodiments, all or part of the parameters other than the fourth parameter are carried in a first response frame.

In a possible design of these embodiments, all or part of the parameters other than the fourth parameter are carried in each PPDU.

### Transmission mode for retransmission parameter:

(1) In a possible design of these embodiments, the fourth parameter is carried in a third field.

In a possible design of these embodiments, the third field is the HRL Control field. The HRL Control field is defined to transmit the fourth parameter, and the HRL Control field is a variant type of the A-Control field in the HT Control field located at the header of the MAC frame.

FIG. 11 illustrates a schematic diagram of an HRL control type format of the A-Control field according to some embodiments of the present disclosure. The format includes at least one of: a Control ID field or a Control Information field.

The Control ID field occupies a total of four bits from B0 to B3, and the Control Information field occupies a total of one bit at B4.

The Control ID field is used to indicate the variant type of the A-Control field, and its value may be any integer from 10 to 14. For example, the Control ID field takes a value of 10 to indicate that the variant type is the HRL control type (HRL Control field).

The Control Information field contains parameters used for enhancing link reliability.

With respect to the Control Information field, the format of the Control Information field includes a More PPDU field.

The More PPDU field occupies one bit.

The More PPDU field is used to indicate whether a next PPDU is to be transmitted after a current frame is acknowledged and one SIFS elapses. For example, the More PPDU field takes a value of 1 to indicate to transmit the next PPDU, and takes a value of 0 to indicates not to transmit the next PPDU.

In a possible design of these embodiments, the fourth parameter occupies at least one fourth subfield in the third field.

Illustratively, the fourth parameter occupies the More PPDU field.

The above HRL control type format of the A-Control field is an illustrative possible example. In different embodiments or designs, that the A-Control field may be changed in at least one of the design aspects, such as the position of the field in the frame, the arrangement order with other fields, the number of occupied octets, the number of occupied bits, the element name, and the field name, which is not limited in the embodiments of the present disclosure.

(2) In a possible design of these embodiments, the retransmission parameters other than the fourth parameter are carried in the first request frame.

In a possible design of these embodiments, the first request frame is an UHR link setup request frame. FIG. 12 illustrates a schematic diagram of a format of a UHR link setup request frame according to some embodiments of the present disclosure. The format of the UHR link setup request frame includes at least one of: a Frame Control field, a Duration field, an Address 1 field, an Address 2 field, an Address 3 field, a Sequence Control field, an HT Control field, a Frame body field, or an FCS field.

The Frame Control field occupies two octets, the Duration field occupies two octets, the Address 1 field occupies six octets, the Address 2 field occupies six octets, the Address 3 field occupies six octets, the Sequence Control field occupies two octets, the HT control field occupies four octets, the Frame Body field occupies two octets, and the FCS field occupies four octets.

With respect to the above Frame Body field, the format of the Frame Body field includes an Action subfield. In the embodiments of the present disclosure, the subfield is referred to as a field for short.

The Action subfield occupies four octets.

With respect to the above Action subfield, the format of the Action subfield includes at least one of: a Category subfield, a UHR Link Action subfield, a Dialog Token subfield, or a UHR Link Parameters subfield.

The Category subfield occupies one octet, the UHR Link Action subfield occupies one octet, the Dialog Token subfield occupies one octet, and the UHR Link Parameters subfield occupies nine octets.

The Category subfield is used to indicate a new action frame type, i.e., the UHR link action frame type, with a value of any integer from 39 to 125, for example, 40.

The UHR Link Action subfield is used to indicate the subtype of the UHR link action frame, with a value of any integer from 0 to 255. For example, the UHR Link Action subfield takes a value of 0 to indicate that the UHR link action frame is a UHR link setup request frame.

The Dialog Token subfield is used to indicate a pair of UHR link setup request frame and UHR link setup response frame that are associated with each other, with the Dialog Token subfield being included in both frames.

The UHR Link Parameters subfield is used to carry parameters related to a UHR retransmission mechanism.

With respect to the above UHR Link Parameters subfield, the format of the UHR Link Parameters subfield includes at least one of: a Traffic ID (TID) subfield, a PHY Version subfield, a RxPHYStartDelay subfield, a PPDU Time subfield, a PSDU Length subfield, an MCS subfield, a Number of Maximum Retry subfield, a Number of Retry per MCS subfield, a Step of MCS Decrease subfield, or a Reserved subfield.

The TID subfield occupies four bits, the PHY Version subfield occupies four bits, the RxPHYStartDelay subfield occupies eight bits, the PPDU Time subfield occupies 16 bits, the PSDU Length subfield occupies 24 bits, the MCS subfield occupies four bits, the Number of Maximum Retry subfield occupies four bits, the Number of Retry per MCS subfield occupies three bits, the Step of MCS Decrease subfield occupies three bits, and the Reserved subfield occupies two bits.

The TID subfield is used to indicate a flow identifier of a flow for which a UHR retransmission solution is enabled.

The PHY Version subfield is used to indicate the version of the PPDU that is used. The values and their meanings are provided in Table 2.

The RxPHYStartDelay subfield is used to indicate the delay between starting to receive the PPDU by the receiving apparatus and initiating the PHY-RXSTART.indication, and is used to assist the receiving apparatus in determining whether the receiving station has successfully received the preamble part of the next PPDU. The value of the RxPHYStartDelay subfield is in a unit of microseconds.

The PPDU Time subfield is used to indicate the duration of the transmitted PPDU, and the value of the PPDU Time subfield is in a unit of microseconds.

The PSDU Length subfield is used to indicate the length of the PSDU carried in the transmitted PPDU, and the value of the PSDU Length subfield is in a unit of octets.

The MCS subfield is used to indicate the MCS used for transmitting the PPDU.

The Number of Maximum Retry subfield is used to indicate the maximum number of retransmissions, and its value represents the number of retransmissions.

The Number of Retry per MCS subfield is used to indicate the number of consecutive retransmissions using the same MCS, and its value represents the number of consecutive retransmissions using the same MCS, or the number of consecutive retransmissions using the same MCS minus one. For example, in a case where the value of the Number of Retry per MCS field is represented by three bits, if the number of consecutive retransmissions using the same MCS is 1, the value is 001; or, the value is 000. In a case where the value of the Number of Retry per MCS field is the number of consecutive retransmissions using the same MCS minus one, the value may be represented by more numbers, starting from 000, thereby improving the utilization ratio.

The Step of MCS Decrease subfield is used to indicate the decreased value of MCS for each retransmission, and its value is the decreased value of MCS. When the value of the MCS decreases to zero, it should remain at zero and not change any further.

The above format of the UHR link setup request frame is an illustrative possible example. In different embodiments or designs, the above field may change in at least one of the deign aspects, such as the position of the field in the frame, the arrangement order with other fields, the number of occupied octets, the number of occupied bits, the element name, and the field name, which is not limited in the embodiments of the present disclosure.

In a possible design of these embodiments, the retransmission parameters other than the fourth parameter each occupy at least one subfield in the first request frame.

Illustratively, the second parameter occupies the Number of Maximum Retry subfield; the third parameter occupies the Number of Retry per MCS subfield and the Step of MCS Decrease subfield; the fifth parameter occupies the PHY Version subfield; the sixth parameter occupies the RxPHYStartDelay subfield; the seventh parameter occupies the PPDU Time subfield; the eighth parameter occupies the PSDU Length subfield; and the ninth parameter occupies the MCS subfield.

In a possible design of these embodiments, only the same MCS is used for consecutive retransmissions, and the value of the Number of Retry per MCS subfield is the number of consecutive retransmissions using the same MCS or the number of consecutive retransmissions using the same MCS minus one. The Step of MCS Decrease subfield is not used, or the Step of MCS Decrease subfield takes a value of 0, or each bit in the Step of MCS Decrease subfield takes a value of 0.

In a possible design of these embodiments, the value of the MCS is decreased for each retransmission, and the value of the Step of MCS Decrease subfield is the decreased value of MCS. The Number of Retry per MCS subfield is not used, or the Number of Retry per MCS subfield takes a value of 0, or each bit in the subfield takes a value of 0.

In a possible design of these embodiments, the same MCS is used for consecutive retransmissions. After retransmissions are performed for the number of times corresponding to the value of the Number of Retry per MCS field, the value of the MCS is decreased based on the value corresponding to the Step of MCS Decrease field to continue retransmissions. For example, the same MCS (with a value of six) is used for consecutive retransmissions first, the value corresponding to the Number of Retry per MCS field is four, and the value corresponding to the Step of MCS Decrease field is one, that is, after four times of retransmissions are performed, the MCS value is decreased, with a decreased value of one each time, to continue retransmissions according to the values of MCS being five, four, three, two, one, and zero.

In a possible design of these embodiments, subsequent to receiving the fourth parameter in the current PPDU, the second transmission apparatus identifies whether the next PPDU will be retransmitted. In a case where it is identified that the next PPDU will be retransmitted, the transmission time position and the duration of the retransmission PPDU are determined based on at least one of the Number of Maximum Retry subfield, the Number of Retry per MCS subfield, the Step of MCS Decrease subfield, or the PPDU Time subfield. The retransmission PPDU is a PPDU used to carry the next frame that is retransmitted, which may be one or more PPDU following the next PPDU.

(3) In a possible design of these embodiments, the retransmission parameters other than the fourth parameter are carried in the first response frame.

FIG. 13 illustrates a schematic diagram of a format of a UHR link setup response frame according to some embodiments of the present disclosure. The format of the UHR link setup response frame includes at least one of: a Frame Control field, a Duration field, an Address 1 field, an Address 2 field, an Address 3 field, a Sequence Control field, an HT Control field, a Frame body field, or an FCS field.

The Frame Control field occupies two octets, the Duration field occupies two octets, the Address 1 field occupies six octets, the Address 2 field occupies six octets, the Address 3 field occupies six octets, the Sequence Control field occupies two octets, the HT Control field occupies four octets, the Frame Body field occupies two octets, and the FCS field occupies four octets.

With respect to the above Frame Body field, the format of the Frame Body field includes an Action subfield. In the embodiments of the present disclosure, the subfield is also referred to as a field for short.

The Action subfield occupies four octets.

With respect to the above Action subfield, the format of the Action subfield includes at least one of: a Category subfield, a UHR Link Action subfield, a Dialog Token subfield, a Status Code subfield, and UHR Link Parameters subfield.

The Category subfield occupies one octet, the UHR Link Action subfield occupies one octet, the Dialog Token subfield occupies one octet, the Status Code subfield occupies two octets, and the UHR Link Parameters subfield occupies zero or nine octets.

The Category subfield is used to indicate a new action frame type, i.e., the UHR link action frame type, with a value of any integer from 39 to 125, for example, 40.

The UHR Link Action subfield is used to indicate the subtype of the UHR link action frame, with a value of any integer from 0 to 255. For example, the UHR Link Action subfield takes a value of 1 to indicate that the UHR link action frame is a UHR link setup response frame.

The Status Code subfield is used to indicate a response result to the UHR link setup request frame. The Status Code subfield takes a value of 0 to indicate success (SUCCESS), takes a value of 37 to indicate a rejection (REQUEST_DECLINED), or takes a value of 39 to indicate a rejection with suggested changes (REJECTED_WITH_SUGGESTED_CHANGES).

The UHR Link Parameters subfield is only present when the Status Code subfield takes a value of 39; otherwise, this field is not present.

With respect to the above UHR Link Parameters subfields, the format of the UHR Link Parameters subfield includes at least one of: a TID subfield, a PHY Version subfield, a RxPHYStartDelay subfield, a PPDU Time subfield, a PSDU Length subfield, an MCS subfield, a Number of Maximum Retry subfield, a Number of Retry per MCS subfield, a Step of MCS Decrease subfield, or a Reserved subfield.

The TID subfield occupies four bits, the PHY Version subfield occupies four bits, the RxPHYStartDelay subfield occupies eight bits, the PPDU Time subfield occupies 16 bits, the PSDU Length subfield occupies 24 bits, the MCS subfield occupies four bits, the Number of Maximum Retry subfield occupies four bits, the Number of Retry per MCS subfield occupies three bits, the Step of MCS Decrease subfield occupies three bits, and the Reserved subfield occupies two bits.

For the meanings of the aforementioned fields or subfields, reference may be made to the corresponding embodiments of the UHR link setup request frame, which are not elaborated herein any further.

The above format of the UHR link setting response frame is an illustrative possible example. In different embodiments or designs, the above field may be changed in at least one of the design aspects, such as the position of the field in the frame, the arrangement order with other fields, the number of occupied octets, the number of occupied bits, the element name, and the field name, which is not limited in the embodiments of the present disclosure.

In a possible design of these embodiments, the retransmission parameters other than the fourth parameter each occupy at least one subfield in the first response frame.

Illustratively, the second parameter occupies the Number of Maximum Retry subfield; the third parameter occupies the Number of Retry per MCS subfield and the Step of MCS Decrease subfield; the fifth parameter occupies the PHY Version subfield; the sixth parameter occupies the RxPHYStartDelay subfield; the seventh parameter occupies the PPDU Time subfield; the eighth parameter occupies the PSDU Length subfield; and the ninth parameter occupies the MCS subfield.

In a possible design of these embodiments, the first response frame includes a fifth subfield, wherein the fifth subfield is used to indicate a response result to the first request frame.

In a possible design of these embodiments, in a case where the fifth subfield takes a fifth value, the response result indicates success; in a case where the fifth subfield takes a sixth value, the response result indicates a rejection; and in a case where the fifth subfield takes a seventh value, the response result indicates a rejection with a suggested parameter provided; wherein the suggested parameter includes at least one of the second parameter, the third parameter, the fifth parameter, the sixth parameter, the seventh parameter, the eighth parameter, or the ninth parameter.

Illustratively, the fifth subfield is a Status Code subfield, and the fifth subfield is used to indicate a response result to the UHR link setup request frame. The fifth subfield takes a value of 0 to indicates success; the fifth subfield takes a value of 37 to indicates a rejection; and the fifth subfield takes a value of 39 to indicate a rejection with a suggested parameter provided.

### Retransmission rules:

In a possible design of these embodiments, in a case where the fifth subfield takes the fifth value or the seventh value, the next PPDU is transmitted based on the retransmission parameter; and in a case where the fifth subfield takes the sixth value, the next PPDU is transmitted based on a parameter other than the retransmission parameter.

In a possible design of these embodiments, in a case where the fifth subfield takes the fifth value or the seventh value, and the second retransmission apparatus identifies a retransmission, the next PPDU is a retransmission PPDU transmitted based on the retransmission parameters; and/or
in a case where the fifth subfield takes the fifth value or the seventh value, and the second retransmission apparatus fails to successfully receive the next PPDU, the retransmission PPDU of the next PPDU is transmitted based on the retransmission parameter;
wherein the retransmission PPDU of the next PPDU is a PPDU carrying the next frame that is retransmitted. Identifying the retransmission means that the next PPDU has not been successfully received and needs to be retransmitted.

In a possible design of these embodiments, when the first retransmission apparatus has successfully competed for a channel and reserved a TXOP for interaction of multiple frames, the first retransmission apparatus transmits a first request frame (UHR link setup request frame) to the second retransmission apparatus after an initial frame within the TXOP to request negotiation of other retransmission parameters other than the fourth parameter. If the negotiation is successful, all PPDUs carrying the following types of frames transmitted by the first retransmission apparatus to the second station within the TXOP must comply with the negotiated retransmission parameter:
individually addressed Management frames other than Action No Ack frames;
individually addressed non-QoS Data frames; and
individually addressed QoS Data frames with Normal Ack or Implicit BAR Ack policy.

In a possible design of these embodiments, the third field is carried in the last frame within the TXOP, and the fourth subfield takes a third value; and the third field is carried in a frame other than the last frame within the TXOP, and the fourth subfield takes a fourth value.

Illustratively, within the TXOP, the last frame transmitted by the first retransmission apparatus to the second retransmission apparatus carries an HRL Control field, and the More PPDU field takes a value of 0; and within the TXOP, frames, other than the last frame, transmitted by the first retransmission apparatus to the second retransmission apparatus carry an HRL Control field, and the More PPDU field takes a value of 1.

In a possible design of these embodiments, fifth subfield takes the fifth value or the seventh value, and the receiving module 2820 is configured to receive an Ack frame or a BA frame from the second retransmission apparatus.

In a possible design of these embodiments, subsequent to receiving the first request frame, if the second retransmission apparatus agrees with the retransmission parameter therein, the second retransmission apparatus replies with a first response frame of which the fifth subfield takes the fifth value; if the second retransmission apparatus disagrees with the retransmission parameter therein, the second retransmission apparatus replies with a first response frame of which the fifth subfield takes the sixth value; and if the second retransmission apparatus disagrees with the retransmission parameter therein but provides a suggested parameter, the second retransmission apparatus replies with a first response frame of which the fifth subfield takes the seventh value.

Illustratively, subsequent to receiving a UHR link setup request frame, if the second retransmission apparatus agrees with the retransmission parameter therein, the second retransmission apparatus replies with a UHR link setup response frame of which the Status Code subfield takes a value of 0; if the second retransmission apparatus disagrees with the retransmission parameter therein, the second retransmission apparatus replies with a UHR link setup response frame of which the Status Code subfield takes a value of 37; and if the second retransmission apparatus disagrees with the retransmission parameter therein but provides a suggested parameter, the second retransmission apparatus replies with a UHR link setup response frame of which the Status Code subfield takes a value of 39.

In a possible design of these embodiments, the Ack frame or the BA frame is transmitted by the second retransmission apparatus in a case where the fourth subfield takes an eighth value; wherein the fourth subfield is a subfield occupied by the fourth parameter in the third field.

Illustratively, the Status Code subfield takes a value of 0 or 39. When the frame received by the second retransmission apparatus does not include an HRL Control field, or includes an HRL Control field but the More PPDU field takes a value of 0, the second retransmission apparatus transmits an Ack frame or a BA frame.

In a possible design of these embodiments, the Ack frame or the BA frame is transmitted by the second retransmission apparatus in a case where the fourth subfield takes a ninth value and the second retransmission apparatus successfully receives the PPDU; and/or the Ack frame or the BA frame is transmitted by the second retransmission apparatus in a case where the fourth subfield takes the ninth value and no retransmission has occurred; wherein the fourth subfield is a subfield occupied by the fourth parameter in the third field.

Illustratively, the Status Code subfield takes a value of 0 or 39. When the frame received by the second retransmission apparatus includes an HRL Control field, or includes an HRL Control field and the More PPDU field therein takes a value of 1, the second retransmission apparatus transmits an Ack frame or a BA frame.

In a possible design of these embodiments, the fifth subfield takes the fifth value or the seventh value. The receiving module 2820 is configured to receive at least one first frame broadcast by the second retransmission apparatus; wherein the first frame is used for instructing another device around the second retransmission apparatus to set an NAV, and the first frame is a frame transmitted within a first time period. The first time period is determined based on the retransmission parameter, and the first time period is a time period outside a time period when the retransmission PPDU is interfered with.

In a possible design of these embodiments, the Time field in the first frame is set based on the retransmission parameter, and the Time field is used for setting the NAV.

In a possible design of these embodiments, the first frame is broadcast by the second retransmission apparatus in a case where the fourth subfield takes the ninth value and the second retransmission apparatus fails to successfully receive the next PPDU; and/or the first frame is broadcast by the second retransmission apparatus in a case where the fourth subfield takes the ninth value and the second retransmission apparatus has identified a retransmission; wherein the fourth subfield is a subfield occupied by the fourth parameter in the third field.

Illustratively, when the frame received by the second retransmission apparatus includes an HRL Control field and the More PPDU field takes a value of 1, if the second retransmission apparatus has identified the retransmission, the second retransmission apparatus estimates the transmission time period of the retransmission PPDU based on the retransmission parameter transmitted by the first retransmission apparatus, and thereby transmit one or more first frames within a time period when the retransmission PPDU is not interred (the first time period).

In a possible design of these embodiments, in a case where the MAC layer of the second retransmission apparatus does not receive the first primitive within the first delay interval corresponding to one PPDU, the first time period is a time period from the end time of the first delay interval to the start time of the next retransmission PPDU; and
in a case where the MAC layer of the second retransmission apparatus receives the first primitive within the first delay interval corresponding to one PPDU, the first time period is a time period from the end time of one PPDU to the start time of the next retransmission PPDU;
wherein the first delay interval represents the reception delay of the physical layer; the first delay interval is a time interval within the transmission time period corresponding to one PPDU; and the first primitive is a primitive indicating that the physical layer has received a valid PPDU.

Illustratively, in a case where the MAC layer of the second retransmission apparatus does not receive the PHY-RXSTART.indication primitive within the RxPHYStartDelay interval corresponding to one PPDU, the first time period is a time period from the end time of the RxPHYStartDelay interval to the start time of the next retransmission PPDU; and in a case where the MAC layer of the second retransmission apparatus receives the PHY-RXSTART.indication primitive within the RxPHYStartDelay interval corresponding to one PPDU, the first time period is a time interval from the end time of the PPDU to the start time of the next retransmission PPDU.

In a possible design of these embodiments, the first frame is a VAck frame or a CTS frame. The VAck frame is a newly defined control frame that is broadcast by the second retransmission apparatus (the receiving device) during a time period when the retransmission PPDU is not interfered. The VAck frame is used for instructing another device around the receiving device to set an NAV to prevent the another device from using the channel. The PPDU carrying the VAck frame is a non-HT PPDU (non-HT PPDU) or another type of PPDU.

In some embodiments, the first frame (VAck frame) has the following two formats.
(1) The first frame includes a sixth subfield, wherein the six subfield is used to indicate a frame subtype.

FIG. 21 illustrates a schematic diagram of a control frame (VAck frame) format according to some embodiments of the present disclosure. The VAck frame format includes at least one of: a Frame Control field, a Duration field, an RA field, or an FCS field.

The Frame Control field occupies two octets, the Duration field occupies two octets, the RA field occupies six octets, and the FCS field occupies four octets.

The Frame Control field is used to indicate information such as the type of the MAC frame.

The Duration field is used to indicate the duration of the TXOP to be protected, with a value of the length from the end time of the VAck frame to the end time of the TXOP, in a unit of microseconds.

The RA field is used to indicate a receiving address, which is a broadcast address herein.

The FCS field is used to indicate a frame check sequence.

With respect to the Frame Control field, the format of the Frame Control field includes at least one of: a Protocol Version subfield, a Type subfield, a Subtype subfield, a To DS subfield, a From DS subfield, a More Fragments subfield, a Retry subfield, a Power Management subfield, a More Data subfield, a Protected Frame subfield, or a +HTC subfield. In the embodiments of the present disclosure, subfields can be referred to simply as fields.

The Protocol Version subfield occupies a total of two bits from B0 to B1, the Type subfield occupies a total of two bits from B2 to B3, the Subtype subfield occupies a total of four bits from B4 to B7, the To DS subfield occupies a total of one bit at B8, the From DS subfield occupies a total of one bit at B9, the More Fragments subfield occupies a total of one bit at B10, the Retry subfield occupies a total of one bit at B11, the Power Management subfield occupies a total of one bit at B12, the More Data subfield occupies a total of one bit at B13, the Protected Frame subfield occupies a total of one bit at B14, and the +HTC subfield occupies a total of one bit at B15.

The Protocol Version subfield is used to indicate the version of the MAC frame. For example, Protocol Version subfield takes a value of 0 to indicate a basic version, and takes a value of 1 to indicate a PV1 MAC frame version.

The Type subfield is used to indicate a frame type. For example, the Type subfield takes a value of 1 (01 in binary) to indicates that the frame type is a control frame.

The Subtype subfield is used to indicate a frame subtype. For example, the Subtype subfield takes a value of 15 (1111 in binary) to indicate that the frame subtype is a VAck frame. Illustratively, the sixth subfield is a Subtype subfield.

The To DS subfield and the From DS subfield are used to indicate the transmission direction of a frame.

The More Fragments subfield is used to indicate whether a fragment is a non-last fragment after segmentation of the same MSDU or MPDU. For example, the More Fragments subfield takes a value of 1 to indicates "Yes", and takes a value of 0 to indicate "No".

The Retry subfield is used to indicate whether a frame is a retransmission frame. For example, the Retry subfield takes a value of 1 to indicate "Yes", and takes a value of 0 to indicate "No". In a VAck frame, the value of the Retry subfield is always 0, indicating that the VAck frame is not a retransmission frame.

The Power Management subfield is used to indicate a power management mode.

The More Data subfield is used by the AP to indicate to the STA in a power-saving mode whether more cached data waiting to be transmitted to the STA are present. For example, the More Data subfield takes a value of 1 to indicate "Yes", and takes a value of 0 to indicate "No".

The Protected Frame subfield is used to indicate whether a frame body is encrypted. For example, the Protected Frame subfield takes a value of 1 to indicate "Yes", and takes a value of 0 to indicate "No". In a VAck frame, the value of the Protected Frame subfield is always 0, indicating that the frame body is not encrypted.

The +HTC subfield is used to indicate whether the HTC field is included in the frame header. For example, the +HTC subfield takes a value of 1 to indicate "Yes", and takes a value of 0 to indicate "No". In a VAck frame, the value of the +HTC subfield is always 0, indicating that the HTC field is not included.

The control frame format is an illustrative possible example. In different embodiments or designs, the above field may be changed in at least one of the design aspects, such as the position of the field within the frame, the arrangement order with other fields, the number of occupied octets, the number of occupied bits, the element name, and the field name, which is not limited in the present disclosure.

(2) The first frame includes a sixth subfield and a seventh subfield. The sixth subfield is used to indicate a frame subtype, and the seventh subfield is used to indicate a subtype of a control frame extension.

FIG. 22 illustrates a schematic diagram of a control frame (VAck frame) format according to some embodiments of the present disclosure. The VAck frame format includes at least one of: a Frame Control field, a Duration field, an RA field, or an FCS field.

The Frame Control field occupies two octets, the Duration field occupies two octets, the RA field occupies six octets, and the FCS field occupies four octets.

With respect to the Frame Control field, the format of the Frame Control field includes at least one of: a Protocol Version subfield, a Type subfield, a Subtype subfield, a Control Frame Extension subfield, a Power Management subfield, a More Data subfield, a Protected Frame subfield, or a +HTC subfield. In the embodiments of the present disclosure, the subfield is referred to as a field for short.

The Protocol Version subfield occupies a total of two bits from B0 to B1, the Type subfield occupies a total of two bits from B2 to B3, the Subtype subfield occupies a total of four bits from B4 to B7, the Control Frame Extension subfield occupies a total of four bits from B8 to B11, the Power Management subfield occupies a total of one bit at B12, the More Data subfield occupies a total of one bit at B13, the Protected Frame subfield occupies a total of one bit at B14, and the +HTC subfield occupies a total of one bit at B15.

The Type subfield is used to indicate a frame type. For example, the Type subfield takes a value of 1 (01 in binary) to indicate that the frame type is a control frame.

The Subtype subfield is used to indicate a frame subtype. For example, the Subtype subfield takes a value of 6 (0110 in binary) to indicate that the frame subtype is a control frame extension. Illustratively, the sixth subfield is a Subtype subfield.

The Control Frame Extension subfield is used to indicate the subtype of the control frame extension, with a value of an integer from 12 to 15. For example, the Control Frame Extension subfield takes a value of 12 (1100 in binary) to indicate that the subtype of the control frame extension is a VAck frame. Illustratively, the seventh subfield is a Control Frame Extension subfield.

For the meanings of the other fields, reference may be made the embodiment in FIG. 21, which are not elaborated herein any further.

The above control frame format is an illustrative possible example. In different embodiments or designs, the field may be changed in at least one of the design aspects, such as the position of the field in the frame, the arrangement order with other fields, the number of occupied octets, the number of occupied bits, the element name, and the field name, which is not limited in the present embodiments.

In addition to being transmitted in the form of the HRL Control field in the MAC frame of the MAC layer, the retransmission parameter in the aforementioned embodiments may also be transmitted in the form of the U-SIG field in the PPDU of the PHY layer in some embodiments.

In some embodiments, the retransmission parameter is carried in a MAC frame of the MAC layer or in a PPDU of the PHY layer.

FIG. 23 illustrates a schematic diagram of a format of the U-SIG field according to some embodiments of the present disclosure. The format of the U-SIG field includes a format of a first part (U-SIG-1) and a format of a second part (U-SIG-2).

The format of the first part (U-SIG-1) includes at least one of: a PHY Version Identifier field, a Bandwidth field, a UL/ DL field, a BSS Color field, a TXOP field, a More Same PPDU field, a Number of Maximum Retry field, a Number of Retry per MCS field, a Step of MCS Decrease field, or a Validate field.

The PHY Version Identifier field occupies a total of three bits from B0 to B2, the Bandwidth field occupies a total of three bits from B3 to B5, the UL/DL field occupies a total of one bit at B6, the BSS Color field occupies a total of six bits from B7 to B12, the TXOP field occupies a total of seven bits from B13 to B19, the More Same PPDU field occupies a total of one bit at B20, the Number of Maximum Retry field occupies a total of two bits from B21 to B22, the Number of Retry per MCS field occupies a total of one bit at B23, the Step of MCS Decrease field occupies a total of one bit at B24, and the Validate field occupies a total of one bit at B25.

The More Same PPDU field is used to indicate whether a next PPDU is to be transmitted after a current frame is acknowledged and one SIFS elapses. The PPDU carrying the next frame is the same as the PPDU carrying the current frame, except the PSDU content. Illustratively, the More Same PPDU takes a value of 1 to indicate "YES" and takes a value of 0 to indicate "NO".

The Number of Maximum Retry field is used to indicate the maximum number of retransmissions, and its value represents the number of retransmissions.

The Number of Retry per MCS field is used to indicate the number of consecutive retransmissions using the same MCS, and its value represents the number of consecutive retransmissions using the same MCS, or the number of consecutive retransmissions using the same MCS minus one. For example, in a case where the value of the Number of Retry per MCS field is represented by three bits, if the number of consecutive retransmissions using the same MCS is 1, the value is 001; otherwise, the value is 000.

The Step of MCS Decrease field is used to indicate the decreased value of MCS for each retransmission, and its value is the decreased value of MCS. When the value of the Step of MCS Decrease field decreases to zero, it should remain at zero and does not change any further.

The format of the second part (U-SIG-2) includes at least one of: a PPDU Type and Compression Mode field, a Validate field, a Punctured Channel Information field, a BSS Color field, an EHT-SIG MCS field, a Number Of EHT-SIG Symbols field, a CRC field, or a Tail field.

The PPDU Type and Compression Mode field occupies a total of two bits from B0 to B1, the Validate field occupies one bit at B2, the Punctured Channel Information field occupies a total of five bits from B3 to B7, the BSS Color field occupies one bit at B8, the EHT-SIG MCS field occupies a total of two bits from B9 to B10, the Number Of EHT-SIG Symbols field occupies a total of five bits from B11 to B15, the CRC field occupies four bits from B16 to B19, and the Tail field occupies a total of six bits from B20 to B25.

The above U-SIG field format is an illustrative possible example. In different embodiments or designs, the field may be change in at least one of the design aspects, such as the position of the field in the frame, the arrangement order with other fields, the number of occupied octets, the number of occupied bits, the element name, and the field name, which is not limited in the present embodiments.

FIG. 24 illustrates a schematic diagram of a U-SIG field according to some embodiments of the present disclosure. The U-SIG field format includes a format of a first part (U-SIG-1) and a format of a second part (U-SIG-2).

The format of the first part (U-SIG-1) includes at least one of: a PHY Version Identifier field, a Bandwidth field, a UL/DL Link field, a BSS Color field, a TXOP field, a More PPDU field, a Disregard field, or a Validate field.

The PHY Version Identifier field occupies a total of three bits from B0 to B2, the Bandwidth field occupies a total of three bits from B3 to B5, the UL/DL field occupies a total of one bit at B6, the BSS Color field occupies a total of six bits from B7 to B12, the TXOP field occupies a total of seven bits from B13 to B19, the More PPDU field occupies a total of one bit at B20, the Disregard field occupies a total of four bits from B21 to B24, and the Validate field occupies a total of one bit at B25.

The More PPDU field is used to indicate whether a next PPDU is to be transmitted after a current frame is acknowledged and one SIFS elapses. For example, the More PPDU field takes a value of 1 to indicate "YES" and takes a value of 0 to indicate "NO".

The format of the second part (U-SIG-2) includes at least one of: a PPDU Type and Compression Mode field, a Validate field, a Punctured Channel Information field, a BSS Color field, an EHT-SIG MCS field, a Number Of EHT-SIG Symbols field, a CRC field, or a Tail field.

The PPDU Type and Compression Mode field occupies a total of two bits from B0 to B1, the Validate field occupies one bit at B2, the Punctured Channel Information field occupies a total of five bits from B3 to B7, the BSS Color field occupies one bit at B8, the EHT-SIG MCS field occupies a total of two bits from B9 to B10, the Number Of EHT-SIG Symbols field occupies a total of five bits from B11 to B15, the CRC field occupies four bits from B16 to B19, and the Tail field occupies a total of six bits from B20 to B25.

The above U-SIG field format is an illustrative possible example. In different embodiments or designs, the field may be change in at least one of the design aspects, such as the position of the field in the frame, the arrangement order with other fields, the number of occupied octets, the number of occupied bits, the element name, and the field name, which is not limited in the present embodiments.

In these embodiments, the transmitting module 2810 can may divided into a plurality of transmitting sub-modules, e.g., a first transmitting sub-module and a second transmitting sub-module. The first transmitting sub-module is configured to transmit the current PPDU, and the second transmitting sub-module is configured to transmit the retransmission parameter after the initial frame within the TXOP. Alternatively, the first transmitting sub-module is configured to transmit the retransmission parameter after the initial frame within the TXOP, and the second transmitting sub-module is configured to transmit the current PPDU. The functions of different transmitting sub-modules are not limited in these embodiments.

In this embodiment, the receiving module 2820 may be divided into a plurality of receiving sub-modules, e.g., a first receiving sub-module and a second receiving sub-module. The first receiving sub-module is configured to receive the Ack frame or the BA frame from the second retransmission apparatus, and the second receiving sub-module is configured to receive the at least one first frame broadcast by the second retransmission apparatus. Alternatively, the first receiving sub-module is configured to receive the at least one first frame broadcast by the second retransmission apparatus, and the second receiving sub-module is configured to receive the Ack frame or the BA frame from the second retransmission apparatus. The functions of different receiving sub-modules are not limited in these embodiments.

These embodiments are illustrated by taking one transmitting module 2810 as an example, and the number of the transmitting modules 2810 is not limited.

These embodiments are illustrated by taking one receiving module 2820 as an example, and the number of the receiving modules 2820 is not limited.

For the functions of the sending module 2810, reference may be made to process 810 in the embodiments of FIG. 8, process 812 in the embodiments of FIG. 14, and process 814 in the embodiments of FIG. 18.

For the functions of the receiving module 2820, reference may be made to processes 822 and 824 in the embodiments of FIG. 14, processes 826 and 828 in the embodiments of FIG. 18.

FIG. 29 illustrates a block diagram of a second retransmission apparatus according to some embodiments of the present disclosure. The apparatus may be implemented as a second station or as a part of the second station through software, hardware, or a combination thereof. The apparatus includes a receiving module 2910, a transmitting module 2920, and a broadcasting module 2930.

The receiving module 2910 is configured to receive a retransmission parameter from a first retransmission apparatus; wherein the retransmission parameter is a parameter related to a retransmission by the first retransmission apparatus.

In a possible design of these embodiments, the retransmission parameter include a parameter related to the retransmission by the first retransmission apparatus that is transmitted before the retransmission frame is transmitted.

In a possible design of these embodiments, the retransmission parameter includes a parameter related to the retransmission by the first retransmission apparatus, wherein the parameter is carried in a PPDU prior to the retransmission PPDU. The retransmission PPDU is a PPDU that carries the retransmission frame.

In a possible design of these embodiments, the retransmission parameter include a parameter used by a second retransmission apparatus to identify whether the first retransmission apparatus will perform a retransmission.

In a possible design of these embodiments, in the case of retransmission, the retransmission parameter includes a parameter related to determination of the duration of the retransmitted PPDU.

In a possible design of these embodiments, the apparatus may be implemented in the following two ways:
an implementation based on PPDU granularity (Per PPDU); and
an implementation based on TXOP granularity (Per TXOP).

In a possible design of these embodiments, the implementation based on Per PPDU means that each PPDU carries a retransmission parameter when the PPDU is transmitted; and the implementation based on Per TXOP means that during each TXOP period, some of the retransmission parameters only need to be transmitted once.

### I. Implementation based on Per PPDU:

In a possible design of these embodiments, the receiving module 2910 is configured to receive a current PPDU from the first retransmission apparatus; wherein the current PPDU includes a current frame and the retransmission parameters, wherein the retransmission parameter is associated with a next PPDU, the next PPDU being a PPDU carrying a next frame.

The first retransmission apparatus informs the second retransmission apparatus of the retransmission parameter associated with the next PPDU in the current PPDU. The first retransmission apparatus is a transmitting device, and the second retransmission apparatus is a receiving device.

In a possible design of these embodiments, the retransmission parameter is transmitted in PPDU granularity, with all retransmission parameters carried in each PPDU.

In a possible design of these embodiments, the retransmission parameter includes a retransmission parameter associated with the next PPDU, or a retransmission parameter associated with the next frame, or a retransmission parameter associated with the PPDU carrying the next frame.

In a possible design of these embodiments, the retransmission parameter includes a parameter used for determining the retransmission process of the next PPDU, or the retransmission parameter includes a parameter used for determining the retransmission process of the next frame, or the retransmission parameter includes a parameter used for determining the retransmission process of the PPDU carrying the next frame.

In a possible design of these embodiments, the retransmission parameter includes at least one of a first parameter, a second parameter, or a third parameter;
wherein first parameter is used to indicate whether a next PPDU is to be transmitted after a current frame is acknowledged and one SIFS elapses, wherein the next PPDU is the same as the current PPDU except for the content of a PSDU;
the second parameter is used to indicate the maximum number of retransmissions; and
the third parameter is used to indicate an MCS used in the case of retransmission, and the third parameter includes the number of consecutive retransmissions using the same MCS, and/or a decreased value of MCS for each retransmission.

In a possible design of these embodiments, the first parameter is a Boolean parameter, and the second parameter and the third parameter are integer parameters.

### Transmission mode for retransmission parameter:

(1) In a possible design of these embodiments, the retransmission parameter is carried in a first field.

In some embodiments, the first field is an HRL Control field.

The HRL Control field is defined to transmit a retransmission parameter, and the HRL Control field is a variant type of the A-Control field within the HT Control field located at the header of the MAC frame.

FIG. 9 illustrates a schematic diagram of an HRL control type format of the A-Control field according to some embodiments of the present disclosure. The format includes at least one of: a Control ID field or a Control Information field.

The Control ID field occupies a total of four bits from B0 to B3, while the Control Information field occupies a total of 11 bits from B4 to B14.

The Control ID field is used to indicate a variant type of the A-Control field, with a value of any integer from 10 to 14. For example, the Control ID field takes a value of 10 to indicate that the variant type is the HRL control type (HRL Control field).

The Control Information field contains parameters used for enhancing link reliability.

With respect to the Control Information field, the format of the Control Information field includes at least one of: a More Same PPDU field, a Number of Maximum Retry field, a Number of Retry per MCS field, or a Step of MCS Decrease field. In the embodiments of the present disclosure, the subfield and the field have the same meaning.

The More Same PPDU field occupies one bit, the Number of Maximum Retry field occupies four bits, the Number of Retry per MCS field occupies three bits, and the step of MCS Decrease field occupies three bits.

The More Same PPDU field is used to indicate whether a next PPDU is to be transmitted after a current frame is acknowledged and one SIFS elapses, and the next PPDU is the same as the PPDU carrying the current frame, except for the PSDU content. For example, the More Same PPDU field takes a value of 1 to indicate "YES", and takes a value of 0 to indicate "NO".

Illustratively, the second retransmission apparatus receives an i^{th} data frame, and the More Same PPDU field in the i^{th} data frame takes a value of 1, indicating that the first retransmission apparatus will transmit a PPDU carrying an (i+1)^{th} data frame. However, in a case where the second retransmission apparatus does not receive the PPDU carrying the (i+1)^{th} data frame, the second retransmission apparatus infers that the first retransmission apparatus will retransmit the (i+1)^{th} data frame.

In a case where the second retransmission apparatus receives the i^{th} data frame and the More Same PPDU field in the i^{th} data frame takes a value of 0, indicating that the first retransmission apparatus will not transmit a PPDU carrying the (i+1)^{th} data frame, that is, the i^{th} data frame is the last frame, the second retransmission apparatus infers that the first station will not perform a retransmission even if the second retransmission apparatus does not receive the (i+1)^{th} data frame.

The Number of Maximum Retry field is used to indicate the maximum number of retransmissions, and its value represents the number of retransmissions.

The Number of Retry per MCS field is used to indicate the number of consecutive retransmissions using the same MCS, and its value represents the number of consecutive retransmissions using the same MCS, or the number of consecutive retransmissions using the same MCS minus one. For example, in a case where the value of the Number of Retry per MCS field is represented by three bits, if the number of consecutive retransmissions using the same MCS is 1, the value is 001; or, the value is 000. In a case where the value of the Number of Retry per MCS field is the number of consecutive retransmissions using the same MCS minus one, the value may be represented by more numbers, starting from 000, thereby improving the utilization ratio.

The Step of MCS Decrease field is used to indicate the decreased value of MCS for each retransmission, and its value is the decreased value of MCS. When the value of the Step of MCS Decrease field decreases to zero, it should remain at zero and does not change any further.

The above HRL control type format of the A-Control field is an illustrative possible example. In different embodiments or designs, the A-Control field may be changed in at least one of the design aspects, such as the position of the field in the frame, the arrangement order with other fields, the number of occupied octets, the number of occupied bits, the element name, and the field name, which is not limited in the present embodiments.

In a possible design of these embodiments, the first parameter occupies at least one first subfield in the first field; the second parameter occupies at least one second subfield in the first field; and the third parameter occupies at least one third subfield in the first field.

Illustratively, the first parameter occupies More Same PPDU fields; the second parameter occupies the Number of Maximum Retry field; and the third parameter occupies the Number of Retry per MCS field and Step of MCS Decrease field.

In a possible design of these embodiments, only the same MCS is used for consecutive retransmission, and the value of the Number of Retry per MCS field is the number of consecutive retransmissions using the same MCS or the number of consecutive retransmissions using the same MCS minus one. The Step of MCS Decrease field is not used, or the Step of MCS Decrease field takes a value of 0, or each bit in this field takes a value of 0.

In some embodiments, the MCS value is decreased for each retransmission, and the value of the Step of MCS Decrease field is the decreased value of MCS. The Number of Retry per MCS field is not used, or the Number of Retry per MCS field takes a value of 0, or each bit in the field takes a value of 0.

In a possible design of these embodiments, the same MCS is used for consecutive retransmissions. After retransmissions are performed for the number of times corresponding to the value of the Number of Retry per MCS field, the MCS value is decreased based on the value corresponding to the Step of MCS Decrease field to continue retransmissions. For example, the same MCS (with a value of six) is used for consecutive retransmissions first, the value corresponding to the Number of Retry per MCS field is four, and the value corresponding to the Step of MCS Decrease field is one, that is, after four times of retransmissions are performed, the MCS value is decreased, with a decrease value of one each time, to continue retransmissions according to the values of MCS being five, four, three, two, one, and zero.

(2) In a possible design of these embodiments, the retransmission parameter is carried in a second field. The second field is used to indicate whether a next PPDU is to be transmitted after a current frame is acknowledged and one SIFS elapses.

In a possible design of these embodiments, the second field is an HRL Control field.

FIG. 10 illustrates a schematic diagram of the HRL control type format of an A-Control field according to some embodiments of the present disclosure. The format includes at least one of: a Control ID field or a Control Information field.

The Control ID field occupies a total of four bits from B0 to B3, and the Control Information field occupies a total of 10 bits from B4 to B13.

With respect to the Control Information field, the format of the Control Information field includes at least one of the following: a Number of Maximum Retry field, a Number of Retry per MCS field, or a Step of MCS Decrease field.

The Number of Maximum Retry field occupies four bits, the Number of Retry per MCS field occupies three bits, and the Step of MCS Decrease field occupies three bits.

In a possible design of these embodiments, the second parameter occupies at least one second subfield in the second field; and the third parameter occupies at least one third subfield in the second field.

Illustratively, the second parameter occupies the Number of Maximum Retry field; and the third parameter occupies the Number of Retry per MCS field and Step of MCS Decrease field.

Compared with the embodiments illustrated in FIG. 9, the "More Same PPDU field" is not used in this design. Instead, whether a next PPDU is to be transmitted after a current frame is acknowledged and one SIFS elapses is indicated based on whether the header of the MAC frame includes the HRL control type of the A-Control field. If the header of the MAC frame does not include the HRL control type of the A-Control field, the next PPDU is not transmitted, and if the header of the MAC frame includes the HRL control type of the A-Control field, the next PPDU is transmitted, and the next PPDU is the same as the current PPDU except for the content of the PSDU. For the meanings of other fields, reference may be made to the embodiments illustrated in FIG. 9, which are not elaborated herein any further.

The HRL control type format of the A-Control field is an illustrative possible example. In different embodiments or designs, the A-Control field may be changed in at least one of the design aspects, such as the position of the field in the frame, the arrangement order with other fields, the number of occupied octets, the number of occupied bits, the element name, and the field name, which is not limited in the embodiments of the present disclosure.

In a possible design of these embodiments, subsequent to receiving the first parameter in the current PPDU, the second retransmission apparatus identifies whether the next PPDU will be retransmitted. In a case where the second station identifies that the next PPDU be retransmitted, the transmission time position and duration of the retransmission PPDU are determined based on at least one of the Number of Maximum Retry field, the Number of Retry per MCS field, or the Step of MCS Decrease field. The retransmission PPDU is a PPDU used to carry the next frame that is retransmitted, and the retransmission PPDU may be one or more PPDUs following the next PPDU.

Illustratively, the second retransmission apparatus receives a PPDU carrying data 1 frame, and the MCS=6 and the duration of the PPDU is 100 microseconds. Since the HRL Control field indicates a next PPDU is to be transmitted after a current frame is acknowledged and one SIFS, and the duration of the next PPDU is the same as the duration of the current PPDU, the second retransmission apparatus infers that the second station will receive a PPDU carrying a data 2 frame after one SIFS upon the acknowledgement, and the duration of the PPDU is also 100 microseconds.

Next, the second retransmission apparatus receives the next PPDU after SIFS, but the second retransmission apparatus finds a check error subsequent to receiving the next PPDU. Therefore, the second retransmission apparatus determines that the first station has failed to transmit the data 2 frame and will perform a retransmission. Based on the value of the Step of MCS Decrease field being 1, it can be determined that MCS5 will be used for the first retransmission PPDU. In combination with the duration of the PPDU carrying the data 1 frame, it can be inferred that the duration of the first retransmission PPDU is 125 microseconds. Subsequent to waiting for AckTimeout plus PIFS, the second retransmission apparatus receives the first retransmission PPDU, but finds a check error again subsequent to receiving the first retransmission PPDU. Therefore, the second retransmission apparatus determines that the first station will continue to perform a retransmission, and MCS4 will be used for the second retransmission PPDU. In combination with the duration of the PPDU carrying the data 1 frame, it can be inferred that the duration of the second retransmission PPDU is 150 microseconds. Subsequent to waiting for AckTimeout plus PIFS, the second retransmission apparatus receives the second retransmission PPDU and the check is successful. Thus, it is determined that the retransmission process ends, and the first retransmission apparatus will not perform further retransmissions.

In a possible design of these embodiments, in a case where the first subfield takes a first value, the next PPDU is transmitted based on the retransmission parameter; and in a case where the first subfield takes a second value, the next PPDU is transmitted based on a parameter other than the retransmission parameter.

In a possible design of these embodiments, in a case where the first subfield takes the first value and a retransmission occurs, the next PPDU is a retransmission PPDU transmitted based on a second parameter and a third parameter; and/or in a case where the first subfield takes the first value, and the second retransmission apparatus fails to successfully receive the next PPDU, the retransmission PPDU of the next PPDU is transmitted based on the second parameter and the third parameter; wherein the retransmission PPDU of the next PPDU is a PPDU that carries the next frame that is retransmitted. Identifying retransmission means that the next PPDU has not been successfully received and needs to be retransmitted.

In a possible design of these embodiments, after the first retransmission apparatus has successfully competed for a channel and reserved a TXOP for interaction of multiple frames, the first station, when transmitting a non-initial frame, carries the above HRL Control field in the HT Control field of the MAC header of the following types of frames:
individually addressed Management frames other than Action No Ack frames;
individually addressed non-QoS data frames; and
individually addressed QoS Data frames with Normal Ack or Implicit BAR Ack policy.

Illustratively, in a case where the first retransmission apparatus carries the HRL Control field in an individually addressed non-QoS data frame, or carries the HRL Control field in an individually addressed non-QoS Data frame and the More Same PPDU field (first subfield) takes a value of 1 (the first value), the next PPDU is transmitted based on the retransmission parameter; and in a case where the second retransmission apparatus has identified the retransmission, the first retransmission apparatus transmits the retransmission PPDU based on Number of Maximum Retry field, the Number of Retry per MCS field, and the Step of MCS Decrease field in the HRL Control field.

In a case where the first retransmission apparatus does not carry the HRL Control field in the transmitted frame, or the first retransmission apparatus carries the HRL Control field in the transmitted frame but the More Same PPDU field (the first subfield) takes a value of 0 (the second value), the next PPDU does not need to be transmitted based on the retransmission parameter but is transmitted based on another parameter other than the retransmission parameter; and in a case where the second retransmission apparatus has identified the retransmission, the retransmission may not be transmitted based on the retransmission parameter.

In a possible design of these embodiments, the transmitting module 2920 is configured to transmit an Ack frame or a BA frame.

In a possible design of these embodiments, the transmitting module 2920 is configured to transmit the Ack frame or the BA frame in a case where the first subfield takes a second value.

Illustratively, in a case where the frame received by the second retransmission apparatus does not include an HRL Control field, or includes an HRL Control field but the More Same PPDU field therein takes a value of 0, the second retransmission apparatus transmits the Ack frame or the BA frame.

In a possible design of these embodiments, the transmitting module 2920 is configured to transmit the Ack frame or the BA frame in a case where the first subfield takes the first value and the PPDU is successfully received; and/or transmit the Ack frame or the BA frame in a case where the first subfield takes the first value and no retransmission has occurred.

Illustratively, in a case where the frame received by the second retransmission apparatus includes an HRL Control field, or includes an HRL Control field and the More Same PPDU field therein takes a value of 1, if no retransmission has occurred, the second retransmission apparatus transmits the Ack frame or the BA frame.

In a possible design of these embodiments, the broadcasting module 2930 is configured to broadcast at least one first frame, wherein first frame is used for instructing another apparatus around the second retransmission apparatus to set an NAV, and the first frame is a frame transmitted within a first time period. The first time period is determined based on the retransmission parameter, and the first time period is a time period outside a time period when the retransmission PPDU is interfered with.

In a possible design of these embodiments, the Time field in the first frame is set based on the retransmission parameter, and the Time field is used for setting the NAV.

In a possible design of these embodiments, the broadcasting module 2930 is configured to broadcast at least one first frame in a case where the first subfield takes the first value and the next PPDU is not successfully received; and/or broadcast at least one first frame in a case where the first subfield takes the first value and a retransmission is identified.

Illustratively, in a case where the frame received by the second retransmission apparatus includes an HRL Control field, or includes an HRL Control field and the More Same PPDU field therein takes a value of 1, if the retransmission is identified, the second retransmission apparatus estimates the transmission time period of the retransmission PPDU based on the retransmission parameter transmitted by the first retransmission apparatus, and such that the second retransmission apparatus can transmit one or more first frames within a time period (first time period) when the retransmission PPDU is not interfered.

In a possible design of these embodiments, if the MAC layer of the second retransmission apparatus does not receive a first primitive within the first delay interval corresponding to one PPDU, the first time period is a time period from the end time of the first delay interval to the start time of the next retransmission PPDU; and
in a case where the MAC layer of the second retransmission apparatus receives the first primitive within the first delay interval corresponding to one PPDU, the first time period is a time interval from the end time of one PPDU to the start time of the next retransmission PPDU;
wherein the first delay interval represents a reception delay of the physical layer; the first delay interval is a time interval within the transmission time period corresponding to one PPDU; and the first primitive is a primitive indicating that the physical layer has received a valid PPDU.

Illustratively, in a case where the MAC layer of the second retransmission apparatus does not receive the PHY-RXSTART.indication primitive within the RxPHYStartDelay interval corresponding to one PPDU, the first time period is a time period from the end time of the RxPHYStartDelay interval to the start time of the next retransmission PPDU; and
in a case where the MAC layer of the second retransmission apparatus receives the PHY-RXSTART.indication primitive within the RxPHYStartDelay interval corresponding to one PPDU, the first time period is a time period from the end time of the PPDU to the start time of the next retransmission PPDU.

In a possible design of these embodiments, the second retransmission apparatus is in a sleep state or a closed state during the first time period, and wakes up in a time period outside the first time period to receive a frame from the first retransmission apparatus, thereby preventing other stations around the second retransmission apparatus from occupying the channel.

### II. Implementation based on Per TXOP:

In a possible design of these embodiments, the receiving module 2910 is configured to receive a retransmission parameter from the first retransmission apparatus after an initial frame of a TXOP; wherein the retransmission parameter is a parameter used for transmitting a designated frame within the TXOP.

In a possible design of these embodiments, the retransmission parameter is transmitted in TXOP granularity.

In a possible design of these embodiments, the retransmission parameter includes a retransmission parameter associated with transmission of the designated frame within the TXOP.

In a possible design of these embodiments, the retransmission parameter includes sat least one of a second parameter, a third parameter, a fourth parameter, a fifth parameter, a sixth parameter, a seventh parameter, an eighth parameter, or a ninth parameter;
wherein the second parameter is used to indicate the maximum number of retransmissions;
the third parameter is used to indicate an MCS used in the case of retransmission, and the third parameter includes a number of consecutive retransmissions using the same MCS, and/or a decreased value of MCS for each retransmission;
the fourth parameter is used to indicate whether a next PPDU is to be transmitted after a current frame is acknowledged and one SIFS elapses, wherein the next PPDU is a PPDU carrying the next frame;
the fifth parameter is used to indicate a PHY version of a PPDU;
the sixth parameter is used to indicate a first time interval, wherein the first time interval is a time interval from a start time of a PPDU to reporting of a first primitive to a MAC layer, and the first time interval is referred to as RxPHYStartDelay; the first primitive is a primitive indicating that the physical layer has received a valid PPDU, and the first primitive is referred to as a PHY-RXSTART.indication primitive;
the seventh parameter is used to indicate the duration of a PPDU;
the eighth parameter is used to indicate the length of a PSDU; and
the ninth parameter is used to indicate the MCS used for transmitting a PPDU.

In a possible design of these embodiments, the fourth parameter is a Boolean parameter, and the parameters other than the fourth parameter are integer parameters.

In a possible design of these embodiments, the fourth parameter is carried in each PPDU.

In a possible design of these embodiments, all or part of the parameters other than the fourth parameter are carried in a first request frame.

In a possible design of these embodiments, all or part of the parameters other than the fourth parameter are carried in a first response frame.

In a possible design of these embodiments, all or part of the parameters other than the fourth parameter are carried in each PPDU.

### Transmission mode for retransmission parameter:

(1) In a possible design of these embodiments, the fourth parameter is carried in a third field.

In a possible design of these embodiments, the third field is the HRL Control field. The HRL Control field is defined to transmit the fourth parameter, and the HRL Control field is a variant type of the A-Control field in the HT Control field located at the header of the MAC frame.

FIG. 11 illustrates a schematic diagram of an HRL control type format of the A-Control field according to some embodiments of the present disclosure. The format includes at least one of: a Control ID field or a Control Information field.

The Control ID field occupies a total of four bits from B0 to B3, and the Control Information field occupies a total of one bit at B4.

The Control ID field is used to indicate the variant type of the A-Control field, and its value may be any integer from 10 to 14. For example, the Control ID field takes a value of 10 to indicate that the variant type is the HRL control type (HRL Control field).

The Control Information field contains parameters used for enhancing link reliability.

With respect to the Control Information field, the format of the Control Information field includes a More PPDU field.

The More PPDU field occupies one bit.

The More PPDU field is used to indicate whether a next PPDU is to be transmitted after a current frame is acknowledged and one SIFS elapses. For example, the More PPDU field takes a value of 1 to indicate to transmit the next PPDU, and takes a value of 0 to indicates not to transmit the next PPDU.

In a possible design of these embodiments, the fourth parameter occupies at least one fourth subfield in the third field.

Illustratively, the fourth parameter occupies the More PPDU field.

The above HRL control type format of the A-Control field is an illustrative possible example. In different embodiments or designs, that the A-Control field may be changed in at least one of the design aspects, such as the position of the field in the frame, the arrangement order with other fields, the number of occupied octets, the number of occupied bits, the element name, and the field name, which is not limited in the embodiments of the present disclosure.

(2) In a possible design of these embodiments, the retransmission parameters other than the fourth parameter are carried in the first request frame.

In a possible design of these embodiments, the first request frame is an UHR link setup request frame. FIG. 12 illustrates a schematic diagram of a format of a UHR link setup request frame according to some embodiments of the present disclosure. The format of the UHR link setup request frame includes at least one of: a Frame Control field, a Duration field, an Address 1 field, an Address 2 field, an Address 3 field, a Sequence Control field, an HT Control field, a Frame body field, or an FCS field.

The Frame Control field occupies two octets, the Duration field occupies two octets, the Address 1 field occupies six octets, the Address 2 field occupies six octets, the Address 3 field occupies six octets, the Sequence Control field occupies two octets, the HT control field occupies four octets, the Frame Body field occupies two octets, and the FCS field occupies four octets.

With respect to the above Frame Body field, the format of the Frame Body field includes an Action subfield. In the embodiments of the present disclosure, the subfield is referred to as a field for short.

The Action subfield occupies four octets.

With respect to the above Action subfield, the format of the Action subfield includes at least one of: a Category subfield, a UHR Link Action subfield, a Dialog Token subfield, or a UHR Link Parameters subfield.

The Category subfield occupies one octet, the UHR Link Action subfield occupies one octet, the Dialog Token subfield occupies one octet, and the UHR Link Parameters subfield occupies nine octets.

The Category subfield is used to indicate a new action frame type, i.e., the UHR link action frame type, with a value of any integer from 39 to 125, for example, 40.

The UHR Link Action subfield is used to indicate the subtype of the UHR link action frame, with a value of any integer from 0 to 255. For example, the UHR Link Action subfield takes a value of 0 to indicate that the UHR link action frame is a UHR link setup request frame.

The Dialog Token subfield is used to indicate a pair of UHR link setup request frame and UHR link setup response frame that are associated with each other, with the Dialog Token subfield being included in both frames.

The UHR Link Parameters subfield is used to carry parameters related to a UHR retransmission mechanism.

With respect to the above UHR Link Parameters subfield, the format of the UHR Link Parameters subfield includes at least one of: a TID subfield, a PHY Version subfield, a RxPHYStartDelay subfield, a PPDU Time subfield, a PSDU Length subfield, an MCS subfield, a Number of Maximum Retry subfield, a Number of Retry per MCS subfield, a Step of MCS Decrease subfield, or a Reserved subfield.

The TID subfield occupies four bits, the PHY Version subfield occupies four bits, the RxPHYStartDelay subfield occupies eight bits, the PPDU Time subfield occupies 16 bits, the PSDU Length subfield occupies 24 bits, the MCS subfield occupies four bits, the Number of Maximum Retry subfield occupies four bits, the Number of Retry per MCS subfield occupies three bits, the Step of MCS Decrease subfield occupies three bits, and the Reserved subfield occupies two bits.

The TID subfield is used to indicate a flow identifier of a flow for which a UHR retransmission solution is enabled.

The PHY Version subfield is used to indicate the version of the PPDU that is used. The values and their meanings are provided in Table 2.

The RxPHYStartDelay subfield is used to indicate the delay between starting to receive the PPDU by the receiving apparatus and initiating the PHY-RXSTART.indication, and is used to assist the receiving apparatus in determining whether the receiving station has successfully received the preamble part of the next PPDU. The value of the RxPHYStartDelay subfield is in a unit of microseconds.

The PPDU Time subfield is used to indicate the duration of the transmitted PPDU, and the value of the PPDU Time subfield is in a unit of microseconds.

The PSDU Length subfield is used to indicate the length of the PSDU carried in the transmitted PPDU, and the value of the PSDU Length subfield is in a unit of octets.

The MCS subfield is used to indicate the MCS used for transmitting the PPDU.

The Number of Maximum Retry subfield is used to indicate the maximum number of retransmissions, and its value represents the number of retransmissions.

The Number of Retry per MCS subfield is used to indicate the number of consecutive retransmissions using the same MCS, and its value represents the number of consecutive retransmissions using the same MCS, or the number of consecutive retransmissions using the same MCS minus one. For example, in a case where the value of the Number of Retry per MCS field is represented by three bits, if the number of consecutive retransmissions using the same MCS is 1, the value is 001; or, the value is 000. In a case where the value of the Number of Retry per MCS field is the number of consecutive retransmissions using the same MCS minus one, the value may be represented by more numbers, starting from 000, thereby improving the utilization ratio.

The Step of MCS Decrease subfield is used to indicate the decreased value of MCS for each retransmission, and its value is the decreased value of MCS. When the value of the MCS decreases to zero, it should remain at zero and not change any further.

The above format of the UHR link setup request frame is an illustrative possible example. In different embodiments or designs, the above field may change in at least one of the deign aspects, such as the position of the field in the frame, the arrangement order with other fields, the number of occupied octets, the number of occupied bits, the element name, and the field name, which is not limited in the embodiments of the present disclosure.

In a possible design of these embodiments, the retransmission parameters other than the fourth parameter each occupy at least one subfield in the first request frame.

Illustratively, the second parameter occupies the Number of Maximum Retry subfield; the third parameter occupies the Number of Retry per MCS subfield and the Step of MCS Decrease subfield; the fifth parameter occupies the PHY Version subfield; the sixth parameter occupies the RxPHYStartDelay subfield; the seventh parameter occupies the PPDU Time subfield; the eighth parameter occupies the PSDU Length subfield; and the ninth parameter occupies the MCS subfield.

In a possible design of these embodiments, only the same MCS is used for consecutive retransmissions, and the value of the Number of Retry per MCS subfield is the number of consecutive retransmissions using the same MCS or the number of consecutive retransmissions using the same MCS minus one. The Step of MCS Decrease subfield is not used, or the Step of MCS Decrease subfield takes a value of 0, or each bit in the Step of MCS Decrease subfield takes a value of 0.

In a possible design of these embodiments, the value of the MCS is decreased for each retransmission, and the value of the Step of MCS Decrease subfield is the decreased value of MCS. The Number of Retry per MCS subfield is not used, or the Number of Retry per MCS subfield takes a value of 0, or each bit in the subfield takes a value of 0.

In a possible design of these embodiments, the same MCS is used for consecutive retransmissions. After retransmissions are performed for the number of times corresponding to the value of the Number of Retry per MCS field, the value of the MCS is decreased based on the value corresponding to the Step of MCS Decrease field to continue retransmissions. For example, the same MCS (with a value of six) is used for consecutive retransmissions first, the value corresponding to the Number of Retry per MCS field is four, and the value corresponding to the Step of MCS Decrease field is one, that is, after four times of retransmissions are performed, the MCS value is decreased, with a decreased value of one each time, to continue retransmissions according to the values of MCS being five, four, three, two, one, and zero.

In a possible design of these embodiments, subsequent to receiving the fourth parameter in the current PPDU, the second transmission apparatus identifies whether the next PPDU will be retransmitted. In a case where it is identified that the next PPDU will be retransmitted, the transmission time position and the duration of the retransmission PPDU are determined based on at least one of the Number of Maximum Retry subfield, the Number of Retry per MCS subfield, the Step of MCS Decrease subfield, or the PPDU Time subfield. The retransmission PPDU is a PPDU used to carry the next frame that is retransmitted, which may be one or more PPDU following the next PPDU.

(3) In a possible design of these embodiments, the retransmission parameters other than the fourth parameter are carried in the first response frame.

FIG. 13 illustrates a schematic diagram of a format of a UHR link setup response frame according to some embodiments of the present disclosure. The format of the UHR link setup response frame includes at least one of: a Frame Control field, a Duration field, an Address 1 field, an Address 2 field, an Address 3 field, a Sequence Control field, an HT Control field, a Frame body field, or an FCS field.

The Frame Control field occupies two octets, the Duration field occupies two octets, the Address 1 field occupies six octets, the Address 2 field occupies six octets, the Address 3 field occupies six octets, the Sequence Control field occupies two octets, the HT Control field occupies four octets, the Frame Body field occupies two octets, and the FCS field occupies four octets.

With respect to the above Frame Body field, the format of the Frame Body field includes an Action subfield. In the embodiments of the present disclosure, the subfield is also referred to as a field for short.

The Action subfield occupies four octets.

With respect to the above Action subfield, the format of the Action subfield includes at least one of: a Category subfield, a UHR Link Action subfield, a Dialog Token subfield, a Status Code subfield, and UHR Link Parameters subfield.

The Category subfield occupies one octet, the UHR Link Action subfield occupies one octet, the Dialog Token subfield occupies one octet, the Status Code subfield occupies two octets, and the UHR Link Parameters subfield occupies zero or nine octets.

The Category subfield is used to indicate a new action frame type, i.e., the UHR link action frame type, with a value of any integer from 39 to 125, for example, 40.

The UHR Link Action subfield is used to indicate the subtype of the UHR link action frame, with a value of any integer from 0 to 255. For example, the UHR Link Action subfield takes a value of 1 to indicate that the UHR link action frame is a UHR link setup response frame.

The Status Code subfield is used to indicate a response result to the UHR link setup request frame. The Status Code subfield takes a value of 0 to indicate success (SUCCESS), takes a value of 37 to indicate a rejection (REQUEST_DECLINED), or takes a value of 39 to indicate a rejection with suggested changes (REJECTED_WITH_SUGGESTED_CHANGES).

The UHR Link Parameters subfield is only present when the Status Code subfield takes a value of 39; otherwise, this field is not present.

With respect to the above UHR Link Parameters subfields, the format of the UHR Link Parameters subfield includes at least one of: a TID subfield, a PHY Version subfield, a RxPHYStartDelay subfield, a PPDU Time subfield, a PSDU Length subfield, an MCS subfield, a Number of Maximum Retry subfield, a Number of Retry per MCS subfield, a Step of MCS Decrease subfield, or a Reserved subfield.

The TID subfield occupies four bits, the PHY Version subfield occupies four bits, the RxPHYStartDelay subfield occupies eight bits, the PPDU Time subfield occupies 16 bits, the PSDU Length subfield occupies 24 bits, the MCS subfield occupies four bits, the Number of Maximum Retry subfield occupies four bits, the Number of Retry per MCS subfield occupies three bits, the Step of MCS Decrease subfield occupies three bits, and the Reserved subfield occupies two bits.

For the meanings of the aforementioned fields or subfields, reference may be made to the corresponding embodiments of the UHR link setup request frame, which are not elaborated herein any further.

The above format of the UHR link setting response frame is an illustrative possible example. In different embodiments or designs, the above field may be changed in at least one of the design aspects, such as the position of the field in the frame, the arrangement order with other fields, the number of occupied octets, the number of occupied bits, the element name, and the field name, which is not limited in the embodiments of the present disclosure.

In a possible design of these embodiments, the retransmission parameters other than the fourth parameter each occupy at least one subfield in the first response frame.

Illustratively, the second parameter occupies the Number of Maximum Retry subfield; the third parameter occupies the Number of Retry per MCS subfield and the Step of MCS Decrease subfield; the fifth parameter occupies the PHY Version subfield; the sixth parameter occupies the RxPHYStartDelay subfield; the seventh parameter occupies the PPDU Time subfield; the eighth parameter occupies the PSDU Length subfield; and the ninth parameter occupies the MCS subfield.

In a possible design of these embodiments, the first response frame includes a fifth subfield, wherein the fifth subfield is used to indicate a response result to the first request frame.

In a possible design of these embodiments, in a case where the fifth subfield takes a fifth value, the response result indicates success; in a case where the fifth subfield takes a sixth value, the response result indicates a rejection; and in a case where the fifth subfield takes a seventh value, the response result indicates a rejection with a suggested parameter provided; wherein the suggested parameter includes at least one of the second parameter, the third parameter, the fifth parameter, the sixth parameter, the seventh parameter, the eighth parameter, or the ninth parameter.

Illustratively, the fifth subfield is a Status Code subfield, and the fifth subfield is used to indicate a response result to the UHR link setup request frame. The fifth subfield takes a value of 0 to indicates success; the fifth subfield takes a value of 37 to indicates a rejection; and the fifth subfield takes a value of 39 to indicate a rejection with a suggested parameter provided.

### Retransmission rules:

In a possible design of these embodiments, in a case where the fifth subfield takes the fifth value or the seventh value, the next PPDU is transmitted based on the retransmission parameter; and in a case where the fifth subfield takes the sixth value, the next PPDU is transmitted based on a parameter other than the retransmission parameter.

In a possible design of these embodiments, in a case where the fifth subfield takes the fifth value or the seventh value, and the second retransmission apparatus identifies a retransmission, the next PPDU is a retransmission PPDU transmitted based on the retransmission parameters; and/or
in a case where the fifth subfield takes the fifth value or the seventh value, and the second retransmission apparatus fails to successfully receive the next PPDU, the retransmission PPDU of the next PPDU is transmitted based on the retransmission parameter;
wherein the retransmission PPDU of the next PPDU is a PPDU carrying the next frame that is retransmitted. Identifying the retransmission means that the next PPDU has not been successfully received and needs to be retransmitted.

In a possible design of these embodiments, when the first retransmission apparatus has successfully competed for a channel and reserved a TXOP for interaction of multiple frames, the first retransmission apparatus transmits a first request frame (UHR link setup request frame) to the second retransmission apparatus after an initial frame within the TXOP to request negotiation of other retransmission parameters other than the fourth parameter. If the negotiation is successful, all PPDUs carrying the following types of frames transmitted by the first retransmission apparatus to the second station within the TXOP must comply with the negotiated retransmission parameter:
individually addressed Management frames other than Action No Ack frames;
individually addressed non-QoS Data frames; and
individually addressed QoS Data frames with Normal Ack or Implicit BAR Ack policy.

In a possible design of these embodiments, the third field is carried in the last frame within the TXOP, and the fourth subfield takes a third value; and the third field is carried in a frame other than the last frame within the TXOP, and the fourth subfield takes a fourth value.

Illustratively, within the TXOP, the last frame transmitted by the first retransmission apparatus to the second retransmission apparatus carries an HRL Control field, and the More PPDU field takes a value of 0; and within the TXOP, frames, other than the last frame, transmitted by the first retransmission apparatus to the second retransmission apparatus carry an HRL Control field, and the More PPDU field takes a value of 1.

In a possible design of these embodiments, fifth subfield takes the fifth value or the seventh value, and the transmitting module 2920 is configured to transmit an Ack frame or a BA frame.

In a possible design of these embodiments, subsequent to receiving the first request frame, if the second retransmission apparatus agrees with the retransmission parameter therein, the second retransmission apparatus replies with a first response frame of which the fifth subfield takes the fifth value; if the second retransmission apparatus disagrees with the retransmission parameter therein, the second retransmission apparatus replies with a first response frame of which the fifth subfield takes the sixth value; and if the second retransmission apparatus disagrees with the retransmission parameter therein but provides a suggested parameter, the second retransmission apparatus replies with a first response frame of which the fifth subfield takes the seventh value.

Illustratively, subsequent to receiving a UHR link setup request frame, if the second retransmission apparatus agrees with the retransmission parameter therein, the second retransmission apparatus replies with a UHR link setup response frame of which the Status Code subfield takes a value of 0; if the second retransmission apparatus disagrees with the retransmission parameter therein, the second retransmission apparatus replies with a UHR link setup response frame of which the Status Code subfield takes a value of 37; and if the second retransmission apparatus disagrees with the retransmission parameter therein but provides a suggested parameter, the second retransmission apparatus replies with a UHR link setup response frame of which the Status Code subfield takes a value of 39.

In a possible design of these embodiments, the transmitting module 2920 is configured to transmit the Ack frame or the BA frame in a case where the fourth subfield takes an eighth value; wherein the fourth subfield is a subfield occupied by the fourth parameter in the third field.

Illustratively, the Status Code subfield takes a value of 0 or 39. When the frame received by the second retransmission apparatus does not include an HRL Control field, or includes an HRL Control field but the More PPDU field takes a value of 0, the second retransmission apparatus transmits an Ack frame or a BA frame.

In a possible design of these embodiments, the transmitting module 2920 is configured to transmit the Ack frame or the BA frame in a case where the fourth subfield takes a ninth value and the PPDU is successfully received; and/or transmit the Ack frame or the BA frame in a case where the fourth subfield takes the ninth value and no retransmission has occurred; wherein the fourth subfield is a subfield occupied by the fourth parameter in the third field.

Illustratively, the Status Code subfield takes a value of 0 or 39. When the frame received by the second retransmission apparatus includes an HRL Control field, or includes an HRL Control field and the More PPDU field therein takes a value of 1, the second retransmission apparatus transmits an Ack frame or a BA frame.

In a possible design of these embodiments, the fifth subfield takes the fifth value or the seventh value. The broadcasting module 2930 is configured to broadcast at least one first frame; wherein the first frame is used for instructing another device around the second retransmission apparatus to set an NAV, and the first frame is a frame transmitted within a first time period. The first time period is determined based on the retransmission parameter, and the first time period is a time period outside a time period when the retransmission PPDU is interfered with.

In a possible design of these embodiments, the broadcasting module 2930 is configured to broadcast at least one first frame in a case where the fourth subfield takes the ninth value and the next PPDU is not successfully received; and/or the broadcasting module 2930 is configured to broadcast at least one first frame in a case where the fourth subfield takes the ninth value and a retransmission has been identified; wherein the fourth subfield is a subfield occupied by the fourth parameter in the third field.

Illustratively, when the frame received by the second retransmission apparatus includes an HRL Control field and the More PPDU field takes a value of 1, if the second retransmission apparatus has identified the retransmission, the second retransmission apparatus estimates the transmission time period of the retransmission PPDU based on the retransmission parameter transmitted by the first retransmission apparatus, and thereby transmit one or more first frames within a time period when the retransmission PPDU is not interred (the first time period).

In a possible design of these embodiments, in a case where the MAC layer of the second retransmission apparatus does not receive the first primitive within the first delay interval corresponding to one PPDU, the first time period is a time period from the end time of the first delay interval to the start time of the next retransmission PPDU; and
in a case where the MAC layer of the second retransmission apparatus receives the first primitive within the first delay interval corresponding to one PPDU, the first time period is a time period from the end time of one PPDU to the start time of the next retransmission PPDU;
wherein the first delay interval represents the reception delay of the physical layer; the first delay interval is a time interval within the transmission time period corresponding to one PPDU; and the first primitive is a primitive indicating that the physical layer has received a valid PPDU.

Illustratively, in a case where the MAC layer of the second retransmission apparatus does not receive the PHY-RXSTART.indication primitive within the RxPHYStartDelay interval corresponding to one PPDU, the first time period is a time period from the end time of the RxPHYStartDelay interval to the start time of the next retransmission PPDU; and in a case where the MAC layer of the second retransmission apparatus receives the PHY-RXSTART.indication primitive within the RxPHYStartDelay interval corresponding to one PPDU, the first time period is a time interval from the end time of the PPDU to the start time of the next retransmission PPDU.

In a possible design of these embodiments, the first frame is a VAck frame or a CTS frame. The VAck frame is a newly defined control frame that is broadcast by the second retransmission apparatus (the receiving device) during a time period when the retransmission PPDU is not interfered. The VAck frame is used for instructing another device around the receiving device to set an NAV to prevent the another device from using the channel. The PPDU carrying the VAck frame is a non-HT PPDU (non-HT PPDU) or another type of PPDU.

In some embodiments, the first frame (VAck frame) has the following two formats.
(1) The first frame includes a sixth subfield, wherein the six subfield is used to indicate a frame subtype.

FIG. 21 illustrates a schematic diagram of a control frame (VAck frame) format according to some embodiments of the present disclosure. The VAck frame format includes at least one of: a Frame Control field, a Duration field, an RA field, or an FCS field.

The Frame Control field occupies two octets, the Duration field occupies two octets, the RA field occupies six octets, and the FCS field occupies four octets.

The Frame Control field is used to indicate information such as the type of the MAC frame.

The Duration field is used to indicate the duration of the TXOP to be protected, with a value of the length from the end time of the VAck frame to the end time of the TXOP, in a unit of microseconds.

The RA field is used to indicate a receiving address, which is a broadcast address herein.

The FCS field is used to indicate a frame check sequence.

With respect to the Frame Control field, the format of the Frame Control field includes at least one of: a Protocol Version subfield, a Type subfield, a Subtype subfield, a To DS subfield, a From DS subfield, a More Fragments subfield, a Retry subfield, a Power Management subfield, a More Data subfield, a Protected Frame subfield, or a +HTC subfield. In the embodiments of the present disclosure, subfields can be referred to simply as fields.

The Protocol Version subfield occupies a total of two bits from B0 to B1, the Type subfield occupies a total of two bits from B2 to B3, the Subtype subfield occupies a total of four bits from B4 to B7, the To DS subfield occupies a total of one bit at B8, the From DS subfield occupies a total of one bit at B9, the More Fragments subfield occupies a total of one bit at B10, the Retry subfield occupies a total of one bit at B11, the Power Management subfield occupies a total of one bit at B12, the More Data subfield occupies a total of one bit at B13, the Protected Frame subfield occupies a total of one bit at B14, and the +HTC subfield occupies a total of one bit at B15.

The Protocol Version subfield is used to indicate the version of the MAC frame. For example, Protocol Version subfield takes a value of 0 to indicate a basic version, and takes a value of 1 to indicate a PV1 MAC frame version.

The Type subfield is used to indicate a frame type. For example, the Type subfield takes a value of 1 (01 in binary) to indicates that the frame type is a control frame.

The Subtype subfield is used to indicate a frame subtype. For example, the Subtype subfield takes a value of 15 (1111 in binary) to indicate that the frame subtype is a VAck frame. Illustratively, the sixth subfield is a Subtype subfield.

The To DS subfield and the From DS subfield are used to indicate the transmission direction of a frame.

The More Fragments subfield is used to indicate whether a fragment is a non-last fragment after segmentation of the same MSDU or MPDU. For example, the More Fragments subfield takes a value of 1 to indicates "Yes", and takes a value of 0 to indicate "No".

The Retry subfield is used to indicate whether a frame is a retransmission frame. For example, the Retry subfield takes a value of 1 to indicate "Yes", and takes a value of 0 to indicate "No". In a VAck frame, the value of the Retry subfield is always 0, indicating that the VAck frame is not a retransmission frame.

The Power Management subfield is used to indicate a power management mode.

The More Data subfield is used by the AP to indicate to the STA in a power-saving mode whether more cached data waiting to be transmitted to the STA are present. For example, the More Data subfield takes a value of 1 to indicate "Yes", and takes a value of 0 to indicate "No".

The Protected Frame subfield is used to indicate whether a frame body is encrypted. For example, the Protected Frame subfield takes a value of 1 to indicate "Yes", and takes a value of 0 to indicate "No". In a VAck frame, the value of the Protected Frame subfield is always 0, indicating that the frame body is not encrypted.

The +HTC subfield is used to indicate whether the HTC field is included in the frame header. For example, the +HTC subfield takes a value of 1 to indicate "Yes", and takes a value of 0 to indicate "No". In a VAck frame, the value of the +HTC subfield is always 0, indicating that the HTC field is not included.

The control frame format is an illustrative possible example. In different embodiments or designs, the above field may be changed in at least one of the design aspects, such as the position of the field within the frame, the arrangement order with other fields, the number of occupied octets, the number of occupied bits, the element name, and the field name, which is not limited in the present disclosure.

(2) The first frame includes a sixth subfield and a seventh subfield. The sixth subfield is used to indicate a frame subtype, and the seventh subfield is used to indicate a subtype of a control frame extension.

FIG. 22 illustrates a schematic diagram of a control frame (VAck frame) format according to some embodiments of the present disclosure. The VAck frame format includes at least one of: a Frame Control field, a Duration field, an RA field, or an FCS field.

The Frame Control field occupies two octets, the Duration field occupies two octets, the RA field occupies six octets, and the FCS field occupies four octets.

With respect to the Frame Control field, the format of the Frame Control field includes at least one of: a Protocol Version subfield, a Type subfield, a Subtype subfield, a Control Frame Extension subfield, a Power Management subfield, a More Data subfield, a Protected Frame subfield, or a +HTC subfield. In the embodiments of the present disclosure, the subfield is referred to as a field for short.

The Protocol Version subfield occupies a total of two bits from B0 to B1, the Type subfield occupies a total of two bits from B2 to B3, the Subtype subfield occupies a total of four bits from B4 to B7, the Control Frame Extension subfield occupies a total of four bits from B8 to B11, the Power Management subfield occupies a total of one bit at B12, the More Data subfield occupies a total of one bit at B13, the Protected Frame subfield occupies a total of one bit at B14, and the +HTC subfield occupies a total of one bit at B15.

The Type subfield is used to indicate a frame type. For example, the Type subfield takes a value of 1 (01 in binary) to indicate that the frame type is a control frame.

The Subtype subfield is used to indicate a frame subtype. For example, the Subtype subfield takes a value of 6 (0110 in binary) to indicate that the frame subtype is a control frame extension. Illustratively, the sixth subfield is a Subtype subfield.

The Control Frame Extension subfield is used to indicate the subtype of the control frame extension, with a value of an integer from 12 to 15. For example, the Control Frame Extension subfield takes a value of 12 (1100 in binary) to indicate that the subtype of the control frame extension is a VAck frame. Illustratively, the seventh subfield is a Control Frame Extension subfield.

For the meanings of the other fields, reference may be made the embodiment in FIG. 21, which are not elaborated herein any further.

The above control frame format is an illustrative possible example. In different embodiments or designs, the field may be changed in at least one of the design aspects, such as the position of the field in the frame, the arrangement order with other fields, the number of occupied octets, the number of occupied bits, the element name, and the field name, which is not limited in the present embodiments.

In addition to being transmitted in the form of the HRL Control field in the MAC frame of the MAC layer, the retransmission parameter in the aforementioned embodiments may also be transmitted in the form of the U-SIG field in the PPDU of the PHY layer in some embodiments.

In some embodiments, the retransmission parameter is carried in a MAC frame of the MAC layer or in a PPDU of the PHY layer.

FIG. 23 illustrates a schematic diagram of a format of the U-SIG field according to some embodiments of the present disclosure. The format of the U-SIG field includes a format of a first part (U-SIG-1) and a format of a second part (U-SIG-2).

The format of the first part (U-SIG-1) includes at least one of: a PHY Version Identifier field, a Bandwidth field, a UL/ DL field, a BSS Color field, a TXOP field, a More Same PPDU field, a Number of Maximum Retry field, a Number of Retry per MCS field, a Step of MCS Decrease field, or a Validate field.

The PHY Version Identifier field occupies a total of three bits from B0 to B2, the Bandwidth field occupies a total of three bits from B3 to B5, the UL/DL field occupies a total of one bit at B6, the BSS Color field occupies a total of six bits from B7 to B12, the TXOP field occupies a total of seven bits from B13 to B19, the More Same PPDU field occupies a total of one bit at B20, the Number of Maximum Retry field occupies a total of two bits from B21 to B22, the Number of Retry per MCS field occupies a total of one bit at B23, the Step of MCS Decrease field occupies a total of one bit at B24, and the Validate field occupies a total of one bit at B25.

The More Same PPDU field is used to indicate whether a next PPDU is to be transmitted after a current frame is acknowledged and one SIFS elapses. The PPDU carrying the next frame is the same as the PPDU carrying the current frame, except the PSDU content. Illustratively, the More Same PPDU takes a value of 1 to indicate "YES" and takes a value of 0 to indicate "NO".

The Number of Maximum Retry field is used to indicate the maximum number of retransmissions, and its value represents the number of retransmissions.

The Number of Retry per MCS field is used to indicate the number of consecutive retransmissions using the same MCS, and its value represents the number of consecutive retransmissions using the same MCS, or the number of consecutive retransmissions using the same MCS minus one. For example, in a case where the value of the Number of Retry per MCS field is represented by three bits, if the number of consecutive retransmissions using the same MCS is 1, the value is 001; otherwise, the value is 000.

The Step of MCS Decrease field is used to indicate the decreased value of MCS for each retransmission, and its value is the decreased value of MCS. When the value of the Step of MCS Decrease field decreases to zero, it should remain at zero and does not change any further.

The format of the second part (U-SIG-2) includes at least one of: a PPDU Type and Compression Mode field, a Validate field, a Punctured Channel Information field, a BSS Color field, an EHT-SIG MCS field, a Number Of EHT-SIG Symbols field, a CRC field, or a Tail field.

The PPDU Type and Compression Mode field occupies a total of two bits from B0 to B1, the Validate field occupies one bit at B2, the Punctured Channel Information field occupies a total of five bits from B3 to B7, the BSS Color field occupies one bit at B8, the EHT-SIG MCS field occupies a total of two bits from B9 to B10, the Number Of EHT-SIG Symbols field occupies a total of five bits from B11 to B15, the CRC field occupies four bits from B16 to B19, and the Tail field occupies a total of six bits from B20 to B25.

The above U-SIG field format is an illustrative possible example. In different embodiments or designs, the field may be change in at least one of the design aspects, such as the position of the field in the frame, the arrangement order with other fields, the number of occupied octets, the number of occupied bits, the element name, and the field name, which is not limited in the present embodiments.

FIG. 24 illustrates a schematic diagram of a U-SIG field according to some embodiments of the present disclosure. The U-SIG field format includes a format of a first part (U-SIG-1) and a format of a second part (U-SIG-2).

The format of the first part (U-SIG-1) includes at least one of: a PHY Version Identifier field, a Bandwidth field, a UL/DL Link field, a BSS Color field, a TXOP field, a More PPDU field, a Disregard field, or a Validate field.

The PHY Version Identifier field occupies a total of three bits from B0 to B2, the Bandwidth field occupies a total of three bits from B3 to B5, the UL/DL field occupies a total of one bit at B6, the BSS Color field occupies a total of six bits from B7 to B12, the TXOP field occupies a total of seven bits from B13 to B19, the More PPDU field occupies a total of one bit at B20, the Disregard field occupies a total of four bits from B21 to B24, and the Validate field occupies a total of one bit at B25.

The More PPDU field is used to indicate whether a next PPDU is to be transmitted after a current frame is acknowledged and one SIFS elapses. For example, the More PPDU field takes a value of 1 to indicate "YES" and takes a value of 0 to indicate "NO".

The format of the second part (U-SIG-2) includes at least one of: a PPDU Type and Compression Mode field, a Validate field, a Punctured Channel Information field, a BSS Color field, an EHT-SIG MCS field, a Number Of EHT-SIG Symbols field, a CRC field, or a Tail field.

The PPDU Type and Compression Mode field occupies a total of two bits from B0 to B1, the Validate field occupies one bit at B2, the Punctured Channel Information field occupies a total of five bits from B3 to B7, the BSS Color field occupies one bit at B8, the EHT-SIG MCS field occupies a total of two bits from B9 to B10, the Number Of EHT-SIG Symbols field occupies a total of five bits from B11 to B15, the CRC field occupies four bits from B16 to B19, and the Tail field occupies a total of six bits from B20 to B25.

The above U-SIG field format is an illustrative possible example. In different embodiments or designs, the field may be change in at least one of the design aspects, such as the position of the field in the frame, the arrangement order with other fields, the number of occupied octets, the number of occupied bits, the element name, and the field name, which is not limited in the present embodiment.

In these embodiments, the receiving module 2910 may be divided into a plurality of receiving sub-modules, e.g., a first receiving sub-module and a second receiving sub-module. The first receiving sub-module is configured to receive the current PPDU from the first retransmission apparatus, and the second receiving sub-module is configured to receive the retransmission parameter from the first retransmission apparatus after the initial frame within the TXOP. Alternatively, the first receiving sub-module is configured to receive the retransmission parameter from the first retransmission apparatus after the initial frame within the TXOP, and the second receiving sub-module is configured to receive the current PPDU from the first retransmission apparatus. The functions of different receiving sub-modules are not limited in these embodiments.

These embodiments are illustrated by taking one receiving module 2910 as an example, and the number of the receiving modules 2910 is not limited.

For the functions of the receiving module 2910, reference may be made to process 2510 in the embodiments illustrated in FIG. 25, process 2512 in the embodiments illustrated in FIG. 26, and process 2514 in the embodiments illustrated in FIG. 27.

For the functions of the transmitting module 2920, reference may be made to process 2522 in the embodiments of FIG. 26 and process 2526 in the embodiments of FIG. 27.

For the functions of the broadcasting module 2930, reference may be made to process 2524 in the embodiments of FIG. 26 and process 2528 in the embodiments of FIG. 27.

FIG. 30 illustrates a schematic structural diagram of a first or second station 3000 according to some embodiments of the present disclosure. The first or second station 3000 includes a processor 3001, a receiver 3002, a transmitter 3003, a memory 3004, and a bus 3005.

The processor 3001 includes one or more processing cores. By running software programs and modules, the processor 3001 executes various functional applications and information processing.

The receiver 3002 and the transmitter 3003 may be implemented as a communication assembly, wherein the communication assembly may be a communication chip and may be referred to as a transceiver. In some embodiments, the receiver 3002 may be configured to implement the functions and processes of at least one of the receiving module 2820 or receiving module 2910 as described above, and the transmitter 3003 may be configured to implement the functions and processes of at least one of the transmitting module 2810, the transmitting module 2920, or the broadcasting module 2930 as described above.

The memory 3004 is connected to the processor 3001 via the bus 3005.

The memory 3004 may be configured to store at least one instruction, and the processor 3001 is configured to execute the at least one instruction to perform the processes in the above method embodiments.

In addition, the memory 3004 may be implemented by any type of volatile or non-volatile storage device, or a combination thereof, including but not limited to: a magnetic or optical disk, an electrically-erasable programmable read only memory (EEPROM), an erasable programmable read only memory (EPROM), a static random access memory (SRAM), a read-only memory (ROM), a magnetic memory, a flash memory, and a programmable read-only memory (PROM).

In some embodiments, the receiver 3002 independently receives signals/data, or the processor 3001 controls the receiver 3002 to receive signals/data, or the processor 3001 requests the receiver 3002 to receive signals/data, or the processor 3001 cooperates with the receiver 3002 to receive signals/data.

In some embodiments, the transmitter 3003 independently transmits signals/data, or the processor 3001 controls the transmitter 3003 to transmit signals/data, or the processor 3001 requests the transmitter 3003 to transmit signals/data, or the processor 3001 cooperates with the transmitter 3003 to transmit signals/data.

In some exemplary embodiments, a computer-readable storage medium is also provided. The computer-readable storage medium stores at least one program, wherein the at least one program, when loaded and executed by a processor, causes the processor to perform the retransmission method according to the method embodiments described above.

In some exemplary embodiments, a computer program product or computer program is also provided. The computer program product or computer program, when executed by a processor, causes the first or the second station 3000 to perform the retransmission methods according to the method embodiments described above.

Those skilled in the art can understand that all or part of the processes to implement the above embodiments may be accomplished through hardware, or through relevant hardware instructed by a program. The program may be stored in a computer-readable storage medium, and the aforementioned storage medium may be a read-only memory, a magnetic disk, an optical disk, or the like.

Described above are merely optional embodiments of the present disclosure and are not intended to limit the present disclosure. Any modifications, equivalent substitutions, improvements, and the like made within the spirit and principles of the present disclosure shall be included within the scope of protection of the present disclosure.

## Claims

1. A retransmission method, performed by a first station, the method comprising:
transmitting a retransmission parameter;
wherein the retransmission parameter is a parameter related to a retransmission by the first station.

2. The method according to claim 1, wherein the retransmission parameter comprises at least one of a first parameter, a second parameter, or a third parameter;
wherein the first parameter is used to indicate whether a next physical layer protocol data unit (PPDU) is to be transmitted after a current frame is acknowledged and one short interframe space (SIFS) elapses, wherein the next PPDU is the same as a current PPDU except for content of a physical layer service data unit (PSDU), wherein the current PPDU comprises the current frame and a retransmission parameter associated with the next PPDU, and the next PPDU is a PPDU carrying a next frame;
the second parameter is used to indicate a maximum number of retransmissions; and
the third parameter is used to indicate a modulation and coding scheme (MCS) used in a case of retransmission, and the third parameter comprises a number of consecutive retransmissions using a same MCS and/or a decreased value of the MCS for each retransmission.

3. The method according to claim 2, wherein the retransmission parameter is carried in a first field.

4. The method according to claim 3, wherein the first field is a High Reliable Link (HRL) Control field.

5. The method according to claim 3 or 4, wherein
the first parameter occupies at least one first subfield in the first field;
the second parameter occupies at least one second subfield in the first field; and
the third parameter occupies at least one third subfield in the first field.

6. The method according to claim 2, wherein the retransmission parameter is carried in a second field, wherein the second field is used to indicate whether the next PPDU is to be transmitted after the current frame is acknowledged and the SIFS elapses.

7. The method according to claim 6, wherein the second field is a High Reliable Link (HRL) Control field.

8. The method according to claim 6 or 7, wherein
the second parameter occupies at least one second subfield in the second field; and
the third parameter occupies at least one third subfield in the second field.

9. The method according to claim 5, wherein
in a case where the first subfield takes a first value, the next PPDU is transmitted based on the retransmission parameter;
in a case where the first subfield takes a second value, the next PPDU is transmitted based on a parameter other than the retransmission parameter.

10. The method according to claim 5, wherein
in a case where the first subfield takes a first value and a retransmission occurs, the next PPDU is a retransmission PPDU that is transmitted based on the second parameter and the third parameter; and/or
in a case where the first subfield takes the first value and a second station fails to successfully receive the next PPDU, a retransmission PPDU of the next PPDU is transmitted based on the second parameter and the third parameter;
wherein the retransmission PPDU of the next PPDU is a PPDU carrying the next frame that is retransmitted.

11. The method according to any one of claims 2 to 10, wherein transmitting the retransmission parameter comprises:
transmitting a current PPDU;
wherein the current PPDU comprises the current frame and the retransmission parameter, wherein the retransmission parameter is associated with the next PPDU, the next PPDU being a PPDU carrying the next frame.

12. The method according to claim 10, further comprising:
receiving an acknowledgement (Ack) frame or a block acknowledgement (BA) frame from the second station.

13. The method according to claim 12, wherein the Ack frame or the BA frame is transmitted by the second station in a case where the first subfield takes a second value.

14. The method according to claim 12, wherein
the Ack frame or the BA frame is transmitted by the second station in a case where the first subfield takes the first value and the second station successfully receives a PPDU; and/or
the Ack frame or the BA frame is transmitted by the second station in a case where the first subfield takes the first value and no retransmission has occurred.

15. The method according to claim 10, further comprising:
receiving at least one first frame broadcast by the second station;
wherein the first frame is used for instructing another station around the second station to set a network allocation vector (NAV), and the first frame is a frame transmitted within a first time period, wherein the first time period is determined based on the retransmission parameter, and the first time period is a time period outside a time period when the retransmission PPDU is interfered with.

16. The method according to claim 15, wherein
the first frame is broadcast by the second station in a case where the first subfield takes the first value and the second station fails to successfully receive the next PPDU; and/or
the first frame is broadcast by the second station in a case where the first subfield takes the first value and the second station has identified a retransmission.

17. The method according to claim 1, wherein the retransmission parameter comprises at least one of a second parameter, a third parameter, a fourth parameter, a fifth parameter, a sixth parameter, a seventh parameter, an eighth parameter, or a ninth parameter;
wherein the second parameter is used to indicate a maximum number of retransmissions;
the third parameter is used to indicate a modulation and coding scheme (MCS) used in a case of retransmission, and the third parameter comprises a number of consecutive retransmissions using a same MCS, and/or a decreased value of the MCS for each retransmission;
the fourth parameter is used to indicate whether a next physical layer protocol data unit (PPDU) is to be transmitted after a current frame is acknowledged and one short interframe space (SIFS) elapses, wherein the next PPDU is a PPDU carrying a next frame;
the fifth parameter is used to indicate a physical (PHY) version of a PPDU;
the sixth parameter is used to indicate a first time interval, wherein the first time interval is a time interval from a start time of one PPDU to reporting of a first primitive to a medium access control (MAC) layer, wherein the first primitive is a primitive indicating that a physical layer has received a valid PPDU;
the seventh parameter is used to indicate a duration of a PPDU;
the eighth parameter is used to indicate a length of a physical layer service data unit (PSDU); and
the ninth parameter is used to indicate an MCS used for transmitting a PPDU.

18. The method according to claim 17, wherein the fourth parameter is carried in a third field.

19. The method according to claim 18, wherein the third field is a High Reliable Link (HRL) Control field.

20. The method according to claim 18 or 19, wherein the fourth parameter occupies at least one fourth subfield in the third field.

21. The method according to claim 20, wherein
the third field is carried in a last frame within a transmission opportunity (TXOP), and the fourth subfield takes a third value;
the third field is carried in another frame other than the last frame within the TXOP, and the fourth subfield takes a fourth value.

22. The method according to any one of claims 18 to 21, wherein the retransmission parameters other than the fourth parameter are carried in a first request frame.

23. The method according to claim 22, wherein the retransmission parameters other than the fourth parameter each occupy at least one subfield in the first request frame.

24. The method according to any one of claims 18 to 21, wherein the retransmission parameters other than the fourth parameter are carried in a first response frame.

25. The method according to claim 24, wherein the retransmission parameters other than the fourth parameter each occupy at least one subfield in the first response frame.

26. The method according to claim 24, wherein the first response frame comprises a fifth subfield, wherein the fifth subfield is used to indicate a response result to a first request frame.

27. The method according to claim 26, wherein
in a case where the fifth subfield takes a fifth value, the response result indicates success;
in a case where the fifth subfield takes a sixth value, the response result indicates a rejection;
in a case where the fifth subfield takes a seventh value, the response result indicates a rejection with a suggested parameter provided;
wherein the suggested parameter comprises at least one of the second parameter, the third parameter, the fifth parameter, the sixth parameter, the seventh parameter, the eighth parameter, or the ninth parameter.

28. The method according to any one of claims 17 to 27, wherein transmitting retransmission parameter comprises:
transmitting the retransmission parameter after an initial frame within a transmission opportunity (TXOP);
wherein the retransmission parameter is a parameter used for transmitting a designated frame within the TXOP.

29. The method according to claim 27, wherein the fifth subfield takes the fifth value or the seventh value, and the method further comprises:
receiving an acknowledgement (Ack) frame or a block acknowledgement (BA) frame from a second station.

30. The method according to claim 29, wherein the Ack frame or the BA frame is transmitted by the second station in a case where a fourth subfield takes an eighth value;
wherein the fourth subfield is a subfield occupied by the fourth parameter in the third field.

31. The method according to claim 29, wherein
the Ack frame or the BA frame is transmitted by the second station in a case where a fourth subfield takes a ninth value and the second station successfully receives a PPDU; and/or
the Ack frame or the BA frame is transmitted by the second station in a case where the fourth subfield takes the ninth value and no retransmission has occurred;
wherein the fourth subfield is a subfield occupied by the fourth parameter in the third field.

32. The method according to claim 27, wherein the fifth subfield takes the fifth value or the seventh value, and the method further comprises:
receiving at least one first frame broadcast by a second station;
wherein the first frame is used for instructing another station around the second station to set a network allocation vector (NAV), and the first frame is a frame transmitted within a first time period, wherein the first time period is determined based on the retransmission parameter, and the first time period is a time period outside a time period when a retransmission PPDU is interfered with.

33. The method according to claim 32, wherein
the first frame is broadcast by the second station in a case where a fourth subfield takes a ninth value and the second station fails to successfully receive the next PPDU; and/or
the first frame is broadcast by the second station in a case where the fourth subfield takes the ninth value and the second station has identified a retransmission;
wherein the fourth subfield is a subfield occupied by the fourth parameter in the third field.

34. The method according to claim 15, 16, 32 or 33, wherein
in a case where a medium access control (MAC) layer of the second station does not receive a first primitive within a first delay interval corresponding to one PPDU, the first time period is a time period from an end time of the first delay interval to a start time of a next retransmission PPDU; and
in a case where the MAC layer of the second station receives the first primitive within the first delay interval corresponding to the PPDU, the first time period is a time period from an end time of the PPDU to the start time of the next retransmission PPDU;
wherein the first delay interval indicates a reception delay of a physical layer; the first delay interval is a time interval within a transmission time period corresponding to the PPDU; and the first primitive is a primitive indicating that the physical layer has received a valid PPDU.

35. The method according to claim 15, 16, 32, 33, or 34, wherein the first frame comprises a sixth subfield, wherein the sixth subfield is used to indicate a frame subtype.

36. The method according to claim 15, 16, 32, 33, or 34, wherein the first frame comprises a sixth subfield and a seventh subfield, wherein the sixth subfield is used to indicate a frame subtype, and the seventh subfield is used to indicate a subtype of a control frame extension.

37. The method according to claim 15, 16, 32, 33, or 34, wherein the first frame is a VAck frame or a clear to send (CTS) frame.

38. The method according to any one of claims 1 to 37, wherein the retransmission parameter is carried in a medium access control (MAC) frame of a MAC layer or in a physical layer protocol data unit (PPDU) of a physical (PHY) layer.

39. A retransmission method, performed by a second station, the method comprising:
receiving a retransmission parameter from a first station;
wherein the retransmission parameter is a parameter related to a retransmission by the first station.

40. The method according to claim 39, wherein the retransmission parameter comprises at least one of a first parameter, a second parameter, or a third parameter;
wherein the first parameter is used to indicate whether a next physical layer protocol data unit (PPDU) is to be transmitted after a current frame is acknowledged and one short interframe space (SIFS) elapses, wherein the next PPDU is the same as a current PPDU except for content of a physical layer service data unit (PSDU), wherein the current PPDU comprises the current frame and a retransmission parameter associated with the next PPDU, and the next PPDU is a PPDU carrying a next frame;
the second parameter is used to indicate a maximum number of retransmissions; and
the third parameter is used to indicate a modulation and coding scheme (MCS) used in a case of retransmission, and the third parameter comprises a number of consecutive retransmissions using a same MCS, and/or a decreased value of the MCS for each retransmission.

41. The method according to claim 40, wherein the retransmission parameter is carried in a first field.

42. The method according to claim 41, wherein the first field is a High Reliable Link (HRL) Control field.

43. The method according to claim 41 or 42, wherein
the first parameter occupies at least one first subfield in the first field;
the second parameter occupies at least one second subfield in the first field; and
the third parameter occupies at least one third subfield in the first field.

44. The method according to claim 40, wherein the retransmission parameter is carried in a second field, wherein the second field is used to indicate whether the next PPDU is to be transmitted after the current frame is acknowledged and the SIFS elapses.

45. The method according to claim 44, wherein the second field is a High Reliable Link (HRL) Control field.

46. The method according to claim 44 or 45, wherein
the second parameter occupies at least one second subfield in the second field; and
the third parameter occupies at least one third subfield in the second field.

47. The method according to claim 43, wherein
in a case where the first subfield takes a first value, the next PPDU is transmitted based on the retransmission parameter;
in a case where the first subfield takes a second value, the next PPDU is transmitted based on a parameter other than the retransmission parameter.

48. The method according to claim 43, wherein
in a case where the first subfield takes a first value and a retransmission occurs, the next PPDU is a retransmission PPDU that is transmitted based on the second parameter and the third parameter; and/or
in a case where the first subfield takes the first value and a second station fails to successfully receive the next PPDU, a retransmission PPDU of the next PPDU is transmitted based on the second parameter and the third parameter;
wherein the retransmission PPDU of the next PPDU is a PPDU carrying the next frame that is retransmitted.

49. The method according to any one of claims 40 to 48, wherein receiving the retransmission parameter from the first station comprises:
receiving a current PPDU from the first station;
wherein the current PPDU comprises a current frame and the retransmission parameter, wherein the retransmission parameter is associated with a next PPDU, the next PPDU being a PPDU carrying the next frame.

50. The method according to claim 48, further comprising:
transmitting an acknowledgement frame (Ack) or a block acknowledgement (BA) frame.

51. The method according to claim 50, wherein transmitting the Ack frame or the BA frame comprises:
transmitting the Ack frame or the BA frame in a case where the first subfield takes a second value.

52. The method according to claim 50, wherein transmitting the Ack frame or the BA frame comprises:
transmitting the Ack frame or the BA frame in a case where the first subfield takes the first value and a PPDU is successfully received; and/or
transmitting the Ack frame or the BA frame in a case where the first subfield takes the first value and no retransmission has occurred.

53. The method according to claim 48, further comprising:
broadcasting at least one first frame;
wherein the first frame is used for instructing another station around the second station to set a network allocation vector (NAV), and the first frame is a frame transmitted within a first time period, wherein the first time period is determined based on the retransmission parameter, and the first time period is a time period outside a time period when a retransmission PPDU is interfered with.

54. The method according to claim 53, wherein broadcasting the at least one first frame comprises:
broadcasting the at least one first frame in a case where the first subfield takes the first value and the next PPDU is not successfully received; and/or
broadcasting the at least one first frame in a case where the first subfield takes the first value and a retransmission has been identified.

55. The method according to claim 1, wherein the retransmission parameter comprises at least one of a second parameter, a third parameter, a fourth parameter, a fifth parameter, a sixth parameter, a seventh parameter, an eighth parameter, or a ninth parameter;
wherein the second parameter is used to indicate a maximum number of retransmissions;
the third parameter is used to indicate a modulation and coding scheme (MCS) used in a case of retransmission, and the third parameter comprises a number of consecutive retransmissions using a same MCS and/or a decreased value of the MCS for each retransmission;
the fourth parameter is used to indicate whether a next physical layer protocol data unit (PPDU) is to be transmitted after a current frame is acknowledged and one short interframe space (SIFS) elapses, wherein the next PPDU is a PPDU carrying a next frame;
the fifth parameter is used to indicate a physical (PHY) version of a PPDU;
the sixth parameter is used to indicate a first time interval, wherein the first time interval is a time interval from a start time of one PPDU to reporting of a first primitive to a medium access control (MAC) layer, wherein the first primitive is a primitive indicating that a physical layer has received a valid PPDU;
the seventh parameter is used to indicate a duration of a PPDU;
the eighth parameter is used to indicate a length of a physical layer service data unit (PSDU); and
the ninth parameter is used to indicate an MCS used for transmitting a PPDU.

56. The method according to claim 55, wherein the fourth parameter is carried in a third field.

57. The method according to claim 56, wherein the third field is a High Reliable Link (HRL) Control field.

58. The method according to claim 56 or 57, wherein the fourth parameter occupies at least one fourth subfield in the third field.

59. The method according to claim 58, wherein
the third field is carried in a last frame within a transmission opportunity (TXOP), and the fourth subfield takes a third value;
the third field is carried in another frame other than the last frame within the TXOP, and the fourth subfield takes a fourth value.

60. The method according to any one of claims 56 to 59, wherein the retransmission parameters other than the fourth parameter are carried in a first request frame.

61. The method according to claim 60, wherein the retransmission parameters other than the fourth parameter each occupy at least one subfield in the first request frame.

62. The method according to any one of claims 56 to 59, wherein the retransmission parameters other than the fourth parameter are carried in a first response frame.

63. The method according to claim 62, wherein the retransmission parameters other than the fourth parameter each occupy at least one subfield in the first response frame.

64. The method according to claim 62, wherein the first response frame comprises a fifth subfield, wherein the fifth subfield is used to indicate a response result to a first request frame.

65. The method according to claim 64, wherein,
in a case where the fifth subfield takes a fifth value, the response result indicates success;
in a case where the fifth subfield takes a sixth value, the response result indicates a rejection;
in a case where the fifth subfield takes a seventh value, the response result indicates a rejection with a suggested parameter provided;
wherein the suggested parameter comprises at least one of the second parameter, the third parameter, the fifth parameter, the sixth parameter, the seventh parameter, the eighth parameter, or the ninth parameter.

66. The method according to any one of claims 55 to 65, wherein receiving the retransmission parameter from the first station comprises:
receiving the retransmission parameter from the first station after an initial frame within a transmission opportunity (TXOP);
wherein the retransmission parameter is a parameter used for transmitting a designated frame within the TXOP.

67. The method according to claim 65, wherein the fifth subfield takes the fifth value or the seventh value, and the method further comprises:
transmitting an acknowledgement (Ack) frame or a block acknowledgement (BA) frame.

68. The method according to claim 67, wherein transmitting the Ack frame or the BA frame comprises:
transmitting the Ack frame or the BA frame in a case where a fourth subfield takes an eighth value;
wherein the fourth subfield is a subfield occupied by the fourth parameter in the third field.

69. The method according to claim 67, wherein transmitting the Ack frame or the BA frame comprises:
transmitting the Ack frame or the BA frame in a case where a fourth subfield takes a ninth value and a PPDU is successfully received; and/or
transmitting the Ack frame or the BA frame in a case where the fourth subfield takes the ninth value and no retransmission has occurred;
wherein the fourth subfield is a subfield occupied by the fourth parameter in the third field.

70. The method according to claim 65, wherein the fifth subfield takes the fifth value or the seventh value, and the method further comprises:
broadcasting at least one first frame;
wherein the first frame is used for instructing another station around the second station to set a network allocation vector (NAV), and the first frame is a frame transmitted within a first time period, wherein the first time period is determined based on the retransmission parameter, and the first time period is a time period outside a time period where the retransmission PPDU is interfered with.

71. The method according to claim 70, wherein broadcasting the at least one first frame comprises:
broadcasting the at least one first frame in a case where a fourth subfield takes a ninth value and the next PPDU is not successfully received; and/or
broadcasting the at least one first frame in a case where the fourth subfield takes a ninth value and a retransmission has been identified;
wherein the fourth subfield is a subfield occupied by the fourth parameter in the third field.

72. The method according to claim 53, 54, 70, or 71, wherein
in a case where a medium access control (MAC) layer of the second station does not receive a first primitive within a first delay interval corresponding to one PPDU, the first time period is a time period from an end time of the first delay interval to a start time of a next retransmission PPDU; and
in a case where the MAC layer of the second station receives the first primitive within the first delay interval corresponding to the PPDU, the first time period is a time period from an end time of the PPDU to the start time of the next retransmission PPDU;
wherein the first delay interval indicates a reception delay of a physical layer; the first delay interval is a time interval within a transmission time period corresponding to the PPDU; and the first primitive is a primitive indicating that the physical layer has received a valid PPDU.

73. The method according to claim 53, 54, 70, 71, or 72, wherein the first frame comprises a sixth subfield, wherein the sixth subfield is used to indicate a frame subtype.

74. The method according to claim 53, 54, 70, 71, or 72, wherein the first frame comprises a sixth subfield and a seventh subfield, wherein the sixth subfield is used to indicate a frame subtype, and the seventh subfield is used to indicate a subtype of a control frame extension.

75. The method according to claim 53, 54, 70, 71, or 72, wherein the first frame is a VAck frame or a clear to send (CTS) frame.

76. The method according to any one of claims 39 to 75, wherein the retransmission parameter is carried in a medium access control (MAC) frame of a MAC layer or in a physical layer protocol data unit (PPDU) of a physical (PHY) layer.

77. A first retransmission apparatus, comprising:
a transmitting module, configured to transmit a retransmission parameter;
wherein the retransmission parameter is a parameter related to a retransmission by the first retransmission apparatus.

78. A second retransmission apparatus, comprising:
a receiving module, configured to receive a retransmission parameter from a first retransmission apparatus;
wherein the retransmission parameter is a parameter related to a retransmission by the first retransmission apparatus.

79. A first station, comprising:
a processor;
a transceiver connected to the processor; and
a memory configured to store an instruction executable by the processor;
wherein the processor, when load and execute the instruction, performs the retransmission method as defined in any one of claims 1 to 38.

80. A second station, wherein comprising:
a processor;
a transceiver connected to the processor; and
a memory configured to store an instruction executable by the processor;
wherein the processor, when load and execute the instruction, performs the retransmission method as defined in any one of claims 39 to 76.

81. A computer-readable storage medium storing at least one program therein, wherein the at least one program is loaded and executed by a processor to perform the retransmission method as defined in any one of claims 1 to 38, or the retransmission method as defined in any one of claims 39 to 76.

82. A computer program product, comprising a computer instruction stored in a computer-readable storage medium, wherein the computer instruction, when loaded by the processor from the computer-readable storage medium and executed by the processor, causes the processor to perform the retransmission method as defined in any one of claims 1 to 38, or the retransmission method as defined in any one of claims 39 to 76.
